(19) Europäisches Patentamt
European Patent Office
Office européen des brevets

(11) **EP 4 668 924 A1**

(12) **EUROPEAN PATENT APPLICATION**
published in accordance with Art. 153(4) EPC

(43) Date of publication:
**24.12.2025   Bulletin 2025/52**

(21) Application number: **24756260.6**

(22) Date of filing: **07.02.2024**

(51) International Patent Classification (IPC):
**H04W 72/00** (2023.01)

(52) Cooperative Patent Classification (CPC):
**H04W 52/36; H04W 72/00; H04W 72/044;
H04W 72/0446; H04W 72/25**

(86) International application number:
**PCT/CN2024/076744**

(87) International publication number:
**WO 2024/169887 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.02.2023   CN 202310119918**

(71) Applicant: **Vivo Mobile Communication Co., Ltd.
Dongguan, Guangdong 523863 (CN)**

(72) Inventors:
• **LI, Ping
  Dongguan, Guangdong 523863 (CN)**
• **LIU, Siqi
  Dongguan, Guangdong 523863 (CN)**
• **JI, Zichao
  Dongguan, Guangdong 523863 (CN)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **SIDELINK TRANSMISSION METHOD AND APPARATUS, AND TERMINAL DEVICE**

(57)    The present application discloses a sidelink transmission method and apparatus, and a terminal device, and relates to the technical field of communications. The sidelink transmission method of the embodiment of the present application comprises: according to a first transmission power, a terminal device determining, from within a first set, a second transmission power of an N number of target physical sidelink feedback channels (PSFCH) and/or of a target PSFCH, where N is greater than or equal to 0; according to the second transmission power of the N target PSFCHs and/or of the target PSFCH, the terminal device performing sidelink transmission; wherein the first set comprises at least two PSFCHs predetermined by the terminal device to take part in sidelink transmission; the at least two PSFCHs being located on at least two first objects; the first objects being used for bearing the PSFCH resources of the terminal device; and the first transmission power comprising at least one of the following: the maximum transmission power of the terminal device; and the maximum transmission power of the terminal device on the first object.

FIG. 3

## Description

This application claims priority to Chinese Patent Application No. 202310119918.7, filed with the China National Intellectual Property Administration on February 13, 2023 and entitled "SIDELINK TRANSMISSION METHOD AND APPARATUS, AND TERMINAL DEVICE", which is incorporated herein by reference in its entirety.

## TECHNICAL FIELD

This application pertains to the field of communications technologies, and specifically, relates to a sidelink transmission method and apparatus, and a terminal device.

## BACKGROUND

Existing physical sidelink (Sidelink) feedback channel (Physical Sidelink Feedback Channel, PSFCH) power control is to perform power control for PSFCHs transmitted simultaneously in one resource pool to ensure that a total power of the PSFCHs transmitted simultaneously in the one resource pool does not exceed a maximum transmission power of user equipment (user equipment, UE). However, simultaneous transmission of PSFCHs in multiple resource pools may exceed the maximum transmission power of the UE.

## SUMMARY

Embodiments of this application provide a sidelink transmission method and apparatus and a terminal device, so as to resolve the problem of how to ensure that powers of PSFCHs transmitted simultaneously does not exceed a maximum transmission power limit.

According to a first aspect, a sidelink transmission method is provided, including:

determining, by a terminal device based on a first transmission power, N target physical sidelink feedback channels PSFCHs from a first set and/or a second transmission power of the target PSFCH, where N is greater than or equal to 0; and

performing, by the terminal device, sidelink transmission based on the N target PSFCHs and/or the second transmission power of the target PSFCH; where

the first set includes at least two PSFCHs that are predetermined by the terminal device to participate in sidelink transmission; the at least two PSFCHs are located on at least two first objects; and the first object is used to carry a PSFCH resource of the terminal device; and

the first transmission power includes at least one of the following:

a maximum transmission power of the terminal device; and
a maximum transmission power of the terminal device on the first object.

According to a second aspect, a sidelink transmission apparatus is provided and includes:

a first determining module, configured to determine, based on a first transmission power, N target physical sidelink feedback channels PSFCHs from a first set and/or a second transmission power of the target PSFCH, where N is greater than or equal to 0; and

a first transmission module, configured to perform sidelink transmission based on the N target PSFCHs and/or the second transmission power of the target PSFCH; where

the first set includes at least two PSFCHs that are predetermined by the terminal device to participate in sidelink transmission; the at least two PSFCHs are located on at least two first objects; and the first object is used to carry a PSFCH resource of the terminal device; and

the first transmission power includes at least one of the following:

a maximum transmission power of the terminal device; and
a maximum transmission power of the terminal device on the first object.

According to a third aspect, a terminal device is provided, where the terminal includes a processor and a memory, where a program or instructions capable of running on the processor are stored in the memory. When the program or the instructions are executed by the processor, the steps of the sidelink transmission method according to the first aspect are implemented.

According to a fourth aspect, a sidelink transmission system is provided, including a network-side device and a terminal device, where the terminal device can be configured to execute the steps of the sidelink transmission method according to the first aspect.

According to a fifth aspect, a readable storage medium is provided, where a program or instructions are stored in the readable storage medium; and when the program or the instructions are executed by a processor, the steps of the sidelink transmission method according to the first aspect are implemented.

According to a sixth aspect, a chip is provided. The chip includes a processor and a communications interface. The communications interface is coupled to the processor, and the processor is configured to run a program or instructions to implement the sidelink transmission method according to the first aspect.

According to a seventh aspect, a computer program/program product is provided, where the computer program/program product is stored in a storage medium, and the computer program/program product is executed by at least one processor to implement the steps of the sidelink transmission method according to the first aspect.

In the embodiments of this application, the terminal device can determine, based on the first transmission power, the N target physical sidelink feedback channels PSFCHs from the first set and/or the second transmission power of the target PSFCH, and perform sidelink transmission based on the N target PSFCHs and/or the second transmission power of the target PSFCH, thereby ensuring that the total power of PSFCHs transmitted simultaneously by the terminal device does not exceed the maximum transmission power of the UE.

## BRIEF DESCRIPTION OF DRAWINGS

FIG. 1 is a block diagram of a wireless communication system to which embodiments of this application are applicable;
FIG. 2 is a schematic diagram of sidelink transmission according to an embodiment of this application;
FIG. 3 is a flowchart of a sidelink transmission method according to an embodiment of this application;
FIG. 4 is a structural block diagram of a sidelink transmission apparatus according to an embodiment of this application;
FIG. 5 is a structural block diagram of a communication device according to an embodiment of this application; and
FIG. 6 is a structural block diagram of a terminal device according to an embodiment of this application.

## DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. Based on the embodiments in this application, all other embodiments obtained by people of ordinary skills in this field fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or multiple first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

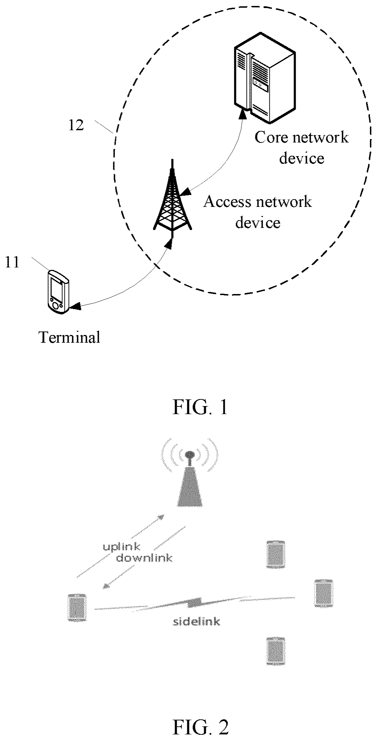

FIG. 1 illustrates a block diagram of a wireless communication system to which an embodiment of this application can be applied. The wireless communication system includes a terminal device 11 and a network-side device 12. The terminal device 11 may be a terminal-side device such as a mobile phone, a tablet computer (Tablet Personal Computer), a laptop computer (Laptop Computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal device 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

Referring to FIG. 2, FIG. 2 illustrates a schematic diagram of sidelink (sidelink, or translated as side link, sidelink, side-link, or the like) transmission. As shown in FIG. 2, sidelink transmission refers to data transmission between terminals (User Equipment, UE) directly performed on a physical layer. LTE sidelink communication is based on broadcast. Although LTE sidelink can be used to support basic safety communication of vehicle to everything (vehicle to everything, V2X), LTE sidelink is not applicable to other more advanced V2X services. A 5G NR (New Radio) system may support a more advanced sidelink transmission design, such as unicast and multicast or groupcast, so as to support more comprehensive service types.

NR-V2X supports PSFCH power control based on downlink path loss, but does not support power control based on sidelink path loss. A terminal can transmit multiple PSFCHs within one symbol, and a transmit power of the terminal is equally shared between the multiple PSFCHs. The number of PSFCHs allowed to be simultaneously transmitted by the terminal needs not exceed the maximum number $N_{\mathrm{max,PSFCH}}$ of PSFCH transmissions configured by the higher layers. Based on the number of PSSCHs requiring sidelink feedback and received in a plurality of PSSCH slots corresponding to a PSFCH slot, the terminal correspondingly determines the number $N_{\mathrm{sch,Tx,PSFCH}}$ of PSFCHs to be transmitted.

The specific method for determining the number $N_{\mathrm{Tx,PSFCH}}$ of PSFCH transmissions supportable simultaneously and a transmit power $P_{\mathrm{PSFCH,k}}(i)$ for each PSFCH is as follows:

One UE with $N_{\mathrm{sch,Tx,PSFCH}}$ scheduled PSFCH transmissions and capable of transmitting a maximum of $N_{\mathrm{max,PSFCH}}$ PSFCHs determines the number $N_{\mathrm{Tx,PSFCH}}$ of PSFCHs simultaneously transmitted on one resource pool at a PSFCH transmission occasion i and a power $P_{\mathrm{PSFCH,k}}(i)$ for PSFCH transmission k ($1 \le k \le N_{\mathrm{Tx,PSFCH}}$) in the following manner:

If p0-DL-PSFCH is provided, $P_{\mathrm{PSFCH,one}} = P_{O,PSFCH} + 10 \, log_{10}(2^{\mu}) + \alpha_{PSFCH} \cdot PL$ [dBm]. If the UE supports use of this parameter and this parameter is provided, $P_{O,PSFCH}$ is a value of dl-P0-PSFCH-r17, otherwise it is a value of dl-P0-PSFCH-r17. If this parameter is provided, $\alpha_{PSFCH}$ is the value of dl-Alpha-PSFCH; otherwise $\alpha_{PFSCH} = 1$. When an active SL BWP is in a serving cell c, $PL = PL_{b,f,c}(q_d)$.

When the UE is configured to monitor the physical downlink control channel (physical downlink control channel, PDCCH) to detect downlink control information (downlink control information, DCI) format 0_0 in serving cell c, a reference signal (reference signal, RS) resource is used by the UE to determine a power for transmission of a physical uplink shared channel (physical uplink shared channel, PUSCH) scheduled by DCI format 0_0 in serving cell c. When the UE is not configured to monitor the PDCCH to detect DCI format 0_0 in serving cell c, the RS resource is used by the UE to obtain a resource for a master information block (master information block, MIB) corresponding to a synchronization signal and the PBCH block (synchronization signal and PBCH block, SS/PBCH block).

If $N_{\text{sch,Tx,PSFCH}} \le N_{\text{max,PSFCH}}$, or if $P_{\text{PSFCH,one}} + 10log_{10}(N_{\text{sch,Tx,PSFCH}}) \le P_{\text{CMAX}}$, where $P_{\text{CMAX}}$ is a maximum transmit power of the UE determined for $N_{\text{sch,Tx,PSFCH}}$ PSFCHs according to [8-1, TS38.101-1], the number of target PSFCHs actually transmitted by the terminal device is $N_{\text{Tx,PSFCH}} = N_{\text{sch,Tx,PSFCH}}$, and a transmission power of the target PSFCH is $P_{\text{PSFCH,k}}(i) = P_{\text{PSFCH,one}}$ [dBm].

Otherwise, the UE autonomously determines $N_{\text{Tx,PSFCH}}$ PSFCH transmissions first in ascending order of priorities for PSFCH transmissions with hybrid automatic repeat request acknowledgment information (Hybrid Automatic Repeat reQuest-Ack, HARQ-ACK), and then in ascending order of priorities for PSFCH transmissions with conflict information (if any), to obtain $N_{\text{Tx,PSFCH}} \ge \max(1, \sum_{i=1}^{K} M_i)$, where $M_i$, which for $1 \le i \le 8$, is the number of PSFCHs with HARQ-ACK information and a transmission priority i, and for i>8, is the number of PSFCHs with conflict information and a transmission priority i-8. (For the protocol in R16, this paragraph is as follows: the UE autonomously determines $N_{\text{Tx,PSFCH}}$ PSFCH transmissions in ascending order of priorities, to obtain $N_{\text{Tx,PSFCH}} \ge \max(1, \sum_{i=1}^{K} M_i)$, where $M_i$ is the number of PSFCHs with a transmission priority i.) K is defined as follows:

a maximum value satisfying $P_{\text{PSFCH,one}} + 10log_{10}(\max(1, \sum_{i=1}^{K} M_i)) \le P_{\text{CMAX}}$, where $P_{\text{CMAX}}$ is the maximum transmit power of the UE determined for all PSFCH transmissions in $\sum_{i=1}^{K} M_i$ according to [8-1, TS38.101-1].

Alternatively, the number of target PSFCHs actually transmitted by the terminal device is 0, and the transmission power of the target PSFCH is $P_{\text{PSFCH,k}}(i) = min(P_{\text{CMAX}} - 10log_{10}(N_{\text{Tx,PSFCH}}), P_{\text{PSFCH,one}})$ [dBm], where $P_{\text{CMAX}}$ is the maximum transmit power of the UE determined for $N_{\text{Tx,PSFCH}}$ PSFCH transmissions according to [8-1, TS38.101-1].

Optionally, the UE autonomously determines $N_{\text{max,PSFCH}}$ PSFCH transmissions in ascending order of priorities.

If $P_{\text{PSFCH,one}} + 10log_{10}(N_{\text{max,PSFCH}}) \le P_{\text{CMAX}}$, where $P_{\text{CMAX}}$ is a maximum transmit power of the UE determined for $N_{\text{max,PSFCH}}$ PSFCHs according to [8-1, TS38.101-1], the number of target PSFCHs actually transmitted by the terminal device is $N_{\text{Tx,PSFCH}} = N_{\text{max,PSFCH}}$, and a transmission power of the target PSFCH is $P_{\text{PSFCH,k}}(i) = P_{\text{PSFCH,one}}$ [dBm]; otherwise, the UE autonomously determines $N_{\text{Tx,PSFCH}}$ PSFCH transmissions first in ascending order of priorities for PSFCH transmissions with HARQ-ACK information and then in ascending order of priorities for PSFCH transmissions with conflict information, to obtain $N_{\text{Tx,PSFCH}} \ge \max(1, \sum_{i=1}^{K} M_i)$, where $M_i$, which for $1 \le i \le 8$, is the number of PSFCHs with HARQ-ACK information and a transmission priority i, and for i>8, is the number of PSFCHs with conflict information and a transmission priority i-8.

Alternatively, the number of target PSFCHs actually transmitted by the terminal device is 0, and the transmission power of the target PSFCH is $P_{\text{PSFCH,k}}(i) = min(P_{\text{CMAX}} - 10log_{10}(N_{\text{Tx,PSFCH}}), P_{\text{PSFCH,one}})$ [dBm], where $P_{\text{CMAX}}$ is the maximum transmit power of the UE determined for $N_{\text{Tx,PSFCH}}$ PSFCH transmissions according to [8-1, TS38.101-1]. Alternatively, $P_{\text{PSFCH,k}}(i) = P_{\text{CMAX}} - 10log_{10}(N_{\text{Tx,PSFCH}})$ [dBm].

Optionally, the UE autonomously determines $N_{\text{Tx,PSFCH}}$ PSFCH transmissions first in ascending order of priorities for PSFCH transmissions with HARQ-ACK information and then in ascending order of priorities for PSFCH transmissions with conflict information, to obtain $N_{\text{Tx,PSFCH}} \ge 1$, where $P_{\text{CMAX}}$ is the maximum transmit power of the UE determined for $N_{\text{Tx,PSFCH}}$ PSFCH transmissions according to [8-1, TS38.101-1].

The existing sidelink PSFCH power control is to perform power control for PSFCHs transmitted simultaneously in one resource pool to ensure that a total power of the PSFCHs transmitted simultaneously in the one resource pool does not exceed a maximum transmission power of the UE. However, according to the latest RAN4 definition of the maximum transmission power of the UE, the maximum transmission power of the UE is determined based on a maximum transmission power of one or more simultaneously transmitted resource pools. Therefore, PSFCHs transmitted simultaneously across multiple resource pools may exceed the maximum transmission power of the UE. How to determine the transmission of PSFCHs such that the total power of PSFCHs transmitted simultaneously across multiple resource pools does not exceed the maximum transmission power of the UE, and that the power of PSFCHs transmitted simultaneously within each resource pool does not exceed the maximum transmission power limit of the corresponding resource pool, requires further consideration. The sidelink transmission method provided in the embodiments of this application can ensure that the total power of PSFCHs transmitted simultaneously does not exceed the maximum transmission power of the UE.

The following specifically describes the transmission method provided in the embodiments of this application through specific embodiments and application scenarios thereof with reference to the accompanying drawings.

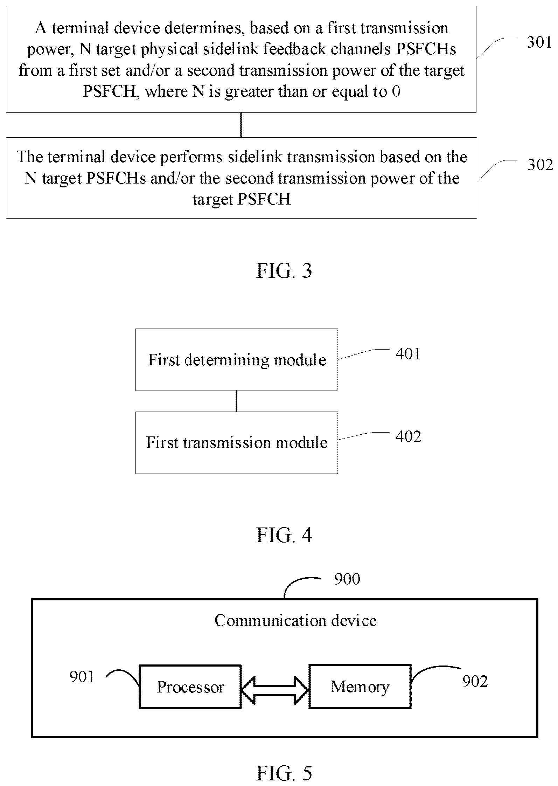

In a first aspect, an embodiment of this application provides a sidelink transmission method. Referring to FIG. 3, FIG. 3 illustrates a flowchart of a sidelink transmission method according to an embodiment of this application. The method is applied to a terminal device, and as shown in FIG. 3, the method may specifically include:

Step 301: The terminal device determines, based on a first transmission power, N target physical sidelink feedback channels PSFCHs from a first set and/or a second transmission power of the target PSFCH, where N is greater than or equal to 0.
Step 302: The terminal device performs sidelink transmission based on the N target PSFCHs and/or the second transmission power of the target PSFCH.

The first set includes at least two PSFCHs that are predetermined by the terminal device to participate in sidelink transmission; the at least two PSFCHs are located on at least two first objects; and the first object is used to carry a PSFCH resource of the terminal device.
In this embodiment of this application, the first transmission power includes at least one of the following:

a maximum transmission power of the terminal device; and
a maximum transmission power of the terminal device on the first object.

Optionally, at least two PSFCHs in the first set are located on at least two first objects, and the first object includes at least one of the following:

a resource pool;
a resource block set; and
a carrier.

In an optional embodiment of this application, before the determining, by a terminal device based on a first transmission power, N target physical sidelink feedback channels PSFCHs from a first set and/or a second transmission power of the target PSFCH, the method further includes:

step S11: the terminal device receives a physical sidelink shared channel PSSCH; and
step S12: the terminal device determines the first set based on at least two PSFCHs corresponding to the PSSCH; where time-domain resources of the at least two PSFCHs are the same or overlapping.

In a possible application scenario, the UE receives $N_{PSSCH}$ PSSCHs, and time-domain resources of $N_{sch,Tx,PSFCH}$ PSFCHs corresponding to $N_{PSSCH}$ PSSCHs are the same or overlapping. $N_{sch,Tx,PSFCH}$ PSFCHs constitute the first set in this application. The UE determines N target PSFCHs from $N_{sch,Tx,PSFCH}$ PSFCHs based on the maximum transmission power of the UE (for example, $P_{CMAX}$) and/or the maximum transmission power of the UE on the first object i (for example, $P_{CMAX,i}$ is the maximum transmission power of the first object i).
Optionally, the maximum transmission power of the terminal device includes at least one of the following:

a first power determined based on a first parameter; where the first parameter is used to indicate a transmission power threshold of the terminal device;
a power threshold specified in a protocol;
a power threshold configured by a network-side device and/or the terminal device; and
a power obtained by equally distributing the first power to the at least two first objects.

The first parameter includes at least one of the following:

a maximum transmit power $P_{EMAX,c}$ of the terminal device on the first object;
a maximum output power $P_{PowerClass,V2X}$ of the terminal device without considering an allowable deviation;
a maximum power reduction (maximum power reduction, $MPR_c$);
an additional maximum power reduction (additional maximum power reduction, $A\text{-}MPR_c$);
an additional allowable deviation ($A\text{-}MPR_c$);
a power management maximum power reduction (power management maximum power reduction, $P\text{-}MPR_c$); and
a maximum transmit power defined by a regulatory document ($P_{Regulatory,c}$).

In an optional embodiment of this application, the determining, by a terminal device based on a first transmission power, N target physical sidelink feedback channels PSFCHs from a first set and/or a second transmission power of the target PSFCH includes:

step S21: the terminal device determines one target first object from at least two first objects corresponding to the first set; and

step S22: the terminal device determines, based on the first transmission power, the target PSFCH from PSFCHs located on the target first object in the first set and/or the second transmission power of the target PSFCH.

In this embodiment of this application, the UE may select one target first object from at least two first objects in the first set, and determines a to-be-transmitted target PSFCH from PSFCHs of a target first object in the first set, and/or a second transmission power of the target PSFCH, so as to transform power control for simultaneously transmitted PSFCHs in multiple first objects to power control for transmitted PSFCHs in one target first object. This ensures that the power of simultaneously transmitted PSFCHs does not exceed the maximum transmission power limit and the control process for sidelink transmission is simplified, thereby reducing complexity of power control.

Optionally, the target first object includes at least one of the following:

a first object corresponding to a PSFCH with a highest priority in the first set;

a first object carrying the largest number of PSFCHs in the first set;

a first object with a largest identifier or index in the at least two first objects corresponding to the first set;

a first object with a smallest identifier or index in the at least two first objects corresponding to the first set;

a first object configured with a second parameter, where the second parameter is used to indicate information of path loss-based power control;

a first object not configured with the second parameter;

a first object configured with the second parameter, where the second parameter meets a preset condition;

a first object corresponding to a PSFCH with a smallest number of done/remaining/configured retransmissions in the first set;

a first object corresponding to a PSFCH with a largest number of done/remaining/configured retransmissions in the first set;

a first object corresponding to a PSFCH with a smallest remaining packet delay budget PDB (Packet Delay Budget) in the first set; and

a first object corresponding to a PSFCH with a largest remaining packet delay budget PDB (Packet Delay Budget) in the first set.

In this application, the target first object can be selected from at least two first objects corresponding to the first set based on at least one of the foregoing items. For example, a first object with the largest number of PSFCHs and the highest priority in the first set is determined as the target first object; or, according to ascending/descending order of the first object IDs/indices, a first object with the largest/smallest first object ID/index is selected as the target first object; or, a first object configured with/without a second parameter is preferentially selected as the target first object; or, a first object with a large/small second parameter is preferentially selected as the target first object, and so on.

The second parameter includes at least one of the following:

a basic operating point of transmit power for path loss-based power control; and a path loss compensation factor.

In this application, the path loss may include at least one of downlink path loss, sidelink path loss, and uplink path loss.

In an optional embodiment of this application, the determining, by the terminal device, one target first object from at least two first objects corresponding to the first set includes:

in a case that the at least two first objects corresponding to the first set are configured with different second parameters, determining, by the terminal device, one target first object from the at least two first objects corresponding to the first set.

In this application, if the at least two first objects corresponding to the first set are configured with different second parameters, the UE determines the target first object from multiple first objects corresponding to the first set, and determines the to-be-transmitted target PSFCH from PSFCHs located on the target first object in the first set, and/or the second transmission power of the target PSFCH.

It can be understood that the at least two first objects corresponding to the first set are configured with different second parameters, which can specifically include at least one of the following: in the at least two first objects corresponding to the first set, at least one first object is configured with the second parameter, and at least one first object is not configured with the second parameter; and at least two first objects corresponding to the first set are configured with second parameters with different contents/sizes.

In another embodiment of this application, that the terminal device determines, based on the first transmission power, the N target physical sidelink feedback channels PSFCHs from the first set and/or the second transmission power of the target PSFCH includes:

in a case that the at least two first objects corresponding to the first set are configured with a same second parameter, or in a case that the at least two first objects corresponding to the first set are not configured with the second parameter, determining, by the terminal device based on the first transmission power, N target PSFCHs from the first set and/or the second transmission power of the target PSFCH.

In this application, if the at least two first objects corresponding to the first set are configured with a same second parameter, or are not configured with the second parameter, the UE determines, based on the maximum transmission power of the terminal device, the to-be-transmitted target PSFCH from the first set and/or the second transmission power of the target PSFCH.

Specifically, the UE determines one object from multiple first objects, and determines N (or $N_{Tx,PSFCH}$) PSFCHs from the PSFCHs located on the first object in the first set and/or a transmission power of the PSFCH; and the UE performs PSFCH transmission based on the N (or $N_{Tx,PSFCH}$) PSFCHs and/or the second transmission power of the target PSFCH.

Alternatively, the UE determines one first object from a plurality of first objects, and determines M (or $N_{Tx,PSFCH,i}$) PSFCHs on the first object and/or a third transmission power of the target PSFCH from the PSFCHs located in the first object in the first set. The UE performs PSFCH transmission based on the N (or $N_{Tx,PSFCH,i}$) PSFCHs and/or the third transmission power of the target PSFCH.

In an optional embodiment of this application, the first transmission power includes the maximum transmission power of the terminal device; and the determining, by a terminal device based on a first transmission power, N target physical sidelink feedback channels PSFCHs from a first set and/or a second transmission power of the target PSFCH includes:

correspondingly determining, by the terminal device, PSFCHs in the first set based on the number of PSSCHs requiring feedback and received on a PSSCH resource corresponding to a PSFCH resource, and determining N target PSFCHs from the first set.

The number of PSSCHs requiring feedback and received in PSSCH resources corresponding to PSFCH resources, that is, the number of PSFCHs included in the first set of this application, is denoted as $N_{sch,Tx,PSFCH}$. The UE can determine $N_{Tx,PSFCH}$ PSFCHs and/or the second transmission power $P_{PSFCH}$ of the PSFCH from $N_{sch,Tx,PSFCH}$ PSFCHs based on the maximum transmission power $P_{CMAX}$ of the UE.

It should be noted that in this embodiment of this application, that the UE determines $N_{Tx,PSFCH}$ PSFCHs from $N_{sch,Tx,PSFCH}$ PSFCHs based on the maximum transmission power $P_{CMAX}$ of the UE may include at least one of the following: $N_{sch,Tx,PSFCH}$ PSFCHs; $N_{Tx,PSFCH}$ PSFCHs that are determined by the UE from $N_{sch,Tx,PSFCH}$ PSFCHs based on first information; a second-threshold number of PSFCHs; and a target PSFCH that is determined based on the first information by the terminal device from the second-threshold number of PSFCHs. The second threshold is used to indicate a maximum number of PSFCH transmissions supportable simultaneously by the terminal device.

In an optional embodiment of this application, the first transmission power includes the maximum transmission power of the terminal device; and the determining, by a terminal device based on a first transmission power, N target physical sidelink feedback channels PSFCHs from a first set and/or a second transmission power of the target PSFCH includes:

determining, by the terminal device, N target PSFCHs from the first set based on first information.

The first information is used to indicate a filtering condition for the target PSFCH.

Optionally, the first information includes at least one of the following:

priorities of PSFCHs in the first set;
priorities of first objects corresponding to the first set;
identifiers or indices of the first objects corresponding to the first set; and bearer information of the PSFCHs in the first set.

The bearer information includes HARQ-ACK information and/or conflict information.

In this embodiment of this application, the UE may select the target PSFCH according to descending or ascending order of priorities of PSFCHs; or, the UE may select the target PSFCH according to descending or ascending order of priorities of the first objects; or, the UE may select the PSFCH according to descending or ascending order of IDs/indices of the first objects; or HARQ-ACK information or conflict information may be preferentially selected; and so on.

Optionally, the terminal device determines N target PSFCHs from the first set based on the first information; a value of N is greater than or equal to a first threshold; the first threshold is a maximum natural number satisfying that a sum of the first-threshold number of second powers is less than or equal to the maximum transmission power of the terminal device; the second power is a power determined by the terminal device based on a second parameter; and the second parameter is used to indicate information of path loss-based power control.

Alternatively, a value of N is less than or equal to a second threshold; and the second threshold is used to indicate a maximum number of PSFCH transmissions supportable simultaneously by the terminal device.

In an optional embodiment of this application, the determining, by a terminal device based on a first transmission power, N target physical sidelink feedback channels PSFCHs from a first set and/or a second transmission power of the target PSFCH includes:

determining, by the terminal device, a second transmission power of the target PSFCH in the first set based on second information.

The second information includes at least one of the following:

a second power, where the second power is a power determined by the terminal device based on second parameters of at least two first objects corresponding to the first set; and the second parameter is used to indicate information of path loss-based power control;

a third power, where the third power is a power determined by the terminal device based on the first transmission power and a second threshold; and the second threshold is used to indicate a maximum number of PSFCH transmissions supportable simultaneously by the terminal device; and

a fourth power, where the fourth power is a power obtained by evenly dividing the maximum transmission power of the terminal device to the N target PSFCHs.

It should be noted that, in this application, the second power includes at least one of the following: a power obtained based on the path loss; for example, $P_{O,PSFCH} + 10 \log_{10}(2^\mu) + \alpha_{PSFCH} \cdot PL$, where $P_{O,PSFCH}$ is a basic operating point of transmit power for path loss-based power control; $\mu$ corresponds to a sidelink subcarrier spacing, and $\alpha_{SL,PSFCH}$ is a path loss compensation factor, $PL_{SL}$ is a user-estimated path loss; a power obtained by evenly dividing the maximum transmission power $P_{CMAX}$ of the terminal device to $N_{Tx,PSFCH}$ (that is, "N" in this application) PSFCHs; and a power obtained by evenly dividing the maximum transmission power $P_{CMAX,i}$ of the terminal device on the first object i to $N_{Tx,PSFCH,i}$ (that is, "M" in this application) PSFCHs of the first object.

As an example, the second information includes the second power and/or the fourth power; and the determining, by the terminal device, a second transmission power of the target PSFCH in the first set based on second information includes:

determining, by the terminal device, the second power and/or the fourth power as the second transmission power of the target PSFCH in the first set.

Optionally, the second information includes the second power; and at least two first objects corresponding to the first set are configured with a same second parameter.

It should be noted that if multiple first objects in which $N_{sch,Tx,PSFCH}$ PSFCHs in the first set are located are configured with a same second parameter, the UE can determine the second power based on the second parameter.

Optionally, the second information includes the second power; and before the determining, by the terminal device, the second power and/or the fourth power as the second transmission power of the target PSFCH in the first set, the method further includes:

step S31: in a case that the at least two first objects corresponding to the first set are configured with different second parameters, determining, by the terminal device, one target first object from the at least two first objects; and

step S32: the terminal device determines a second power based on a second parameter of the target first object.

If multiple first objects are configured with different second parameters, the UE can select one target first object from the multiple first objects, and determine the second power based on a second parameter of the target first object. For example, the UE determines a first object corresponding to a smallest second power in multiple second powers as the target first object based on the second parameters of the multiple first objects, and determines the second power based on the second parameter of the target first object.

As another example, the second information includes the second power and/or the third power; and the determining, by the terminal device, a second transmission power of the target PSFCH in the first set based on second information includes at least one of the following:

if the second power is greater than the third power, determining, by the terminal device, the third power as the second transmission power of the target PSFCH; and

if the second power is less than the third power, determining, by the terminal device, the second power as the second transmission power of the target PSFCH.

In this embodiment of this application, that the terminal device determines, based on the first transmission power, the N target physical sidelink feedback channels PSFCHs from the first set and/or the second transmission power of the target PSFCH includes:

in a case that a first condition is met, determining, by the terminal device, the N target PSFCHs from the first set and/or the second transmission power of the target PSFCH based on the maximum transmission power of the terminal device.

It can be understood that N in this embodiment of this application may be $N_{Tx,PSFCH}$, or a preset initial value or reference value $N1_{Tx,PSFCH}$; and the second transmission power of the target PSFCH may be $P_{PSFCH}$, or a preset initial power or reference power $P1_{PSFCH}$.

The first condition includes at least one of the following:

the number of PSFCHs included in the first set is less than or equal to a second threshold; where the second threshold is used to indicate a maximum number of PSFCH transmissions supportable simultaneously by the terminal device; and

the number of PSFCHs included in the first set is greater than the second threshold.

For example, the second threshold is denoted as $N_{max,PSFCH}$. In a case of $N_{sch,Tx,PSFCH} \leq N_{max,PSFCH}$, $N_{Tx,PSFCH} = N_{sch,Tx,PSFCH}$, and/or $P_{PSFCH} = P_{CMAX} - 10\log_{10}(N_{Tx,PSFCH})$, to be specific, if the number of PSFCHs scheduled to be transmitted by the terminal device, that is, the number of PSFCHs included in the first set in this application, does not exceed the maximum number of PSFCHs that the UE can transmit (that is, the "second threshold" in this application), then the actual PSFCHs that the terminal device can transmit (that is, the N target PSFCHs) are the PSFCHs scheduled to be transmitted; and/or the second transmission power of the target PSFCHs is power obtained by equally dividing the maximum transmission power P_CMAX of the terminal device to the PSFCHs scheduled to be transmitted.

Alternatively, in a case of $N_{sch,Tx,PSFCH} > N_{max,PSFCH}$, the UE determines $N_{TX,PSFCH}$ PSFCHs from $N_{sch,Tx,PSFCH}$ PSFCHs based on first information, and/or, $P_{PSFCH} = P_{CMAX} - 10log_{10}(N_{Tx,PSFCH})$. In this embodiment of this application, if the number of PSFCHs scheduled for transmission exceeds the maximum number of PSFCHs that can be sent by the UE, that is, the number of PSFCHs in the first set is greater than a second threshold, the UE determines the number of PSFCHs that can actually be sent (N target PSFCHs) based on priorities, and divides the maximum transmission power $P_{CMAX}$ of the terminal device equally among the N target PSFCHs determined by the UE to obtain a power as the second transmission power of the target PSFCH.

Optionally, the second threshold includes at least one of the following:

a maximum number of PSFCH transmissions supportable by the terminal device on a frequency band in which the first object is located;

a sum of the maximum numbers of PSFCH transmissions supportable by the terminal device on at least two frequency bands in which the first object is located;

a maximum value or minimum value of the maximum numbers of PSFCH transmissions supportable by the terminal device respectively on at least two frequency bands in which the first object is located;

a maximum number of PSFCH transmissions supportable by the terminal device as specified by a protocol; and

a maximum number of PSFCH transmissions supportable by the terminal device as configured by a network-side device or the terminal device.

In an optional embodiment of this application, the method further includes:
updating, by the terminal device, a third parameter based on a maximum transmission power of first objects corresponding to a second set.

The second set includes target PSFCHs of the terminal device; and the third parameter includes at least one of the following:

the target PSFCHs in the second set;

the second transmission power of the target PSFCH in the terminal device;

M target PSFCHs in the first object; and

a third transmission power of the target PSFCH in the first object.

In this embodiment of this application, after the UE determines N target PSFCHs and/or the second transmission power of the target PSFCH, or after the UE determines $N1_{Tx,PSFCH}$ PSFCHs and/or $P1_{PSFCH}$, the method further includes: the UE determines/updates at least one of N PSFCHs, the second transmission power $P_{PSFCH}$, M target PSFCHs of the first objects, and third transmission powers $P_{PSFCH,i1}$ of target PSFCHs of the first objects based on a maximum transmission power of N PSFCHs or first objects in which $N1_{Tx,PSFCH}$ PSFCHs are located, so that the powers of the PSFCHs transmitted simultaneously on multiple first objects in this application can simultaneously meet the maximum transmission power of the terminal device and the maximum transmission power of the terminal device on the first object.

Optionally, the third parameter includes the M target PSFCHs in the first object and/or a third transmission power of the target PSFCH in the first object; and the performing, by the terminal device, sidelink transmission based on the N target PSFCHs and/or the second transmission power of the target PSFCH includes:
performing, by the terminal device, sidelink transmission based on M target PSFCHs in each first object and/or the third transmission power of the target PSFCH in the first object.

In this application, the UE determines M PSFCHs in the first objects and/or third transmission powers $P_{PSFCH,i1}$ of target PSFCHs in the first objects based on the maximum transmission power of the first objects in which the N target PSFCHs in the terminal device are located, and the UE sends the PSFCHs based on the M PSFCHs in the first objects and/or the third transmission powers $P_{PSFCH,i1}$ of the target PSFCHs in the first objects.

In an optional embodiment of this application, the updating, by the terminal device, a third parameter based on a maximum transmission power of first objects corresponding to a second set includes:

> step S41: the terminal device determines M target PSFCHs in each first object and/or a third transmission power of the target PSFCH in the first object based on a maximum transmission power of each first object corresponding to the second set; and
>
> step S42: the terminal device updates target PSFCHs in the second set and/or the second transmission power of the target PSFCH in the terminal device based on the M target PSFCHs in each first object and/or the third transmission power of the target PSFCH in the first object.

The performing, by the terminal device, sidelink transmission based on the N target PSFCHs and/or the second transmission power of the target PSFCH includes:

step S43: the terminal device performs sidelink transmission based on an updated second set and/or the second transmission power.

Optionally, the updated second set includes M target PSFCHs in each first object corresponding to the second set.

In this application, the updated second set may include M PSFCHs in first objects corresponding to the second set (that is, each first object in which $N_{Tx,PSFCH}$ PSFCHs or $N1_{Tx,PSFCH}$ PSFCHs are located).

Optionally, the updated second transmission power is a minimum value of the third transmission powers of the target PSFCHs in the first objects corresponding to the second set, or the updated second transmission power is equal to the third transmission power.

In a possible application scenario of this application, after determining the M PSFCHs in the first objects and/or the third transmission powers $P_{PSFCH,i1}$ of the target PSFCHs in the first objects based on the maximum transmission power of the first objects in which the N target PSFCHs in the terminal device are located, the UE may update the target PSFCHs, that is, the second set, in the terminal device to a sum of the M PSFCHs in the first objects corresponding to the second set (that is, first objects in which $N_{Tx,PSFCH}$ PSFCHs or $N1_{Tx,PSFCH}$ PSFCHs are located). The terminal device may update the second transmission power $P_{PSFCH}$ of the target PSFCH to a minimum value of the third transmission powers $P_{PSFCH,i1}$ of the target PSFCHs in the first objects in which $N_{Tx,PSFCH}$ PSFCHs or $N1_{Tx,PSFCH}$ PSFCHs are located, so that the target PSFCHs in the terminal device all use a same third transmission power, thereby achieving unified control on the target PSFCHs.

Alternatively, the terminal device may directly update the second transmission power $P_{PSFCH}$ of the target PSFCH to the third transmission powers $P_{PSFCH,i1}$ of the target PSFCHs in the first objects in which $N_{Tx,PSFCH}$ PSFCHs or $N1_{Tx,PSFCH}$ PSFCHs are located, so that the target PSFCHs in the first objects use a same third transmission power, thereby achieving separate control of the first objects in the terminal device.

The UE sends the PSFCH based on the updated second set (that is, $N_{Tx,PSFCH}$ PSFCHs) and/or the second transmission power $P_{PSFCH}$ of the target PSFCH.

Optionally, the M target PSFCHs include at least one of the following:

> a target PSFCH located in the first object in the second set; and
> a PSFCH determined by the terminal device from target PSFCHs located on the first object in the second set based on first information.

As an example, the M target PSFCHs include a PSFCH that is determined by the terminal device from the target PSFCH located in the first object in the second set based on the first information; and a value of M is greater than or equal to a third threshold, and the third threshold is a maximum natural number satisfying that a sum of the third-threshold number of fifth powers is less than or equal to the maximum transmission power of the terminal device on the first object.

Specifically, the UE determines M PSFCHs from the PSFCHs located on the first object i1 in the second set based on the first information, so that M is greater than or equal to a third threshold $N_{min,PSFCH,i1}$, where the third threshold $N_{min,PSFCH,i1}$ is a maximum $N_{i1}$ value, satisfying that $N_{i1}$ fifth powers do not exceed the maximum transmission power $P_{CMAX,i1}$ of the terminal device on the first object i1.

The fifth power includes at least one of the following:

> a second power, where the second power is a power determined by the terminal device based on a second parameter, and the second parameter is used to indicate information of path loss-based power control;
> the second transmission power of the target PSFCH in the terminal device $P_{PSFCH}$; and

a sixth power $P2_{PSFCH,i1}$.

It can be understood that the sixth power $P2_{PSFCH,i1}$ satisfies at least one of the following:

if the second transmission power $P_{PSFCH}$ is greater than the second power of the first object, the sixth power $P2_{PSFCH,i1}$ is equal to the second power; or
if the second transmission power $P_{PSFCH}$ is less than the second power of the first object, the sixth power $P2_{PSFCH,i1}$ is equal to the second transmission power $P_{PSFCH}$.

It should be noted that, in this application, the second transmission power $P_{PSFCH}$ of the target PSFCH in the terminal device may be a preset initial power (or reference power) $P1_{PSFCH}$.
Optionally, the M target PSFCHs include a PSFCH that is determined by the terminal device from the target PSFCH located in the first object in the second set based on the first information; and a value of M is greater than or equal to 1.
In another possible application scenario of this application, the UE may determine M (that is, $N_{Tx,PSFCH,i1}$) PSFCHs from the target PSFCHs located on the first object i1 in the second set ($N_{Tx,PSFCH}$ PSFCHs or $N1_{Tx,PSFCH}$ PSFCHs) based on the first information, so that M is greater than or equal to 1.
In an optional embodiment of this application, the updating, by the terminal device, a third parameter based on a maximum transmission power of first objects corresponding to a second set includes:
determining, by the terminal device, the third transmission power of the target PSFCH in the first object based on third information.
The third information includes at least one of the following:

the second transmission power of the target PSFCH in the terminal device;
a second power of the first object, where the second power is determined by the terminal device based on a second parameter of the first object, and the second parameter is used to indicate information of path loss-based power control;
a sixth power; and
a seventh power, where the seventh power is a power obtained by evenly dividing the maximum transmission power of the terminal device on the first object to the M target PSFCHs of the first object.

It can be understood that the sixth power includes at least one of the following:

if the second transmission power is greater than a second power of the first object, the sixth power is equal to the second power; or
if the second transmission power is less than the second power of the first object, the sixth power is equal to the second transmission power.

As an example, the third information includes at least one of the second transmission power of the target PSFCH in the terminal device, the second power of the first object, and the seventh power; and the determining, by the terminal device, the third transmission power of the target PSFCH in the first object based on third information includes:
determining, by the terminal device, a power value corresponding to the third information as the third transmission power of the target PSFCH in the first object.
In an embodiment of this application, the third transmission power of the target PSFCH in the first object may be the second transmission power of the target PSFCH in the terminal device; or, the third transmission power of the target PSFCH in the first object is the second power of the first object; or, the third transmission power of the target PSFCH in the first object is the seventh power, that is, a power obtained by evenly dividing the maximum transmission power of the terminal device on the first object to the M target PSFCHs of the first object.
As another example, the third information includes the second transmission power and/or the second power of the first object; and the determining, by the terminal device, the third transmission power of the target PSFCH in the first object based on third information includes at least one of the following:

if the second transmission power is greater than the second power of the first object, determining, by the terminal device, the second power of the first object as the third transmission power of the target PSFCH in the first object; or
if the second transmission power is less than the second power of the first object, determining, by the terminal device, the second transmission power as the third transmission power of the target PSFCH in the first object.

In this embodiment of this application, the terminal device may determine a smaller value of the second transmission power of the target PSFCH in the terminal device and the second power of the first object as the third transmission power of the target PSFCH in the first object.

Optionally, the third information includes the sixth power and/or the seventh power; and the determining, by the terminal device, the third transmission power of the target PSFCH in the first object based on third information includes:

if the sixth power is greater than the seventh power, determining, by the terminal device, the seventh power as the third transmission power of the target PSFCH in the first object; or
if the sixth power is less than the seventh power, determining, by the terminal device, the sixth power as the third transmission power of the target PSFCH in the first object.

In this embodiment of this application, the terminal device may determine a smaller value of the sixth power and the seventh power as the third transmission power of the target PSFCH in the first object.

Optionally, the third information includes the seventh power; and the determining, by the terminal device, the third transmission power of the target PSFCH in the first object based on third information includes at least one of the following: if the seventh power is less than a current value of the third transmission power, updating, by the terminal device, the third transmission power based on the seventh power.

In a case that the seventh power is less than a current value of the third transmission power, the terminal device may adjust the third transmission power of the target PSFCH in the first object to the seventh power.

Optionally, the third information includes the second power of the first object and/or the seventh power; and the determining, by the terminal device, the third transmission power of the target PSFCH in the first object based on third information includes:

if the seventh power is greater than the second power of the first object, determining, by the terminal device, the second power of the first object as the third transmission power of the target PSFCH in the first object; or
if the seventh power is less than the second power of the first object, determining, by the terminal device, the seventh power as the third transmission power of the target PSFCH in the first object.

In this embodiment of this application, the terminal device may further determine a smaller value of the second power of the first object and the seventh power as the third transmission power of the target PSFCH in the first object.

In an optional embodiment of this application, the updating, by the terminal device, a third parameter based on a maximum transmission power of first objects corresponding to a second set includes:
in a case that the second condition is met, updating, by the terminal device, the M target PSFCHs in the first object and/or the third transmission power of the target PSFCH in the first object based on the maximum transmission power of each first object corresponding to the second set.

The second condition includes at least one of the following:

a sum of second transmission powers of target PSFCHs located on the first object in the second set is less than or equal to the maximum transmission power of the terminal device on the first object;
the sum of the second transmission powers of the target PSFCHs located on the first object in the second set is greater than the maximum transmission power of the terminal device on the first object;
a sum of sixth powers of the target PSFCHs located on the first object in the second set is less than or equal to the maximum transmission power of the terminal device on the first object;
the sum of the sixth powers of the target PSFCHs located on the first object in the second set is greater than the maximum transmission power of the terminal device on the first object;
a sum of second powers of the target PSFCHs located on the first object in the second set is less than or equal to the maximum transmission power of the terminal device on the first object;
the sum of the second powers of the target PSFCHs located on the first object in the second set is greater than the maximum transmission power of the terminal device on the first object;
path loss-based power control for PSFCHs is configured for the first object;
path loss-based power control for PSFCHs is not configured for the first object; and
path loss-based control for PSFCHs is not configured for the first object; and the sum of the second transmission powers of the target PSFCHs located on the first object in the second set is greater than the maximum transmission power of the terminal device on the first object.

In this embodiment of this application, powers of PSFCHs transmitted simultaneously on multiple first objects can simultaneously meet the maximum transmission power of the terminal device and the maximum transmission power of the terminal device on the first object.

As an example, in a case that a sum of the second transmission powers ($P_{PSFCH}$ or $P1_{PSFCH}$) of the target PSFCHs located on the first object i1 in the second set does not exceed the maximum transmission power $P_{CMAX,i1}$ of the terminal device on the first object i1, the M PSFCHs in the first object i1 are the target PSFCHs located on the first object i1 in the second set, and/or the third transmission power $P_{PSFCH,i1} = P_{PSFCH}$ of the target PSFCH in the first object i1, or the third transmission power $P_{PSFCH,i1}$ of the target PSFCH in the first object i1 is a smaller value of the second transmission power $P_{PSFCH}$ and a second power of the first object i1.

As another example, in a case that the sum of the second transmission powers of the target PSFCHs located on the first object i1 in the second set exceeds the maximum transmission power $P_{CMAX,i1}$ of the terminal device on the first object i1, the UE may determine M target PSFCHs from the target PSFCHs located on the first object i1 in the second set based on the first information, and/or the third transmission power $P_{PSFCH,i1}$ of the target PSFCH in the first object i1 is a smaller value of the seventh power and the third transmission power $P_{PSFCH,i1}$.

As another example, in a case that the sum of the second transmission powers of the target PSFCHs located on the first object i1 in the second set exceeds the maximum transmission power $P_{CMAX,i1}$ of the terminal device on the first object i1, the UE may determine M target PSFCHs from the target PSFCHs located on the first object i1 in the second set based on the first information, until the third transmission powers of the target PSFCHs do not exceed the maximum transmission power $P_{CMAX,i1}$ of the terminal device on the first object i1. The third transmission power $P_{PSFCH,i1}$ of the target PSFCH in the first object i1 may be a smaller value of the second transmission power $P_{PSFCH}$ and the second power of the first object i1.

As another example, if a sum of sixth powers ($P2_{PSFCH,i1}$) of the target PSFCHs located on the first object i1 in the second set does not exceed the maximum transmission power $P_{CMAX,i1}$ of the terminal device on the first object i1, the M target PSFCHs in the first object i1 may be the target PSFCHs located on the first object i1 in the second set, and/or, the third transmission power $P_{PSFCH,i1}$ of the target PSFCH in the first object i1 may be the sixth power $P2_{PSFCH,i1}$

As another example, if the sum of the sixth powers ($P2_{PSFCH,i1}$) of the target PSFCHs located on the first object i1 in the second set exceeds the maximum transmission power $P_{CMAX,i1}$ of the terminal device on the first object i1, the UE may determine M target PSFCHs from the target PSFCHs located on the first object i1 in the second set based on the first information, and/or the third transmission power $P_{PSFCH,i1}$ of the target PSFCH in the first object i1 may be a smaller value of the seventh power and the sixth power $P2_{PSFCH,i1}$.

As another example, if the sum of the sixth powers ($P2_{PSFCH,i1}$) of the target PSFCHs located on the first object i1 in the second set exceeds the maximum transmission power $P_{CMAX,i1}$ of the terminal device on the first object i1, the UE may determine M target PSFCHs from the target PSFCHs located on the first object i1 in the second set based on the first information, until the third transmission powers of these target PSFCHs do not exceed the maximum transmission power $P_{CMAX,i1}$ of the terminal device on the first object i1. The third transmission power $P_{PSFCH,i1}$ of the target PSFCH in the first object i1 may be the second transmission power $P_{PSFCH}$, or a smaller value of the second transmission power $P_{PSFCH}$ and the second power of the first object i1, or the sixth power $P2_{PSFCH,i1}$.

As another example, if a sum of second powers of the target PSFCHs located on the first object i1 in the second set does not exceed the maximum transmission power $P_{CMAX,i1}$ of the terminal device on the first object i1, the M PSFCHs in the first object i1 may be the target PSFCHs located on the first object i1 in the second set, and/or the third transmission power $P_{PSFCH,i1}$ of the target PSFCH in the first object i1 is the second power of the first object i1, or the third transmission power $P_{PSFCH,i1}$ is a smaller value between the second transmission power $P_{PSFCH}$ and the second power of the first object i1.

As another example, if the sum of the second powers of the target PSFCHs located on the first object i1 in the second set exceeds the maximum transmission power $P_{CMAX,i1}$ of the terminal device on the first object i1, the UE may determine M target PSFCHs from the target PSFCHs located on the first object i1 in the second set based on the first information, until the third transmission powers of these target PSFCHs do not exceed the maximum transmission power $P_{CMAX,i1}$ of the terminal device on the first object i1. The third transmission power $P_{PSFCH,i1}$ of the target PSFCH in the first object i1 may be a smaller value of the second transmission power $P_{PSFCH}$ and the second power of the first object i1. The third transmission power $P_{PSFCH,i1}$ of the target PSFCH in the first object i1 may be the second power of the first object i1 or the second transmission power $P_{PSFCH}$, or the third transmission power $P_{PSFCH,i1}$ is a smaller value of the second transmission power $P_{PSFCH}$ and the second power of the first object i1.

In an optional embodiment of this application, when the first set is located in multiple first objects, the terminal device determines, based on the first transmission power, N target physical sidelink feedback channels PSFCHs from the first set and/or a second transmission power of the target PSFCH; when the first set is located in one first object, the terminal determines the N target physical sidelink feedback channels PSFCHs from the one first object and/or the second transmission power of the target PSFCH.

In an optional embodiment of this application, the determining, by a terminal device based on a first transmission power, N target physical sidelink feedback channels PSFCHs from a first set and/or a second transmission power of the target PSFCH includes:

determining, by the terminal device, a fourth parameter based on the maximum transmission power of the terminal device.

The fourth parameter includes at least one of the following:

N target PSFCHs in the terminal device;

the second transmission power of the target PSFCH in the terminal device;

M target PSFCHs in first objects corresponding to the first set; and

a third transmission power of the target PSFCH in the first object.

M may be the number $N_{Tx,PSFCH,i}$ of target PSFCHs actually transmitted in the first object i during a current transmission process, or a preset initial value or reference value $N1_{Tx,PSFCH,i}$; similarly, the third transmission power $P_{PSFCH,i}$ may alternatively be an initial power or a reference power $P1_{PSFCH,i}$.

Optionally, the fourth parameter includes the M target PSFCHs in first objects corresponding to the first set and/or the third transmission power of the target PSFCH, and the method further includes:

determining, by the terminal device, N target PSFCHs in the terminal device and/or the second transmission power of the target PSFCH in the terminal device based on the M target PSFCHs in first objects corresponding to the first set and/or the third transmission power of the target PSFCH.

The N target PSFCHs include the M target PSFCHs in the first objects corresponding to the first set.

The second transmission power of the target PSFCH in the terminal device includes at least one of the following:

a minimum value of third transmission powers of target PSFCHs in first objects corresponding to the first set; and

the third transmission powers of the target PSFCHs in the first objects corresponding to the first set.

Optionally, in a case that the number N of target PSFCHs is less than or equal to a second threshold, keeping, by the terminal device, the N target PSFCHs unchanged; where the second threshold is used to indicate a maximum number of PSFCH transmissions supportable simultaneously by the terminal device.

Optionally, the method further includes: in a case that the number N of target PSFCHs is greater than a second threshold, re-determining, by the terminal device, X target PSFCHs from the N target PSFCHs based on first information; where X is a positive integer less than N, and the first information is used to indicate a filtering condition for the target PSFCH.

In an embodiment of this application, the N target PSFCHs in the terminal device include at least one of the following:

all PSFCHs in the first set;

a target PSFCH determined by the terminal device from the first set based on first information, where the first information is used to indicate a filtering condition for the target PSFCH;

a second-threshold number of PSFCHs, where the second threshold is used to indicate a maximum number of PSFCH transmissions supportable simultaneously by the terminal device; and

a target PSFCH that is determined by the terminal device from the second-threshold number of PSFCHs based on the first information.

Optionally, the N target PSFCHs include a target PSFCH that is determined based on the first information by the terminal device from the first set or the second-threshold number of PSFCHs; a value of N is greater than or equal to a fourth threshold, and the fourth threshold is a maximum natural number satisfying that a sum of Y second powers in each first object in which the first set or the second-threshold number of PSFCHs is located is less than or equal to the maximum transmission power of the terminal device. A second power of the first object is a power that is determined by the terminal device based on a second parameter of the first object; the second parameter is used to indicate information of path loss-based power control; and Y is the number of target PSFCHs located on the first object among the fourth-threshold number of target PSFCHs.

As another example, the N target PSFCHs include the target PSFCHs that is determined based on the first information by the terminal device from the first set; and a value of N is greater than or equal to 1.

In an optional embodiment of this application, the M target PSFCHs in the first objects corresponding to the first set include at least one of the following:

a PSFCH located in the first object in the first set;

a target PSFCH located in the first object in a third set, where the third set includes N target PSFCHs that are determined based on the first information by the terminal device from the first set;

a PSFCH located in the first object in a fourth set, where the fourth set includes a second-threshold number of PSFCHs, and the second threshold is used to indicate a maximum number of PSFCH transmissions supportable simultaneously by the terminal device;

a target PSFCH located in the first object among N target PSFCHs that are determined based on the first information by the terminal device from the fourth set;

M PSFCHs that are determined based on the first information by the terminal device from PSFCHs located on the first object in the first set;

a PSFCH in the fourth set;

M PSFCHs that are determined based on the first information by the terminal device from the fourth set;

a PSFCH in the fifth set, where the fifth set includes PSFCHs obtained by the terminal device by evenly dividing PSFCHs in the fourth set to first objects corresponding to the first set; and

M PSFCHs that are determined based on the first information by the terminal device from the fifth set.

In an optional embodiment of this application, the determining, by the terminal device, a fourth parameter based on the maximum transmission power of the terminal device includes:
determining, by the terminal device, the third transmission power of the target PSFCH in the first object based on fourth information.

The fourth information includes at least one of the following:

a second power of the first object, where the second power is determined by the terminal device based on a second parameter of the first object, and the second parameter is used to indicate information of path loss-based power control;

a fourth power, where the fourth power is a power that is obtained by evenly dividing the maximum transmission power of the terminal device to the N target PSFCHs in the terminal device; and

an eighth power, where the eighth power is a power obtained by evenly dividing the maximum transmission power of the terminal device to M target PSFCHs in the first object.

As an example, the determining, by the terminal device, the third transmission power of the target PSFCH in the first object based on fourth information includes:
determining, by the terminal device, a power value corresponding to the fourth information as the third transmission power of the target PSFCH in the first object.

As another example, the fourth information includes the second power of the first object and/or the fourth power; and the determining, by the terminal device, the third transmission power of the target PSFCH in the first object based on fourth information includes at least one of the following:

if the second power of the first object is greater than the fourth power, determining, by the terminal device, the fourth power as the third transmission power of the target PSFCH in the first object; or

if the second power of the first object is less than the fourth power, determining, by the terminal device, the second power of the first object as the third transmission power of the target PSFCH in the first object.

Optionally, the fourth information includes the second power of the first object and/or the eighth power; and the determining, by the terminal device, the third transmission power of the target PSFCH in the first object based on fourth information includes at least one of the following:

if the second power of the first object is greater than the eighth power, determining, by the terminal device, the eighth power as the third transmission power of the target PSFCH in the first object; or

if the second power of the first object is less than the eighth power, determining, by the terminal device, the second power of the first object as the third transmission power of the target PSFCH in the first object.

In a possible application scenario of this application, the determining, by the terminal device, a fourth parameter based on the maximum transmission power of the terminal device includes: in a case that a third condition is met, determining, by the terminal device, M target PSFCHs in the first objects corresponding to the first set and/or the third transmission power of the target PSFCH in the first object based on the maximum transmission power of the terminal device.

The third condition includes at least one of the following:

the number of PSFCHs in the first set is less than or equal to the number of PSFCHs in a fourth set, where the fourth set includes a second-threshold number of PSFCHs, and the second threshold is used to indicate a maximum number of PSFCH transmissions supportable simultaneously by the terminal device;

a sum of ninth powers of first objects corresponding to the first set is less than or equal to the maximum transmission power of the terminal device, where the ninth power is a sum of second powers of PSFCHs located on the first object in the first set;

the sum of the ninth powers of the first objects corresponding to the first set is greater than or equal to the maximum transmission power of the terminal device;

the number of PSFCHs in the first set is greater than the number of PSFCHs in the fourth set;

a sum of tenth powers of first objects corresponding to the fourth set is less than or equal to the maximum transmission power of the terminal device, where the tenth power is a sum of second powers of PSFCHs located on the first object in the fourth set;

the sum of the tenth powers of the second objects corresponding to the fourth set is greater than the maximum transmission power of the terminal device;

the number of PSFCHs belonging to the first set in the first object is less than or equal to the number of PSFCHs in the fourth set;

the number of PSFCHs belonging to the first set in the first object is greater than the number of PSFCHs in the fourth set;

a sum of second powers of the PSFCHs belonging to the first set in the first object is less than or equal to the maximum transmission power of the terminal device;

the sum of the second powers of the PSFCHs belonging to the first set in the first object is greater than the maximum transmission power of the terminal device;

a sum of second powers of PSFCHs in the fourth set is less than or equal to the maximum transmission power of the terminal device;

the sum of the second powers of the PSFCHs in the fourth set is greater than the maximum transmission power of the terminal device;

the number of PSFCHs belonging to the first set in the first object is less than or equal to the number of PSFCHs in a fifth set, where the fifth set includes PSFCHs obtained by the terminal device by evenly dividing PSFCHs in the fourth set to first objects corresponding to the first set; and

the number of PSFCHs belonging to the first set in the first object is greater than the number of PSFCHs in the fifth set;

a sum of second powers of the PSFCHs in the fifth set is less than or equal to the maximum transmission power of the terminal device;

the sum of the second powers of the PSFCHs in the fifth set is greater than the maximum transmission power of the terminal device; and

path loss-based power control for PSFCHs is configured or not configured for the first object.

For example, in a case that the number $N_{sch,Tx,PSFCH}$ of PSFCHs in the first set is less than or equal to the second threshold $N_{max,PSFCH}$, and a sum of ninth powers of first objects in which $N_{sch,Tx,PSFCH}$ PSFCHs are located is less than or equal to the maximum transmission power $P_{CMAX}$ of the terminal device, M target PSFCHs in the first object i may be PSFCHs located on the first object i in $N_{sch,Tx,PSFCH}$ PSFCHs, and/or the third transmission power $P_{PSFCH,i}$ of the target PSFCHs in the first object i is a second power of the first object i.

For another example, in a case that the number $N_{sch,Tx,PSFCH}$ of PSFCHs in the first set is less than or equal to the second threshold $N_{max,PSFCH}$, and the sum of the ninth powers of the first objects in which $N_{sch,Tx,PSFCH}$ PSFCHs are located is greater than $P_{CMAX}$, the UE selects N PSFCHs from $N_{sch,Tx,PSFCH}$, PSFCHs based on the first information, where the M target PSFCHs in the first object i are PSFCHs located in the first object i in N PSFCHs, and/or, the third transmission power $P_{PSFCH,i}$ of the target PSFCH in the first object i is a smaller value of a second power of a resource pool i and a power obtained by equally dividing $P_{CMAX}$ to N PSFCHs.

For another example, in a case that the number $N_{sch,Tx,PSFCH}$ of PSFCHs in the first set is greater than the second threshold $N_{max,PSFCH}$, the UE determines $N_{max,PSFCH}$ PSFCHs from $N_{sch,Tx,PSFCH}$ PSFCHs based on the first information. If a sum of tenth powers of first objects in which $N_{max,PSFCH}$ PSFCHs are located is less than or equal to $P_{CMAX}$, the M target PSFCHs in the first object i are PSFCHs located on the first object i in $N_{max,PSFCH}$ PSFCHs, and/or the third transmission power $P_{PSFCH,i}$ of the target PSFCHs in the first object i is a second power of a resource i. If the sum of the tenth powers of the first objects in which $N_{max,PSFCH}$ PSFCHs are located is greater than $P_{CMAX}$, the UE selects N PSFCHs from $N_{max,PSFCH}$ PSFCHs. The M target PSFCHs in the first object i are PSFCHs located in the first object i in N PSFCHs, and the third transmission power $P_{PSFCH,i}$ of the target PSFCH in the first object i1 is a smaller value of the second power of the first object i and a power obtained by equally dividing $P_{CMAX}$ to N PSFCHs.

For another example, in a case that downlink path-loss-based power control for PSFCHs is not configured for the first object, the UE determines N PSFCHs from $N_{sch,Tx,PSFCH}$ PSFCHs based on first information. The M target PSFCHs in the first object i are PSFCHs of the first object i in the N PSFCHs, and the third transmission power $P_{PSFCH,i}$ of the target PSFCH in the first object i is a power obtained by equally dividing $P_{CMAX}$ to N PSFCHs.

For another example, in a case that the number of PSFCHs located on the first object i in $N_{sch,Tx,PSFCH}$, PSFCHs is less than or equal to the number of PSFCHs in a fourth set or the number of PSFCHs in a fifth set, and a sum of second powers of the PSFCHs located on the first object i in $N_{sch,Tx,PSFCH}$, PSFCHs does not exceed $P_{CMAX}$, the M target PSFCHs in the first object i are PSFCHs located on the first object i in $N_{sch,Tx,PSFCH}$, PSFCHs, and/or the third transmission power $P_{PSFCH,i}$ of the target PSFCH in the first object i is the second power of the first object i.

For another example, in a case that the number of PSFCHs located on the first object i in $N_{\text{sch,Tx,PSFCH}}$, PSFCHs is less than or equal to the number of PSFCHs in the fourth set or the number of PSFCHs in the fifth set, and a sum of second powers of the PSFCHs located on the first object i in $N_{\text{sch,Tx,PSFCH}}$, PSFCHs exceeds $P_{\text{CMAX}}$, the M target PSFCHs in the first object i are M PSFCHs determined based on the first information by the UE from the PSFCHs located on the first object i in $N_{\text{sch,Tx,PSFCH}}$, PSFCHs, and/or, the third transmission power $P_{\text{PSFCH,i}}$ of the target PSFCH in the first object i is a smaller value of the second power of the first object i and a power obtained by equally dividing $P_{\text{CMAX}}$ to M PSFCHs.

For another example, in a case that the number of PSFCHs located on the first object i in $N_{\text{sch,Tx,PSFCH}}$, PSFCHs is greater than the number of PSFCHs in the fourth set or the number of PSFCHs in the fifth set, the UE selects, based on the first information, a fourth-set number of PSFCHs or a fifth-set number of PSFCHs from the PSFCHs located on the first object i in $N_{\text{sch,Tx,PSFCH}}$ PSFCHs. If a sum of second powers of the PSFCHs in the fourth set or the PSFCHs in the fifth set is less than or equal to $P_{\text{CMAX}}$, the M target PSFCHs in the first object i are the PSFCHs in the fourth set or the PSFCHs in the fifth set, and/or the third transmission power $P_{\text{PSFCH,i}}$ of the target PSFCH in the first object i is the second power of the first object i; or if the sum of the second powers of the PSFCHs in the fourth set or the PSFCHs in the fifth set is greater than $P_{\text{CMAX}}$, the UE determines, based on the first information, M PSFCHs from the PSFCHs in the fourth set or the PSFCHs in the fifth set, where the third transmission power $P_{\text{PSFCH,i}}$ of the target PSFCH in the first object i is a smaller value of the second power of the first object i and a power obtained by evenly dividing $P_{\text{CMAX}}$ to M PSFCHs.

For another example, in a case that downlink path-loss-based power control for PSFCHs is not configured for the first object i, the M target PSFCHs in the first object i are M PSFCHs determined based on the first information by the UE from the PSFCHs located on the first object i in $N_{\text{sch,Tx,PSFCH}}$, PSFCHs, and the third transmission power $P_{\text{PSFCH,i}}$ of the target PSFCH in the first object i is a power obtained by evenly dividing $P_{\text{CMAX}}$ to M PSFCHs.

In an optional embodiment of this application, the method further includes: updating, by the terminal device, a fourth parameter based on the maximum transmission power of the terminal device on the first object to obtain a fifth parameter.

The fifth parameter includes at least one of the following:

a second set, where the second set includes target PSFCHs in the terminal device;
the second transmission power of the target PSFCH in the terminal device;
target PSFCHs in first objects corresponding to the first set; and
the third transmission power of the target PSFCH in the first object.

Optionally, the second set includes at least one of the following:

the first set or target PSFCHs in each first object corresponding to the N target PSFCHs in the terminal device; and
N target PSFCHs in the terminal device.

Optionally, the second transmission power of the target PSFCH in the terminal device includes at least one of the following:

a minimum value of third transmission powers of target PSFCHs in the first objects corresponding to the first set or the N target PSFCHs in the terminal device; and
a second transmission power that is determined by the terminal device based on the maximum transmission power of the terminal device.

In an optional embodiment of this application, the updating, by the terminal device, a fourth parameter based on the maximum transmission power of the terminal device on the first object to obtain a fifth parameter includes:

step S51: the terminal device updates M target PSFCHs in the first object based on first information, where the first information is used to indicate a filtering condition for the target PSFCH; and/or
step S52: the terminal device updates the third transmission power of the target PSFCH in the first object based on a seventh power; where the seventh power is a power obtained by evenly dividing the maximum transmission power of the terminal device on the first object to the M target PSFCHs of the first object.

In this embodiment of this application, the M target PSFCHs in the first object may be target PSFCHs determined by the terminal device from the target PSFCHs of the first object based on the first information.

Optionally, that the terminal device updates the third transmission power of the target PSFCH in the first object based on the seventh power includes: the terminal device adjusts the third transmission power of the target PSFCH in the first object to the seventh power.

In a possible application scenario, the updating, by the terminal device, the third transmission power of the target PSFCH in the first object based on a seventh power includes at least one of the following:

if the seventh power is less than a current value of the third transmission power of the target PSFCH in the first object, adjusting, by the terminal device, the third transmission power of the target PSFCH to the seventh power; or
if the seventh power is greater than or equal to the current value of the third transmission power of the target PSFCH in the first object, keeping, by the terminal device, the third transmission power of the target PSFCH unchanged.

Optionally, the updating, by the terminal device, a fourth parameter based on the maximum transmission power of the terminal device on the first object to obtain a fifth parameter includes:

in a case that a fourth condition is met, updating, by the terminal device, M target PSFCHs of the first object and/or the third transmission power of the target PSFCH in the first object based on the maximum transmission power of the terminal device in the first object.

The fourth condition includes at least one of the following:

a sum of third transmission powers of the M target PSFCHs in the first object is greater than the maximum transmission power of the terminal device on the first object;
the sum of the third transmission powers of the M target PSFCHs in the first object is less than or equal to the maximum transmission power of the terminal device on the first object; and
path loss-based power control for PSFCHs is configured or not configured for the first object.

For example, if a sum of third transmission powers of target PSFCHs in a first object i exceeds the maximum transmission power of the terminal device on the first object, the UE may select part of the PSFCHs from M target PSFCHs of the first object i based on the first information, and the third transmission power of the target PSFCH may be determined based on the maximum transmission power of the terminal device on the first object.

For another example, in a case that the sum of the third transmission powers of the M target PSFCHs in the first object i is less than or equal to the maximum transmission power of the terminal device on the first object i, the M target PSFCHs and/or target PSFCHs of the first object i remain unchanged.

For another example, in a case that the sum of the third transmission powers of the M target PSFCHs in the first object i is greater than the maximum transmission power of the terminal device on the first object, the M target PSFCHs of the first object i are updated M target PSFCHs of the first object i that are determined by the UE from original M target PSFCHs of the first object i based on the first information, so that the updated M target PSFCHs of the first object i are greater than or equal to a fifth threshold, where the fifth threshold satisfies that a sum of third transmission powers of original target PSFCHs in a fifth-threshold number of PSFCHs does not exceed the maximum transmission power of the terminal device on the first object; and/or a third transmission power of the updated target PSFCH is a smaller value of a power obtained by evenly dividing the maximum transmission power of the terminal device on the first object to the updated M target PSFCHs of the first object i and a third transmission power of the original target PSFCH.

For another example, in a case that path loss-based power control for PSFCHs is not configured for the first object i, the M target PSFCHs of the first object i are updated M target PSFCHs of the first object i that are determined by the UE from original M target PSFCHs of the first object i based on the first information, so that the updated M target PSFCHs of the first object i are greater than or equal to a fifth threshold, where the fifth threshold satisfies that a sum of third transmission powers of original target PSFCHs in a fifth-threshold number of PSFCHs does not exceed the maximum transmission power of the terminal device on the first object; and/or the third transmission power of the updated target PSFCH is a power obtained by evenly dividing the maximum transmission power of the terminal device on the first object to the updated M target PSFCHs of the first object i.

In an optional embodiment of this application, the determining, by a terminal device based on a first transmission power, N target physical sidelink feedback channels PSFCHs from a first set and/or a second transmission power of the target PSFCH includes:

determining, by the terminal device, M target PSFCHs in first objects corresponding to the first set and/or a third transmission power of the target PSFCH in the first object based on the maximum transmission power of the terminal device on the first object.

Further, after the UE determines the M target PSFCHs in the first objects corresponding to the first set and/or the third transmission power of the target PSFCH in the first object based on the maximum transmission power of the terminal device on the first object, the N PSFCHs in the terminal device may be a sum of M PSFCHs in the first objects corresponding to the first set, and the second transmission power of the target PSFCH may be a minimum value of the third transmission powers $P_{PSFCH,i1}$ of the target PSFCHs in the first objects, so that the target PSFCHs in the terminal device all use a same third transmission power, achieving unified control on the target PSFCHs. Alternatively, the second transmission power of the target PSFCH may be the third transmission power $P_{PSFCH,i1}$ of the target PSFCH in the first objects, so that target PSFCHs in each first object use a same third transmission power, thereby achieving separate control on the first objects in the terminal device. The UE transmits the PSFCH based on the N target PSFCHs and/or the second transmission power $P_{\text{PSFCH},k}$ of the target PSFCH.

Optionally, the M target PSFCHs include at least one of the following:

a PSFCH located in the first object in the first set;
M PSFCHs that are determined based on first information by the terminal device from PSFCHs located on the first object in the first set, where the first information is used to indicate a filtering condition for the target PSFCH;
a PSFCH located in the first object in a fourth set, where the fourth set includes a second-threshold number of PSFCHs, and the second threshold is used to indicate a maximum number of PSFCH transmissions supportable simultaneously by the terminal device;
a PSFCH in the fourth set;
M PSFCHs that are determined based on the first information by the terminal device from the fourth set; and
M PSFCHs that are determined based on the first information by the terminal device from PSFCHs located on the first object in the fourth set.

Optionally, the determining, by the terminal device, M target PSFCHs in first objects corresponding to the first set and/or a third transmission power of the target PSFCH in the first object based on the maximum transmission power of the terminal device on the first object includes:
determining, by the terminal device, third transmission powers of the target PSFCHs in the first objects corresponding to the first set based on the fifth information.

The fifth information includes at least one of the following:

a second power of the first object, where the second power is determined by the terminal device based on a second parameter of the first object, and the second parameter is used to indicate information of path loss-based power control; and
a seventh power, where the seventh power is a power obtained by evenly dividing the maximum transmission power of the terminal device on the first object to the M target PSFCHs of the first object.

As an example, that the terminal device determines the third transmission powers of the target PSFCHs in the first objects corresponding to the first set based on the fifth information includes: the terminal device determines a power value corresponding to the fifth information as the third transmission power of the target PSFCH in the first object.

As another example, the fifth information includes the second power of the first object and/or the seventh power; and that the terminal device determines the third transmission powers of the target PSFCHs in the first objects corresponding to the first set based on the fifth information includes:

if the second power of the first object is greater than the seventh power, determining, by the terminal device, the seventh power as the third transmission power of the target PSFCH in the first object; or
if the second power of the first object is less than the seventh power, determining, by the terminal device, the second power of the first object as the third transmission power of the target PSFCH in the first object.

In an optional embodiment of this application, the determining, by the terminal device, M target PSFCHs in first objects corresponding to the first set and/or a third transmission power of the target PSFCH in the first object based on the maximum transmission power of the terminal device on the first object includes:
in a case that a fifth condition is met, determining, by the terminal device, M target PSFCHs in the first objects corresponding to the first set and/or the third transmission power of the target PSFCH in the first object based on the maximum transmission power of the terminal device on the first object.

The fifth condition includes at least one of the following:

the number of PSFCHs located on the first object in the first set is less than or equal to the number of PSFCHs in a fourth set, where the fourth set includes a second-threshold number of PSFCHs;
the number of PSFCHs located on the first object in the first set is greater than the number of PSFCHs in the fourth set;
the number of PSFCHs in the first set is less than or equal to the number of PSFCHs in the fourth set;
the number of PSFCHs in the first set is greater than the number of PSFCHs in the fourth set;
a sum of second powers of PSFCHs belonging to the first set in the first object is less than or equal to the maximum transmission power of the terminal device on the first object;
the sum of the second powers of the PSFCHs belonging to the first set in the first object is greater than the maximum transmission power of the terminal device on the first object;
a sum of second powers of PSFCHs in a fourth set is less than or equal to the maximum transmission power of the terminal device on the first object;

the sum of the second powers of the PSFCHs in the fourth set is greater than the maximum transmission power of the terminal device on the first object;

a sum of second powers of PSFCHs located on the first object in the fourth set is less than or equal to the maximum transmission power of the terminal device on the first object;

the sum of the second powers of the PSFCHs located on the first object in the fourth set is greater than the maximum transmission power of the terminal device on the first object; and

path loss-based power control for PSFCHs is configured or not configured for the first object.

For example, if the number of PSFCHs located on the first object i in the first set is less than or equal to the second threshold, or the number of PSFCHs in the first set is less than or equal to the second threshold, and a sum of second powers of the PSFCHs located on the first object i in the first set is less than or equal to the maximum transmission power of the terminal device on the first object, M target PSFCHs in the first object i may be the PSFCHs in the first set, and/or the third transmission power of the target PSFCH in the first object i may be a second power of the first object i.

For example, if the number of PSFCHs located on the first object i in the first set is less than or equal to the second threshold, or the number of PSFCHs in the first set is less than or equal to the second threshold, and a sum of second powers of the PSFCHs located on the first object i in the first set is greater than the maximum transmission power of the terminal device on the first object, M target PSFCHs in the first object i may be M PSFCHs that are determined based on the first information by the terminal from the PSFCHs located on the first object i in the first set, and/or the third transmission power of the target PSFCH in the first object i may be a smaller value of the second power of the first object i and a power obtained by evenly dividing the maximum transmission power of the terminal device on the first object to the M target PSFCHs of the first object.

For example, if the number of PSFCHs located on the first object i in the first set is greater than the second threshold, the terminal determines, based on the first information, a second-threshold number of PSFCHs from the PSFCHs located on the first object i in the first set. If a sum of second powers of the second-threshold number of PSFCHs is less than or equal to the maximum transmission power of the terminal device on the first object, the M target PSFCHs in the first object i may be the second-threshold number of PSFCHs, and/or the third transmission power of the target PSFCH in the first object i may be the second power of the first object i. If the sum of the second powers of the second-threshold number of PSFCHs does not exceed the maximum transmission power of the terminal device on the first object and is greater than the maximum transmission power of the terminal device on the first object, the M target PSFCHs in the first object i may be M PSFCHs that are determined based on the first information by the terminal from the PSFCHs located on the first object i in the first set, and/or the third transmission power of the target PSFCH in the first object i may be a smaller value of the second power of the first object i and a power obtained by evenly dividing the maximum transmission power of the terminal device on the first object to the M target PSFCHs of the first object.

For example, if the number of PSFCHs in the first set is greater than the second threshold, the terminal determines a second-threshold number of PSFCHs from the PSFCHs in the first set based on the first information. If a sum of second powers of PSFCHs located on the first object i in the second-threshold number of PSFCHs is less than or equal to the maximum transmission power of the terminal device on the first object, the M target PSFCHs in the first object i may be the PSFCHs located on the first object i in the second-threshold number of PSFCHs, and/or the third transmission power of the target PSFCH in the first object i may be the second power of the first object i. If the sum of the second powers of the PSFCHs located on the first object i in the second-threshold number of PSFCHs is greater than the maximum transmission power of the terminal device on the first object, the M target PSFCHs in the first object i may be M PSFCHs that are determined based on the first information by the terminal from the PSFCHs located on the first object i in the second-threshold number of PSFCHs, and/or the third transmission power of the target PSFCH in the first object i may be a smaller value of the second power of the first object i and a power obtained by equally dividing the maximum transmission power of the terminal device on the first object to the M target PSFCHs of the first object.

For another example, in a case that path loss-based power control for PSFCHs is not configured for the first object i, the M target PSFCHs in the first object i may be M PSFCHs that are determined based on the first information by the terminal from the PSFCHs located on the first object i in the first set, and/or the third transmission power of the target PSFCH in the first object i may be a power obtained by evenly dividing the maximum transmission power of the terminal device on the first object to the M target PSFCHs of the first object.

In an optional embodiment of this application, the method further includes:

determining, by the terminal device, the N target PSFCHs and/or the second transmission power of the target PSFCH in the terminal device based on the maximum transmission power of the terminal device.

The N target PSFCHs include at least one of the following:

the M target PSFCHs in the first objects corresponding to the first set;

a PSFCH that is determined by the terminal device from the target PSFCHs in the objects based on first information, where the first information is used to indicate a filtering condition for the target PSFCH;

PSFCHs in a fourth set, where the fourth set includes PSFCH transmissions supportable simultaneously by the terminal device; and

PSFCHs that are determined based on the first information by the terminal device from the fourth set.

Optionally, the determining, by the terminal device, the N target PSFCHs and/or the second transmission power of the target PSFCH in the terminal device based on the maximum transmission power of the terminal device includes: determining, by the terminal device, the second transmission power of the target PSFCH in the terminal device based on sixth information.

The sixth information includes at least one of the following:

a fourth power, where the fourth power is a power obtained by evenly dividing the maximum transmission power of the terminal device to the N target PSFCHs; and

an eleventh power, where the eleventh power is a minimum value of third transmission powers of target PSFCHs in the first objects corresponding to the first set; or the eleventh power is the third transmission powers of the target PSFCHs in the first objects corresponding to the first set.

As an example, the determining, by the terminal device, the second transmission power of the target PSFCH in the terminal device based on sixth information includes at least one of the following:

if the fourth power is greater than the eleventh power, determining, by the terminal device, the eleventh power as the second transmission power of the target PSFCH in the terminal device; or

if the fourth power is less than the eleventh power, determining, by the terminal device, the fourth power as the second transmission power of the target PSFCH in the terminal device.

As another example, the determining, by the terminal device, the second transmission power of the target PSFCH in the terminal device based on sixth information includes:

determining, by the terminal device, the eleventh power as the second transmission power of the target PSFCH in the terminal device.

In an optional embodiment of this application, the determining, by the terminal device, the N target PSFCHs and/or the second transmission power of the target PSFCH in the terminal device based on the maximum transmission power of the terminal device includes:

in a case that a sixth condition is met, determining, by the terminal device, the N target PSFCHs and/or the second transmission power of the target PSFCH in the terminal device based on the maximum transmission power of the terminal device.

The sixth condition includes at least one of the following:

a sum of the number of target PSFCHs in the first objects corresponding to the first set is less than or equal to a second threshold, where the second threshold is used to indicate a maximum number of PSFCH transmissions supportable by the terminal device;

the sum of the number of target PSFCHs in the first objects corresponding to the first set is greater than the second threshold;

a sum of twelfth powers of the first objects corresponding to the first set is less than or equal to the maximum transmission power of the terminal device, where the twelfth power is a sum of eleventh powers of the target PSFCHs in the first object; and the eleventh power is a minimum value of third transmission powers of target PSFCHs in the first objects corresponding to the first set or the eleventh power is the third transmission powers of the target PSFCHs in the first objects corresponding to the first set;

the sum of the twelfth powers of the first objects corresponding to the first set is greater than the maximum transmission power of the terminal device;

a sum of eleventh powers of PSFCHs in the fourth set is less than or equal to the maximum transmission power of the terminal device; and

the sum of the eleventh powers of the PSFCHs in the fourth set is greater than the maximum transmission power of the terminal device.

For example, if the sum of the number of target PSFCHs in the first objects corresponding to the first set is less than or equal to the second threshold, and the sum of the twelfth powers of the first objects corresponding to the first set is less than or equal to the maximum transmission power of the terminal device, the N target PSFCHs may be a sum of the M target PSFCHs in the first objects corresponding to the first set, and/or the second transmission power of the target PSFCH is the eleventh power.

For another example, if the sum of the number of target PSFCHs in the first objects corresponding to the first set is less than or equal to the second threshold, and the sum of the twelfth powers of the first objects corresponding to the first set is greater than the maximum transmission power of the terminal device, the N target PSFCHs may be N target PSFCHs that are determined based on the first information by the terminal device from the sum of the M target PSFCHs of the first objects corresponding to the first set, and/or the second transmission power of the target PSFCH is a smaller value of the fourth power and the eleventh power;

For another example, if the sum of the number of target PSFCHs in the first objects corresponding to the first set is greater than the second threshold, the terminal determines a second-threshold number of PSFCHs based on the first information from the sum of the M target PSFCHs of the first objects corresponding to the first set. If a sum of eleventh powers of the second-threshold number of PSFCHs is less than or equal to the maximum transmission power of the terminal device, the N target PSFCHs may be the second-threshold number of PSFCHs, and/or the second transmission power of the target PSFCH is the eleventh power. If the sum of the eleventh powers of the second-threshold number of PSFCHs is greater than the maximum transmission power of the terminal device, the N target PSFCHs may be N target PSFCHs that are determined based on the first information by the terminal device from the second-threshold number of PSFCHs, and/or the second transmission power of the target PSFCH is a smaller value of the fourth power and the eleventh power.

In an optional embodiment of this application, that the terminal device determines, based on the first transmission power, the N target physical sidelink feedback channels PSFCHs from the first set and/or the second transmission power of the target PSFCH includes:

step S61: the terminal device determines N1 PSFCHs in the terminal device and/or a fourth transmission power of the PSFCH from the first set based on the maximum transmission power of the terminal device, where N1 is a positive integer;

step S62: the terminal device determines M1 PSFCHs in first objects corresponding to the first set and/or a fifth transmission power of the PSFCH based on a maximum transmission power of the terminal device on the first objects, where M1 is a positive integer;

step S63: if the fourth transmission power is less than or equal to a sixth transmission power, determining, by the terminal device, the N1 PSFCHs as the target PSFCHs in the terminal device, and/or determining the fourth transmission power as the second transmission power of the target PSFCH in the terminal device, where the sixth transmission power is a minimum value of fifth transmission powers of the M1 PSFCHs; and

step S64: if the fourth transmission power is greater than the sixth transmission power, determining, by the terminal device, the M1 PSFCHs in the first objects as the target PSFCHs in the terminal device, and/or determining the sixth transmission power as the second transmission power of the target PSFCH in the terminal device.

The sixth transmission power is a minimum value of fifth transmission powers of the M1 PSFCHs. For the specific method for determining the N1 PSFCHs and/or the fourth transmission power of the PSFCH, as well as the M1 PSFCHs and/or the fifth transmission power of the PSFCH, reference may be made to the aforementioned embodiments for determining the N PSFCHs and/or the second transmission power of the PSFCH as well as the M PSFCHs and/or the third transmission power of the PSFCH, which is not further repeated here in this embodiment of this application.

In an optional embodiment of this application, the first set includes at least two PSFCHs that are predetermined by the terminal device to participate in sidelink transmission; and the at least two PSFCHs are located on at least two first objects, including at least one of the following:

for the first object configured with PSFCH or for the first object with PSFCH resources overlapping in time domain, the second parameter of the first object being the same is satisfied; and

for the first object configured with PSFCH or for the first object with PSFCH resources overlapping in time domain, the terminal device does not expect the second parameter of the first object to be different or the terminal device expects the second parameter of the second object to be the same.

Further optionally, for the first object configured with PSFCH or for the first object with PSFCH resources overlapping in time domain, in a case that the first object is a resource pool, the resource pool is located in a same carrier or BWP, that is, for the resource pool located in the same carrier or BWP, or for the resource pool located in the same carrier or BWP and with PSFCH resources overlapping in time domain, the second parameter of the resource pool is the same, and/or the terminal device does not expect the second parameters of the resource pools to be different or the terminal device expects the second parameter of the second object to be the same.

In an optional embodiment of this application, the determining, by a terminal device based on a first transmission power, N target physical sidelink feedback channels PSFCHs from a first set and/or a second transmission power of the target PSFCH includes: the terminal device does not expect PSFCH resources on multiple first objects to be the same or overlap in time domain, and/or the terminal device expects PSFCH resources on multiple first objects to be different or not overlap in time domain.

In an optional embodiment of this application, the determining, by a terminal device based on a first transmission power, N target physical sidelink feedback channels PSFCHs from a first set and/or a second transmission power of the target PSFCH includes: configured PSFCH resources on multiple first objects are different or do not overlap in time domain.

In an optional embodiment of this application, the performing, by the terminal device, sidelink transmission based on the N target PSFCHs and/or the second transmission power of the target PSFCH includes: the terminal device does not expect to transmit the PSFCH on multiple first objects, or the terminal device expects to transmit the PSFCH on one first object.

In another optional embodiment of this application, that the terminal device determines, based on the first transmission power, the N target physical sidelink feedback channels PSFCHs from the first set and/or the second transmission power of the target PSFCH includes:

step S71: the terminal device determines M2 PSFCHs in first objects corresponding to the first set and/or a seventh transmission power of the PSFCH based on the maximum transmission power of the terminal device;

step S72: the terminal device determines M3 PSFCHs in the first objects corresponding to the first set and/or an eighth transmission power of the PSFCH based on a maximum transmission power of the terminal device on the first objects;

step S73: if a ninth transmission power is less than or equal to a tenth transmission power, the terminal device determines a PSFCH in a sixth set as the target PSFCH in the terminal device, and/or determines the ninth transmission power as the second transmission power of the target PSFCH; and

step S74: if the ninth transmission power is greater than the tenth transmission power, the terminal device determines a PSFCH in a seventh set as the target PSFCH in the terminal device, and/or determines the tenth transmission power as the second transmission power of the target PSFCH.

The ninth transmission power is a minimum value of seventh transmission powers of M2 PSFCHs, the tenth transmission power is a minimum value of eighth transmission powers of M3 PSFCHs, and the sixth set includes M2 PSFCHs in the first objects corresponding to the first set. The seventh set includes M3 PSFCHs in the first objects corresponding to the first set.

The following describes the foregoing embodiments of this application by using examples in combination with a specific sidelink transmission procedure.

As an example, in this application, for one UE with $N_{\text{sch,Tx,PSFCH}}$ scheduled PSFCH transmissions and capable of transmitting a maximum of $N_{\text{max,PSFCH}}$ PSFCHs, if the $N_{\text{sch,Tx,PSFCH}}$ PSFCH transmissions are located on multiple resource pools, the N target PSFCHs in the UE may be PSFCHs scheduled on a resource pool with the most scheduled PSFCHs.

As another example, one UE with $N_{\text{sch,Tx,PSFCH}}$ scheduled PSFCH transmissions and capable of transmitting a maximum of $N_{\text{max,PSFCH}}$ PSFCHs determines the number $N_{\text{Tx,PSFCH}}$ of PSFCHs simultaneously transmitted in one or multiple resource pools at a PSFCH transmission occasion i and a power $P_{\text{PSFCH,k}}(i)$ for PSFCH ($1 \leq k \leq N_{\text{Tx,PSFCH}}$) transmission k in the following manner:

for $N_{Rp}$ resource pools in which $N_{\text{sch,Tx,PSFCH}}$ PSFCHs are located, i the resource pool j ($1 \leq j \leq N_{Rp}$)(j is used for ease of description to indicate numbering of $N_{Rp}$ resource pools, where a numbering manner is not limited to the above, and for example, may alternatively be $0 \leq j < N_{Rp}$ - 1).

If *dl-P0-PSFCH* is provided, it can be specifically expressed as:

$$P_{\text{PSFCH,one,j}} = P_{O,PSFCH,j} + 10\,log_{10}(2^{\mu}) + \alpha_{PSFCH,j} \cdot PL \ \ [\text{dBm}]$$

where, if the UE supports use of the parameter p0-DL-PSFCH and the parameter is provided, $P_{O,PSFCH,j}$ is a value of dl-P0-PSFCH-r17 of resource pool j; otherwise $P_{O,PSFCH,j}$ is a value of dl-P0-PSFCH-r16 of resource pool j; or $P_{O,PSFCH,j}$ is a value of dl-P0-PSFCH of resource pool j if the UE supports use of the parameter p0-DL-PSFCH and this parameter is provided.

If dl-Alpha-PSFCH is provided, $\alpha_{PSFCH,j}$ is a value of dl-Alpha-PSFCH of resource pool j; otherwise $\alpha_{PFSCH,j} = 1$.

When an active SL BWP is in a serving cell c, $PL = PL_{b,f,c}(q_d)$.

An RS resource is a resource used by UE to determine a power for a PUSCH transmission scheduled by DCI format 0_0 in serving cell c. In a case that the UE is configured to monitor the PDCCH to detect the DCI format 0_0 in the serving cell c, the RS resource is a resource used by the UE to obtain a MIB corresponding to an SS/PBCH block; or in a case that the UE is not configured to monitor the PDCCH to detect the DCI format 0_0 in the serving cell c, $P_{\text{PSFCH,one}}$ is a minimum value of $P_{\text{PSFCH,one,j}}$ $(1 \leq j \leq N_{Rp})$.

If at least one of the following is met:

$$N_{\text{sch,Tx,PSFCH}} \leq N_{\text{max,PSFCH}};$$

and/or

$$P_{\text{PSFCH,one}} + 10log_{10}(N_{\text{sch,Tx,PSFCH}}) \leq P_{\text{CMAX}},$$

where $P_{\text{CMAX}}$ is the maximum transmit power of the UE determined for $N_{\text{sch,Tx,PSFCH}}$ PSFCH transmissions according to [8-1, TS38.101-1].

Then the number of target PSFCHs in the terminal device is $N_{\text{Tx,PSFCH}} = N_{\text{sch,Tx,PSFCH}}$, and/or the second transmission power of the target PSFCH is $P_{\text{PSFCH,k}}(i) = P_{\text{PSFCH,one}}$[dBm].

Otherwise, the UE can autonomously determine $N_{\text{Tx,PSFCH}}$ PSFCH transmissions first in ascending order of priorities for PSFCH transmissions with HARQ-ACK information and then in ascending order of priorities for PSFCH transmissions with conflict information, to obtain $N_{\text{Tx,PSFCH}} \geq \max(1, \sum_{i=1}^{K} M_i).M_i$, which for $1 \leq i \leq 8$, is the number of PSFCHs with HARQ-ACK information and a transmission priority i, and for i>8, is the number of PSFCHs with conflict information and a transmission priority i-8; or the UE can autonomously determine $N_{\text{Tx,PSFCH}}$ PSFCH transmissions in ascending order of priorities, so as to obtain $N_{\text{Tx,PSFCH}} \geq \max(1, \sum_{i=1}^{K} M_i).M_i$ is the number of PSFCHs with a transmission priority i.

K may include a maximum value satisfying $P_{\text{PSFCH,one}} + 10log_{10}(\max(1, \sum_{i=1}^{K} M_i)) \leq P_{\text{CMAX}}$, where $P_{\text{CMAX}}$ is the maximum transmit power of the UE determined for all PSFCH transmissions in $\sum_{i=1}^{K} M_i$ according to [8-1, TS38.101-1].

Alternatively, the number of target PSFCHs in the terminal device is 0, and/or the second transmission power of the target PSFCH is $P_{\text{PSFCH,k}}(i) = min(P_{\text{CMAX}} - 10log_{10}(N_{\text{Tx,PSFCH}}), P_{\text{PSFCH,one}})$[dBm], where $P_{\text{CMAX}}$ is the maximum transmit power of the UE determined for $N_{\text{Tx,PSFCH}}$ PSFCH transmissions according to [8-1, TS38.101-1].

If $P_{\text{PSFCH,one}} + 10log_{10}(N_{\text{max,PSFCH}}) \leq P_{\text{CMAX}}$, where $P_{\text{CMAX}}$ is a maximum transmit power of the UE determined for $N_{\text{max,PSFCH}}$ PSFCH transmissions according to [8-1, TS38.101-1]; and the UE can autonomously determine $N_{\text{max,PSFCH}}$ PSFCH transmissions in ascending order of priorities, and the number of target PSFCHs in the terminal device is $N_{\text{Tx,PSFCH}} = N_{\text{max,PSFCH}}$. The second transmission power of the target PSFCH is $P_{\text{PSFCH,k}}(i) = P_{\text{PSFCH,one}}$ [dBm].

Specifically, the UE autonomously determines $N_{\text{Tx,PSFCH}}$ PSFCH transmissions first in ascending order of priorities for PSFCH transmissions with HARQ-ACK information and then in ascending order of priorities for PSFCH transmissions with conflict information, to obtain $N_{\text{Tx,PSFCH}} \geq \max(1, \sum_{i=1}^{K} M_i)$, where $M_i$, which for $1 \leq i \leq 8$, is the number of PSFCHs with HARQ-ACK information and a transmission priority i, and for i>8, is the number of PSFCHs with conflict information and a transmission priority i-8; or the UE can autonomously determine $N_{\text{Tx,PSFCH}}$ PSFCH transmissions in ascending order of priorities, to obtain $N_{\text{Tx,PSFCH}} \geq \max(1, \sum_{i=1}^{K} M_i)$. $M_i$ is the number of PSFCHs with a transmission priority i.

K is defined as follows:

a maximum value satisfying $P_{\text{PSFCH,one}} + 10log_{10}(\max(1, \sum_{i=1}^{K} M_i)) \leq P_{\text{CMAX}}$, where $P_{\text{CMAX}}$ is the maximum transmit power of the UE determined for all PSFCH transmissions in $\sum_{i=1}^{K} M_i$ according to [8-1, TS38.101-1].

Otherwise, the number of target PSFCHs in the terminal device is 0, and/or the second transmission power of the target PSFCH is $P_{\text{PSFCH,k}}(i) = min(P_{\text{CMAX}} - 10log_{10}(N_{\text{Tx,PSFCH}}), P_{\text{PSFCH,one}})$[dBm]. $P_{\text{CMAX}}$ is the maximum transmit power of the UE determined for $N_{\text{Tx,PSFCH}}$ PSFCH transmissions according to [8-1, TS38.101-1].

Otherwise, the second transmission power of the target PSFCH is $P_{\text{PSFCH,k}}(i) = P_{\text{CMAX}} - 10log_{10}(N_{\text{Tx,PSFCH}})$ [dBm].

The UE autonomously determines $N_{\text{Tx,PSFCH}}$ PSFCH transmissions first in ascending order of priorities for PSFCH transmissions with HARQ-ACK information and then in ascending order of priorities for PSFCH transmissions with conflict information; or the UE may autonomously determine $N_{\text{Tx,PSFCH}}$ PSFCH transmissions in ascending order of priorities, to obtain $N_{\text{Tx,PSFCH}} \geq 1$, where $P_{\text{CMAX}}$ is the maximum transmit power of the UE determined for $N_{\text{Tx,PSFCH}}$ PSFCH transmissions according to [8-1, TS38.101-1].

In a possible application scenario of this application, for $N1_{Rp}$ resource pools in which $N_{\text{Tx,PSFCH}}$ PSFCHs are located, $N_{\text{Tx,PSFCH,j1}}$ PSFCHs are PSFCHs located in resource pool j1 $(1 \leq j1 \leq N_{Rp})$ (j1 is used for ease of description to

indicate numbering of $N1_{Rp}$ resource pools, where a numbering manner is not limited to the above, and for example, may alternatively be $0 \leq j1 < N_{Rp} - 1$ ) in $N_{Tx,PSFCH}$ PSFCHs. If $P_{PSFCH,k}(i) + 10log_{10}(N_{Tx,PSFCH,j1}) > P_{CMAX,j1}$, where $P_{CMAX,j1}$ is a maximum transmit power of the resource pool j1 determined based on sl-maxTransPower, the UE first transmits the PSFCHs with HARQ-ACK information in ascending order of priorities, and then, for PSFCH transmissions with conflict information, autonomously determines $N_{Tx,PSFCH,j1}$ PSFCH transmissions in ascending order of priorities; or the UE may autonomously determine $N_{Tx,PSFCH,j1}$ PSFCH transmissions in ascending order of priorities, to obtain $P_{PSFCH,k}(i) + 10log_{10}(N_{Tx,PSFCH,j1}) \leq P_{CMAX,j1}$, where $P_{CMAX,j}$ is the maximum transmit power of the resource pool j1 based on sl-maxTransPower; otherwise, $N_{Tx,PSFCH,j1}$ remains unchanged, and the UE updates $N_{Tx,PSFCH}$ PSFCHs to the sum of $N_{Tx,PSFCH,j1}$ PSFCHs in the resource pools.

In another possible application scenario of this application, one UE with $N_{sch,Tx,PSFCH}$ scheduled PSFCH transmissions and capable of transmitting a maximum of $N_{max,PSFCH}$ PSFCHs determines, in the following manner, the number $N_{Tx,PSFCH,j}$ of PSFCHs simultaneously transmitted in resource pool j ($1 \leq j \leq N_{Rp}$) at a PSFCH transmission occasion i and a power for PSFCH transmission k, where the $N_{sch,Tx,PSFCH}$ PSFCH transmissions are located in $N_{Rp}$ resource pools.

If *dl-P0-PSFCH* of resource pool j is provided, $P_{PSFCH,one} = P_{O,PSFCH} + 10\ log_{10}(2^{\mu}) + \alpha_{PSFCH} \cdot PL$ [dBm]. If UE supports use of this parameter and the parameter is provided, $P_{O,PSFCH}$ is a value of dl-P0-PSFCH-r17 of resource pool j, otherwise it is a value of dl-P0-PSFCH-r16 of resource pool j; or if the UE supports use of this parameter and the parameter is provided, $P_{O,PSFCH}$ is a value of dl-P0-PSFCH of resource pool j. $\alpha_{PSFCH}$ is a value of dl-Alpha-PSFCH of resource pool j (if this parameter is provided), otherwise $\alpha_{PFSCH} = 1$. When an active SL BWP is in a serving cell c, $PL = PL_{b,f,c}(q_d)$.

In a case that the UE is configured to monitor the PDCCH to detect DCI format 0_0 in the serving cell c, the RS resource is a resource used by the UE to determine a power of PUSCH transmission scheduled by DCI format 0_0 in the serving cell c. In a case that the UE is not configured to monitor the PDCCH to detect the DCI format 0_0 in the serving cell c, the RS resource is a resource used by the UE to obtain a MIB corresponding to an SS/PBCH block.

If at least one of the following is met:

$$N_{sch,Tx,PSFCH,j} \leq N_{max,PSFCH},$$

where $N_{sch,Tx,PSFCH,j}$ PSFCHs are PSFCHs located in resource pool j in $N_{sch,Tx,PSFCH}$ PSFCHs; and

$$P_{PSFCH,one} + 10log_{10}\left(N_{sch,Tx,PSFCH,j}\right) \leq P_{CMAX},$$

where $P_{CMAX}$ is a maximum transmit power of resource pool j determined based on sl-maxTransPower.

Then the target PSFCH on the first object j is a PSFCH located in the first object j in the first set, that is, $N_{Tx,PSFCH,j} = N_{sch,Tx,PSFCH,j}$; and a third transmission power of the target PSFCH in the first object j is $P_{PSFCH,k,j}(i) = P_{PSFCH,one}$ [dBm].

Otherwise, the UE autonomously determines $N_{Tx,PSFCH,j}$ PSFCH transmissions first in ascending order of priorities for PSFCH transmissions with HARQ-ACK information and then in ascending order of priorities for PSFCH transmissions with conflict information (if any), to obtain $N_{Tx,PSFCH,j}$ $N_{Tx,PSFCH,j} \geq \max(1, \sum_{i=1}^{K} M_i)$, where $M_i$, which for $1 \leq i \leq 8$, is the number of PSFCHs with HARQ-ACK information and a transmission priority i, and for i>8, is the number of PSFCHs with conflict information and a transmission priority i-8; or the UE can autonomously determine $N_{Tx,PSFCH}$ PSFCH transmissions in ascending order of priorities, to obtain $N_{Tx,PSFCH} \geq \max(1, \sum_{i=1}^{K} M_i)$, where $M_i$ is the number of PSFCHs with a transmission priority i.

Alternatively, the number of target PSFCHs in the first object j is 0, and the third transmission power of the target PSFCH in the first object j is $P_{PSFCH,k,j}(i) = min(P_{CMAX} - 10log_{10}(N_{Tx,PSFCH,j}), P_{PSFCH,one})$ [dBm], where $P_{CMAX}$ is the maximum transmit power of resource pool j determined based on sl-maxTransPower.

Alternatively, the UE autonomously determines $N_{max,PSFCH,j}$ PSFCH transmissions in ascending order of priorities.

If $P_{PSFCH,one} + 10log_{10}(N_{max,PSFCH,j}) \leq P_{CMAX}$, where $P_{CMAX}$ is the maximum transmit power of the UE in resource pool j determined based on sl-maxTransPower, the target PSFCHs in the first object j are PSFCHs located on the first object j that can be simultaneously transmitted by the terminal device, that is, $N_{Tx,PSFCH,j} = N_{max,PSFCH,j}$, the third transmission power of the target PSFCH in the first object j is $P_{PSFCH,k,j}(i) = P_{PSFCH,one}$ [dBm]; otherwise, the UE may autonomously determine $N_{Tx,PSFCH,j}$ PSFCH transmissions first in ascending order of priorities for PSFCH transmissions with HARQ-ACK information and then in ascending order of priorities for PSFCH transmissions with conflict information (if any); or the UE may autonomously determine $N_{Tx,PSFCH}$ PSFCH transmissions in ascending order of priorities, to obtain

$$N_{Tx,PSFCH} \geq \max(1, \sum_{i=1}^{K} M_i) \ . \ M_i \text{ is the number of PSFCHs with a transmission priority i, to obtain}$$

$N_{\text{Tx,PSFCH,j}} \geq \max(1, \sum_{i=1}^{K} M_i)$ , where $M_i$, which for $1 \leq i \leq 8$, is the number of PSFCHs with HARQ-ACK information and transmission priority i, and for i>8, is the number of PSFCHs with conflict information and a transmission priority i-8.

Alternatively, the number of target PSFCHs in the terminal device is 0, and the second transmission power of the target PSFCH in the terminal device is $P_{\text{PSFCH,k}}(i) = min(P_{\text{CMAX}} - 10_{log10}(N_{\text{Tx,PSFCH,j}}), P_{\text{PSFCH,one}})$ [dBm], where $P_{\text{CMAX}}$ is the maximum transmit power of the resource pool j determined based on sl-maxTransPower.

Otherwise, the second transmission power of the target PSFCH in the terminal device is $P_{\text{PSFCH,k}}(i) = P_{\text{CMAX}} - 10log_{10}(N_{\text{Tx,PSFCH,j}})$ [dBm].

The UE autonomously determines $N_{\text{Tx,PSFCH,j}}$ PSFCH transmissions first in ascending order of priorities for PSFCH transmissions with HARQ-ACK information and then in ascending order of priorities for PSFCH transmissions with conflict information; or the UE may autonomously determine $N_{\text{Tx,PSFCH}}$ PSFCH transmissions in ascending order of priorities, to obtain $N_{\text{Tx,PSFCH,j}} \geq 1$, where $P_{\text{CMAX}}$ is the maximum transmit power of the resource pool j determined based on sl-maxTransPower.

$N_{\text{Tx,PSFCH}}$ PSFCHs transmitted by UE simultaneously on $N_{Rp}$ $(1 \leq j \leq N_{Rp})$ resource pools are $N_{\text{Tx,PSFCH,j}}$ PSFCHs transmitted simultaneously on the resource pools. The second transmission power $P_{\text{PSFCH,k}}(i)$ of the PSFCH is a minimum value of PSFCH transmission powers $P_{\text{PSFCH,k,j}}(i)$ for the resource pools.

If $N_{\text{Tx,PSFCH}} \leq N_{\text{max,PSFCH}}$, and/or if $P_{\text{PSFCH,k}} + 10log_{10}(N_{\text{Tx,PSFCH}}) \leq P_{\text{CMAX}}$ , where $P_{\text{CMAX}}$ is the maximum transmit power of the UE determined for $N_{\text{Tx,PSFCH}}$ PSFCH transmissions according to [8-1, TS38.101-1]; $N_{\text{Tx,PSFCH}}$ and $P_{\text{PSFCH,k}}(i)$ remain unchanged; otherwise, the UE autonomously determines $N_{\text{Tx,PSFCH}}$ PSFCH transmissions first in ascending order of priorities for PSFCH transmissions with HARQ-ACK information and then in ascending order of priorities for PSFCH transmissions with conflict information, to obtain $N_{\text{Tx,PSFCH}} \geq \max(1, \sum_{i=1}^{K} M_i)$ , where $M_i$, which for $1 \leq i \leq 8$, is the number of PSFCHs with HARQ-ACK information and a transmission priority i, and for i>8, is the number of PSFCHs with conflict information and a transmission priority i-8; or the UE can autonomously determine $N_{\text{Tx,PSFCH}}$ PSFCH transmissions in ascending order of priorities, to obtain $N_{\text{Tx,PSFCH}} \geq \max(1, \sum_{i=1}^{K} M_i)$ , where $M_i$ is the number of PSFCHs with a transmission priority i;

or, the number of target PSFCHs in the terminal device is 0, and the second transmission power of the target PSFCH in the terminal device is $P_{\text{PSFCH,k}}(i) = min(P_{\text{CMAX}} - 10log_{10}(N_{\text{Tx,PSFCH}}), P_{\text{PSFCH,k}}(i))$ [dBm], where $P_{\text{CMAX}}$ is the maximum transmit power of the UE determined for $N_{\text{Tx,PSFCH}}$ PSFCH transmissions according to [8-1, TS38.101-1].

Optionally, the UE can autonomously determine $N_{\text{max,PSFCH}}$ PSFCH transmissions in ascending order of priorities.

If $P_{\text{PSFCH,k}} + 10log_{10}(N_{\text{max,PSFCH}}) \leq P_{\text{CMAX}}$ , where $P_{\text{CMAX}}$ is the maximum transmit power of the UE determined for $N_{\text{max,PSFCH}}$ PSFCH transmissions according to [8-1, TS38.101-1], then $N_{\text{Tx,PSFCH}} = N_{\text{max,PSFCH}}$, and $P_{\text{PSFCH,k}}(i)$ remains unchanged. Otherwise, the UE autonomously determines $N_{\text{Tx,PSFCH}}$ PSFCH transmissions first in ascending order of priorities for PSFCH transmissions with HARQ-ACK information and then in ascending order of priorities for PSFCH transmissions with conflict information, to obtain $N_{\text{Tx,PSFCH}} \geq \max(1, \sum_{i=1}^{K} M_i)$, where $M_i$, which for $1 \leq i \leq 8$, is the number of PSFCHs with HARQ-ACK information and a transmission priority i, and for i>8, is the number of PSFCHs with conflict information and a transmission priority i-8; or the UE can autonomously determine $N_{\text{Tx,PSFCH}}$ PSFCH transmissions in ascending order of priorities, to obtain $N_{\text{Tx,PSFCH}} \geq \max(1, \sum_{i=1}^{K} M_i$ . $M_i$ is the number of PSFCHs with a transmission priority i; or, the number of target PSFCHs in the terminal device is 0, and the second transmission power of the target PSFCH in the terminal device is $P_{\text{PSFCH,k}}(i) = min(P_{\text{CMAX}} - 10log_{10}(N_{\text{Tx,PSFCH}}), P_{\text{PSFCH,k}})$ [dBm].

For resource pool j $(1 \leq j \leq N_{Rp})$, $N_{\text{Tx,PSFCH,j}}$ PSFCHs are PSFCHs located in resource pool j in $N_{\text{Tx,PSFCH}}$ PSFCHs, and $P_{\text{PSFCH,k,j}}(i)$ is a power of the PSFCH in the resource pool j. If dl-P0-PSFCH of the resource pool j is provided, then $P_{\text{PSFCH,one,j}} = P_{O,PSFCH,j} + 10\ log_{10}(2^\mu) + \alpha_{PSFCH,j} \cdot PL$ [dBm]. If the UE supports use of this parameter and the parameter is provided, $P_{O,PSFCH,j}$ is a value of dl-P0-PSFCH-r17 of the resource pool j; otherwise, it is a value of dl-P0-PSFCH-r16 of the resource pool j. Alternatively, if the UE supports use of this parameter and the parameter is provided, $P_{O,PSFCH,j}$ is a value of dl-P0-PSFCH of the resource pool j. If this parameter is provided, $\alpha_{PSFCH,j}$ is a value of dl-Alpha-PSFCH of the resource pool j; otherwise $\alpha_{PFSCH,j} = 1$. When an active SL BWP is in a serving cell c, $PL = PL_{b,f,c}(q_d)$.

In a case that the UE is configured to monitor the PDCCH to detect DCI format 0_0 in the serving cell c, the RS resource is a resource used by the UE to determine a power of PUSCH transmission scheduled by DCI format 0_0 in the serving cell c. In a case that the UE is not configured to monitor the PDCCH to detect the DCI format 0_0 in the serving cell c, the RS resource is a resource used by the UE to obtain a MIB corresponding to an SS/PBCH block.

If $P_{\text{PSFCH,k}}(i) + 10log_{10}(N_{\text{Tx,PSFCH,j}}) > P_{\text{CMAX,j}}$, where $P_{\text{CMAX,j}}$ is a maximum transmit power of the resource pool j determined based on sl-maxTransPower, $P2_{\text{PSFCH,k,j}}(i) = min (P_{\text{PSFCH,k}}(i), P_{\text{PSFCH,one,j}})$; otherwise, the UE may autonomously determine $N_{\text{Tx,PSFCH,j}}$ PSFCH transmissions first in ascending order of priorities for PSFCH transmissions with HARQ-ACK information and then in ascending order of priorities for PSFCH transmissions with conflict information; or the UE may autonomously determine $N_{\text{Tx,PSFCH,j}}$ PSFCH transmissions in ascending order of priorities, to obtain $P2_{\text{PSFCH,k}}(i) + 10log_{10}(N_{\text{Tx,PSFCH,j}}) \leq P_{\text{CMAX,j}}$ and $P_{\text{PSFCH,k,j}}(i) = \min \{P_{\text{CMAX,i1}} - 10log_{10}(N_{\text{Tx,PSFCH,j}}), P2_{\text{PSFCH,k}}(i)\}$, where $P_{\text{CMAX,j}}$ is the maximum transmit power of the resource pool j determined based on sl-maxTransPower.

If $P2_{\text{PSFCH,k}}(i) + 10log_{10}(N_{\text{Tx,PSFCH,j}}) \leq P_{\text{CMAX,j}}$, where $P_{\text{CMAX,j}}$ is a maximum transmit power of the resource pool j determined based on sl-maxTransPower, $P_{\text{PSFCH,k,j}}(i) = P2_{\text{PSFCH,k}}(i)$; otherwise, $N_{\text{Tx,PSFCH,j}}$ remains unchanged and $P_{\text{PSFCH,k,j}}(i)=P_{\text{PSFCH,k}}(i)$.

The UE updates $N_{\text{Tx,PSFCH}}$ PSFCHs in the terminal device to a sum of $N_{\text{Tx,PSFCH,j}}$ PSFCHs in resource pools, and the second transmission power $P_{\text{PSFCH,k}}(i)$ of the target PSFCH in the terminal device is a minimum value of the third transmission powers $P_{\text{PSFCH,k,j}}(i)$ of the target PSFCHs in the resource pools.

As another example:

for a plurality of resource pools configured with PSFCHs, or for a plurality of resource pools in which PSFCH resources overlap in time domain, values of second parameters configured by the higher layer for the plurality of resource pools are the same, or the second parameters for the plurality of resource pools are not configured by the higher layer; and/or

for a plurality of resource pools configured with PSFCHs, or for a plurality of resource pools in which PSFCH resources overlap in time domain, the terminal device expects the values of the second parameters for the plurality of resource pools to be the same or the plurality of resource pools are not configured with the second parameters.

The second parameter includes at least one of d1-P0-PSFCH, d1-P0-PSFCH-r17, dl-P0-PSFCH-r16, and dl-Alpha-PSFCH. The second parameters for the plurality of resource pools being the same includes: the values of the second parameters for the plurality of resource pools are the same or the second parameters of the plurality of resource pools are not configured by the higher layer. The second parameters for the plurality of resource pools being different includes: at least one resource pool is not configured with the second parameter and at least one resource pool is configured with the second parameter, and/or that values of second parameters configured for at least two resource pools are different.

One UE with $N_{\text{sch,Tx,PSFCH}}$ scheduled PSFCH transmissions and capable of transmitting a maximum of $N_{\text{max,PSFCH}}$ PSFCHs determines the number $N_{\text{Tx,PSFCH}}$ of PSFCHs simultaneously transmitted at a PSFCH transmission occasion i and a power $P_{\text{PSFCH,k}}(i)$ for PSFCH ($1 \leq k \leq N_{\text{Tx,PSFCH}}$) transmission k in the following manner:

If dl-P0-PSFCH is provided, $P_{\text{PSFCH,one}} = P_{\text{O,PSFCH}} + 10 \, log_{10}(2^{\mu}) + \alpha_{\text{PSFCH}} \cdot PL$ [dBm].

If $N_{\text{sch,Tx,PSFCH}} \leq N_{\text{max,PSFCH}}$, or if $P_{\text{PSFCH,one}} + 10log_{10}(N_{\text{sch,Tx,PSFCH}}) \leq P_{\text{CMAX}}$, where $P_{\text{CMAX}}$ is a maximum transmit power of the UE determined for $N_{\text{sch,Tx,PSFCH}}$ PSFCHs according to [8-1, TS38.101-1], the number of target PSFCHs in the terminal device is $N_{\text{Tx,PSFCH}} = N_{\text{sch,Tx,PSFCH}}$, and the second transmission power of the target PSFCH is $P_{\text{PSFCH,k}}(i) = P_{\text{PSFCH,one}}$ [dBm].

Otherwise, the UE autonomously determines $N_{\text{Tx,PSFCH}}$ PSFCH transmissions first in ascending order of priorities for PSFCH transmissions with HARQ-ACK information and then in ascending order of priorities for PSFCH transmissions with conflict information (if any), to obtain $N_{\text{Tx,PSFCH}} \geq \max(1, \sum_{i=1}^{K} M_i)$, where $M_i$, which for $1 \leq i \leq 8$, is the number of PSFCHs with HARQ-ACK information and a transmission priority i, and for i>8, is the number of PSFCHs with conflict information and a transmission priority i-8; or the UE autonomously determines $N_{\text{Tx,PSFCH}}$ PSFCH transmissions in ascending order of priorities, to obtain $N_{\text{Tx,PSFCH}} \geq \max(1, \sum_{i=1}^{K} M_i)$, where $M_i$ is the number of PSFCHs with a transmission priority i.

K is defined as follows:

a maximum value satisfying $P_{\text{PSFCH,one}} + 10log_{10}(\max(1, \sum_{i=1}^{K} M_i)) \leq P_{\text{CMAX}}$, where $P_{\text{CMAX}}$ is the maximum transmit power of the UE determined for all PSFCH transmissions in $\sum_{i=1}^{K} M_i$ according to [8-1, TS38.101-1].

To sum up, this embodiment of this application provides a sidelink transmission method. The terminal device can determine, based on the first transmission power, the N target physical sidelink feedback channels PSFCHs from the first set and/or the second transmission power of the target PSFCH, and perform sidelink transmission based on the N target PSFCHs and/or the second transmission power of the target PSFCH, to implement power control on PSFCHs transmitted simultaneously by the terminal device on multiple first objects, thereby ensuring that the total power of PSFCHs transmitted simultaneously by the terminal device does not exceed the maximum transmission power of the UE.

For the sidelink transmission method provided in this embodiment of this application, the execution subject may be a sidelink transmission apparatus. In embodiments of this application, the sidelink transmission method being performed by a sidelink transmission apparatus is used as an example for describing the sidelink transmission apparatus provided in the embodiments of this application.

In a second aspect, an embodiment of this application provides a sidelink transmission apparatus. Referring to FIG. 4, FIG. 4 is a structural block diagram of a sidelink transmission apparatus according to an embodiment of this application, where the apparatus may be applied to a terminal device. As shown in FIG. 4, the apparatus may specifically include:

a first determining module 401, configured to determine, based on a first transmission power, N target physical sidelink feedback channels PSFCHs from a first set and/or a second transmission power of the target PSFCH, where N is greater than or equal to 0; and
a first transmission module 402, configured to perform sidelink transmission based on the N target PSFCHs and/or the second transmission power of the target PSFCH.

The first set includes at least two PSFCHs that are predetermined by the terminal device to participate in sidelink transmission; the at least two PSFCHs are located on at least two first objects; and the first object is used to carry a PSFCH resource of the terminal device; and
the first transmission power includes at least one of the following:

a maximum transmission power of the terminal device; and
a maximum transmission power of the terminal device on the first object.

Optionally, before the determining, by a terminal device based on a first transmission power, N target physical sidelink feedback channels PSFCHs from a first set and/or a second transmission power of the target PSFCH, the method further includes:

receiving, by the terminal device, a physical sidelink shared channel PSSCH; and
determining, by the terminal device, the first set based on at least two PSFCHs corresponding to the PSSCH; where time-domain resources of the at least two PSFCHs are the same or overlapping.

Optionally, the first object includes at least one of the following:

a resource pool;
a resource block set; and
a carrier.

Optionally, the maximum transmission power of the terminal device includes at least one of the following:

a first power determined based on a first parameter; where the first parameter is used to indicate a transmission power threshold of the terminal device;
a power threshold specified in a protocol;
a power threshold configured by a network-side device and/or the terminal device; and
a power obtained by equally distributing the first power to the at least two first objects.

Optionally, the first parameter includes at least one of the following:

a maximum transmit power of the terminal device on the first object;
a maximum output power of the terminal device without considering an allowable deviation;
a maximum power reduction;
an additional maximum power reduction;
an additional allowable deviation;
a power management maximum power reduction; and
a maximum transmit power defined by a regulatory document.

Optionally, the first determining module includes:

a first determining sub-module, configured to determine one target first object from at least two first objects corresponding to the first set; and
a second determining sub-module, configured to determine, based on the first transmission power, the target PSFCH from PSFCHs located on the target first object in the first set and/or the second transmission power of the target PSFCH.

Optionally, the target first object includes at least one of the following:

a first object corresponding to a PSFCH with a highest priority in the first set;

a first object carrying the largest number of PSFCHs in the first set;

a first object with a largest identifier or index in the at least two first objects corresponding to the first set;

a first object with a smallest identifier or index in the at least two first objects corresponding to the first set;

a first object configured with a second parameter, where the second parameter is used to indicate information of path loss-based power control;

a first object not configured with the second parameter; and

a first object configured with the second parameter, where the second parameter meets a preset condition.

Optionally, the second parameter includes at least one of the following:

a basic operating point of transmit power for path loss-based power control; and

a path loss compensation factor.

Optionally, the first determining sub-module is specifically configured to:

in a case that the at least two first objects corresponding to the first set are configured with different second parameters, determine one target first object from the at least two first objects corresponding to the first set.

Optionally, the first determining module is specifically configured to:

in a case that the at least two first objects corresponding to the first set are configured with a same second parameter, or in a case that the at least two first objects corresponding to the first set are not configured with the second parameter, determine, based on the first transmission power, N target PSFCHs from the first set and/or the second transmission power of the target PSFCH.

Optionally, the first transmission power includes the maximum transmission power of the terminal device. The first determining module is specifically configured to:

correspondingly determine PSFCHs in the first set based on the number of PSSCHs requiring feedback and received on a PSSCH resource corresponding to a PSFCH resource, and determine N target PSFCHs from the first set.

Optionally, the first transmission power includes the maximum transmission power of the terminal device. The first determining module is specifically configured to:

determine N target PSFCHs from the first set based on first information.

The first information is used to indicate a filtering condition for the target PSFCH.

Optionally, a value of N is greater than or equal to a first threshold; the first threshold is a maximum natural number satisfying that a sum of the first-threshold number of second powers is less than or equal to the maximum transmission power of the terminal device; the second power is a power determined by the terminal device based on a second parameter; and the second parameter is used to indicate information of path loss-based power control.

Optionally, a value of N is less than or equal to a second threshold; and the second threshold is used to indicate a maximum number of PSFCH transmissions supportable simultaneously by the terminal device.

Optionally, the first determining module is specifically configured to:

determine a second transmission power of the target PSFCH in the first set based on second information.

The second information includes at least one of the following:

a second power, where the second power is a power determined by the terminal device based on second parameters of at least two first objects corresponding to the first set; and the second parameter is used to indicate information of path loss-based power control;

a third power, where the third power is a power determined by the terminal device based on the first transmission power and a second threshold; and the second threshold is used to indicate a maximum number of PSFCH transmissions supportable simultaneously by the terminal device; and

a fourth power, where the fourth power is a power obtained by evenly dividing the maximum transmission power of the terminal device to the N target PSFCHs.

Optionally, the second information includes the second power and/or the fourth power; and the determining a second transmission power of the target PSFCH in the first set based on second information includes:

determining the second power and/or the fourth power as the second transmission power of the target PSFCH in the first set.

Optionally, the second information includes the second power; and at least two first objects corresponding to the first set are configured with a same second parameter.

Optionally, the second information includes the second power; and the apparatus further includes:

a second determining module, configured to: in a case that the at least two first objects corresponding to the first set are configured with different second parameters, determine one target first object from the at least two first objects; and a third determining module, configured to determine a second power based on a second parameter of the target first object.

Optionally, the second information includes the second power and/or the third power; and the determining a second transmission power of the target PSFCH in the first set based on second information includes at least one of the following:

if the second power is greater than the third power, determining the third power as the second transmission power of the target PSFCH; and
if the second power is less than the third power, determining the second power as the second transmission power of the target PSFCH.

Optionally, the first determining module is specifically configured to:
in a case that a first condition is met, determine, based on the maximum transmission power of the terminal device, the N target PSFCHs from the first set and/or the second transmission power of the target PSFCH.
The first condition includes at least one of the following:

the number of PSFCHs included in the first set is less than or equal to a second threshold; where the second threshold is used to indicate a maximum number of PSFCH transmissions supportable simultaneously by the terminal device; and
the number of PSFCHs included in the first set is greater than the second threshold.

Optionally, the second threshold includes at least one of the following:

a maximum number of PSFCH transmissions supportable by the terminal device on a frequency band in which the first object is located;
a sum of the maximum numbers of PSFCH transmissions supportable by the terminal device on at least two frequency bands in which the first object is located;
a maximum value or minimum value of the maximum numbers of PSFCH transmissions supportable by the terminal device respectively on at least two frequency bands in which the first object is located;
a maximum number of PSFCH transmissions supportable by the terminal device as specified by a protocol; and
a maximum number of PSFCH transmissions supportable by the terminal device as configured by a network-side device or the terminal device.

Optionally, the apparatus further includes:
a fourth determining module, configured to update a third parameter based on a maximum transmission power of first objects corresponding to a second set.
The second set includes target PSFCHs of the terminal device; and the third parameter includes at least one of the following:

the target PSFCHs in the second set;
the second transmission power of the target PSFCH in the terminal device;
M target PSFCHs in the first object; and
a third transmission power of the target PSFCH in the first object.

Optionally, the third parameter includes the M target PSFCHs in the first object and/or a third transmission power of the target PSFCH in the first object. The first transmission module is specifically configured to:
perform sidelink transmission based on M target PSFCHs in each first object and/or the third transmission power of the target PSFCH in the first object.
Optionally, the fourth determining module is specifically configured to:

determine M target PSFCHs in each first object and/or a third transmission power of the target PSFCH in the first object based on a maximum transmission power of each first object corresponding to the second set; and
update target PSFCHs in the second set and/or the second transmission power of the target PSFCH in the terminal device based on the M target PSFCHs in each first object and/or the third transmission power of the target PSFCH in the first object.

The first transmission module is specifically configured to:
perform sidelink transmission based on an updated second set and/or the second transmission power.

Optionally, the updated second set includes M target PSFCHs in each first object corresponding to the second set.

Optionally, the updated second transmission power is a minimum value of third transmission powers of target PSFCHs in first objects corresponding to the second set, or the updated second transmission power is equal to the third transmission power.

Optionally, the M target PSFCHs include at least one of the following:

a target PSFCH located in the first object in the second set; and
a PSFCH determined by the terminal device from target PSFCHs located on the first object in the second set based on first information.

Optionally, the M target PSFCHs include a PSFCH that is determined by the terminal device from the target PSFCH located in the first object in the second set based on the first information; and a value of M is greater than or equal to a third threshold, and the third threshold is a maximum natural number satisfying that a sum of the third-threshold number of fifth powers is less than or equal to the maximum transmission power of the terminal device on the first object.

The fifth power includes at least one of the following:

a second power, where the second power is a power determined by the terminal device based on a second parameter, and the second parameter is used to indicate information of path loss-based power control;
the second transmission power of the target PSFCH in the terminal device; and
a sixth power.

The sixth power satisfies at least one of the following:

if the second transmission power is greater than a second power of the first object, the sixth power is equal to the second power; or
if the second transmission power is less than the second power of the first object, the sixth power is equal to the second transmission power.

Optionally, the M target PSFCHs include a PSFCH that is determined by the terminal device from the target PSFCH located in the first object in the second set based on the first information; and a value of M is greater than or equal to 1.

Optionally, the fourth determining module is specifically configured to:
determine the third transmission power of the target PSFCH in the first object based on third information.

The third information includes at least one of the following:

the second transmission power of the target PSFCH in the terminal device;
a second power of the first object, where the second power is determined by the terminal device based on a second parameter of the first object, and the second parameter is used to indicate information of path loss-based power control;
a sixth power; where the sixth power includes at least one of the following:

if the second transmission power is greater than a second power of the first object, the sixth power is equal to the second power; or
if the second transmission power is less than the second power of the first object, the sixth power is equal to the second transmission power; and
a seventh power, where the seventh power is a power obtained by evenly dividing the maximum transmission power of the terminal device on the first object to the M target PSFCHs of the first object.

Optionally, the third information includes at least one of the second transmission power of the target PSFCH in the terminal device, the second power of the first object, and the seventh power; and the determining the third transmission power of the target PSFCH in the first object based on third information includes:
determining a power value corresponding to the third information as the third transmission power of the target PSFCH in the first object.

Optionally, the third information includes the second transmission power and/or the second power of the first object; and the determining, for the terminal, the third transmission power of the target PSFCH in the first object based on third information includes at least one of the following:

if the second transmission power is greater than the second power of the first object, determining the second power of the first object as the third transmission power of the target PSFCH in the first object; or
if the second transmission power is less than the second power of the first object, determining the second transmission power as the third transmission power of the target PSFCH in the first object.

Optionally, the third information includes the sixth power and/or the seventh power; and the determining the third transmission power of the target PSFCH in the first object based on third information includes:

if the sixth power is greater than the seventh power, determining the seventh power as the third transmission power of the target PSFCH in the first object; or
if the sixth power is less than the seventh power, determining the sixth power as the third transmission power of the target PSFCH in the first object.

Optionally, the third information includes the seventh power; and the determining the third transmission power of the target PSFCH in the first object based on third information includes at least one of the following:
if the seventh power is less than a current value of the third transmission power, updating the third transmission power based on the seventh power.

Optionally, the third information includes the second power of the first object and/or the seventh power; and the determining the third transmission power of the target PSFCH in the first object based on third information includes:

if the seventh power is greater than the second power of the first object, determining the second power of the first object as the third transmission power of the target PSFCH in the first object; or
if the seventh power is less than the second power of the first object, determining the seventh power as the third transmission power of the target PSFCH in the first object.

Optionally, the fourth determining module is specifically configured to:
in a case that the second condition is met, update the M target PSFCHs in the first object and/or the third transmission power of the target PSFCH in the first object based on the maximum transmission power of each first object corresponding to the second set.
The second condition includes at least one of the following:

a sum of second transmission powers of target PSFCHs located on the first object in the second set is less than or equal to the maximum transmission power of the terminal device on the first object;
the sum of the second transmission powers of the target PSFCHs located on the first object in the second set is greater than the maximum transmission power of the terminal device on the first object;
a sum of sixth powers of the target PSFCHs located on the first object in the second set is less than or equal to the maximum transmission power of the terminal device on the first object;
the sum of the sixth powers of the target PSFCHs located on the first object in the second set is greater than the maximum transmission power of the terminal device on the first object;
a sum of second powers of the target PSFCHs located on the first object in the second set is less than or equal to the maximum transmission power of the terminal device on the first object;
the sum of the second powers of the target PSFCHs located on the first object in the second set is greater than the maximum transmission power of the terminal device on the first object;
path loss-based power control for PSFCHs is configured for the first object;
path loss-based power control for PSFCHs is not configured for the first object; and
path loss-based control for PSFCHs is not configured for the first object; and the sum of the second transmission powers of the target PSFCHs located on the first object in the second set is greater than the maximum transmission power of the terminal device on the first object.

Optionally, the first determining module is specifically configured to:
determine a fourth parameter based on the maximum transmission power of the terminal device.
The fourth parameter includes at least one of the following:

N target PSFCHs in the terminal device;
the second transmission power of the target PSFCH in the terminal device;
M target PSFCHs in first objects corresponding to the first set; and

a third transmission power of the target PSFCH in the first object.

Optionally, the fourth parameter includes the M target PSFCHs in the first objects corresponding to the first set and/or the third transmission power of the target PSFCH, and the apparatus further includes:

a fifth determining module, configured to determine N target PSFCHs in the terminal device and/or the second transmission power of the target PSFCH in the terminal device based on the M target PSFCHs in the first objects corresponding to the first set and/or the third transmission power of the target PSFCH.

The N target PSFCHs include the M target PSFCHs in the first objects corresponding to the first set.

The second transmission power of the target PSFCH in the terminal device includes at least one of the following:

a minimum value of third transmission powers of target PSFCHs in first objects corresponding to the first set; and the third transmission powers of the target PSFCHs in the first objects corresponding to the first set.

Optionally, the apparatus further includes:

a first processing module, configured to: in a case that the number N of target PSFCHs is less than or equal to a second threshold, keep, for the terminal device, the N target PSFCHs unchanged; where the second threshold is used to indicate a maximum number of PSFCH transmissions supportable simultaneously by the terminal device.

Optionally, the apparatus further includes:

a second processing module, configured to: in a case that the number N of target PSFCHs is greater than a second threshold, re-determine X target PSFCHs from the N target PSFCHs based on first information; where X is a positive integer less than N, and the first information is used to indicate a filtering condition for the target PSFCH.

Optionally, the N target PSFCHs in the terminal device include at least one of the following:

all PSFCHs in the first set;
a target PSFCH determined by the terminal device from the first set based on first information, where the first information is used to indicate a filtering condition for the target PSFCH;
a second-threshold number of PSFCHs, where the second threshold is used to indicate a maximum number of PSFCH transmissions supportable simultaneously by the terminal device; and
a target PSFCH that is determined by the terminal device from the second-threshold number of PSFCHs based on the first information.

Optionally, the N target PSFCHs include a target PSFCH that is determined by the terminal device from the first set or the second-threshold number of PSFCHs based on the first information; a value of N is greater than or equal to a fourth threshold, and the fourth threshold is a maximum natural number satisfying that a sum of Y second powers in each first object in which the first set or the second-threshold number of PSFCHs is located is less than or equal to the maximum transmission power of the terminal device; a second power of the first object is a power that is determined by the terminal device based on a second parameter of the first object; the second parameter is used to indicate information of path loss-based power control; and Y is the number of target PSFCHs located on the first object among the fourth-threshold number of target PSFCHs.

Optionally, the N target PSFCHs include the target PSFCHs that is determined by the terminal device from the first set based on the first information; and a value of N is greater than or equal to 1.

Optionally, the M target PSFCHs in the first objects corresponding to the first set include at least one of the following:

a PSFCH located in the first object in the first set;
a target PSFCH located in the first object in a third set, where the third set includes N target PSFCHs that are determined based on the first information by the terminal device from the first set;
a PSFCH located in the first object in a fourth set, where the fourth set includes a second-threshold number of PSFCHs, and the second threshold is used to indicate a maximum number of PSFCH transmissions supportable simultaneously by the terminal device;
a target PSFCH located in the first object among N target PSFCHs that are determined based on the first information by the terminal device from the fourth set;
M PSFCHs that are determined based on the first information by the terminal device from PSFCHs located on the first object in the first set;
a PSFCH in the fourth set;
M PSFCHs that are determined based on the first information by the terminal device from the fourth set;
a PSFCH in the fifth set, where the fifth set includes PSFCHs obtained by the terminal device by evenly dividing PSFCHs in the fourth set to first objects corresponding to the first set; and

M PSFCHs that are determined based on the first information by the terminal device from the fifth set.

Optionally, the determining a fourth parameter based on the maximum transmission power of the terminal device includes:

determining the third transmission power of the target PSFCH in the first object based on fourth information.

The fourth information includes at least one of the following:

a second power of the first object, where the second power is determined by the terminal device based on a second parameter of the first object, and the second parameter is used to indicate information of path loss-based power control;

a fourth power, where the fourth power is a power that is obtained by evenly dividing the maximum transmission power of the terminal device to the N target PSFCHs in the terminal device; and

an eighth power, where the eighth power is a power obtained by evenly dividing the maximum transmission power of the terminal device to M target PSFCHs in the first object.

Optionally, the determining the third transmission power of the target PSFCH in the first object based on fourth information includes:

determining a power value corresponding to the fourth information as the third transmission power of the target PSFCH in the first object.

Optionally, the fourth information includes the second power of the first object and/or the fourth power; and the determining the third transmission power of the target PSFCH in the first object based on fourth information includes at least one of the following:

if the second power of the first object is greater than the fourth power, determining the fourth power as the third transmission power of the target PSFCH in the first object; or

if the second power of the first object is less than the fourth power, determining the second power of the first object as the third transmission power of the target PSFCH in the first object.

Optionally, the fourth information includes the second power of the first object and/or the eighth power; and the determining the third transmission power of the target PSFCH in the first object based on fourth information includes at least one of the following:

if the second power of the first object is greater than the eighth power, determining the eighth power as the third transmission power of the target PSFCH in the first object; or

if the second power of the first object is less than the eighth power, determining the second power of the first object as the third transmission power of the target PSFCH in the first object.

Optionally, the determining a fourth parameter based on the maximum transmission power of the terminal device includes:

in a case that a third condition is met, determining M target PSFCHs in the first objects corresponding to the first set and/or the third transmission power of the target PSFCH in the first object based on the maximum transmission power of the terminal device.

The third condition includes at least one of the following:

the number of PSFCHs in the first set is less than or equal to the number of PSFCHs in a fourth set, where the fourth set includes a second-threshold number of PSFCHs, and the second threshold is used to indicate a maximum number of PSFCH transmissions supportable simultaneously by the terminal device;

a sum of ninth powers of first objects corresponding to the first set is less than or equal to the maximum transmission power of the terminal device, where the ninth power is a sum of second powers of PSFCHs located on the first object in the first set;

the sum of the ninth powers of the first objects corresponding to the first set is greater than or equal to the maximum transmission power of the terminal device;

the number of PSFCHs in the first set is greater than the number of PSFCHs in the fourth set;

a sum of tenth powers of first objects corresponding to the fourth set is less than or equal to the maximum transmission power of the terminal device, where the tenth power is a sum of second powers of PSFCHs located on the first object in the fourth set;

the sum of the tenth powers of the second objects corresponding to the fourth set is greater than the maximum transmission power of the terminal device;

the number of PSFCHs belonging to the first set in the first object is less than or equal to the number of PSFCHs in the fourth set;

the number of PSFCHs belonging to the first set in the first object is greater than the number of PSFCHs in the fourth set;

a sum of second powers of the PSFCHs belonging to the first set in the first object is less than or equal to the maximum transmission power of the terminal device;

the sum of the second powers of the PSFCHs belonging to the first set in the first object is greater than the maximum transmission power of the terminal device;

a sum of second powers of PSFCHs in the fourth set is less than or equal to the maximum transmission power of the terminal device;

the sum of the second powers of the PSFCHs in the fourth set is greater than the maximum transmission power of the terminal device;

the number of PSFCHs belonging to the first set in the first object is less than or equal to the number of PSFCHs in a fifth set, where the fifth set includes PSFCHs obtained by the terminal device by evenly dividing PSFCHs in the fourth set to first objects corresponding to the first set; and

the number of PSFCHs belonging to the first set in the first object is greater than the number of PSFCHs in the fifth set;

a sum of second powers of the PSFCHs in the fifth set is less than or equal to the maximum transmission power of the terminal device;

the sum of the second powers of the PSFCHs in the fifth set is greater than the maximum transmission power of the terminal device; and

path loss-based power control for PSFCHs is configured or not configured for the first object.

Optionally, the apparatus further includes:
a third processing module, configured to update a fourth parameter based on the maximum transmission power of the terminal device on the first object to obtain a fifth parameter.

The fifth parameter includes at least one of the following:

a second set, where the second set includes target PSFCHs in the terminal device;

the second transmission power of the target PSFCH in the terminal device;

target PSFCHs in first objects corresponding to the first set; and

the third transmission power of the target PSFCH in the first object.

Optionally, the second set includes at least one of the following:

the first set or target PSFCHs in each first object corresponding to the N target PSFCHs in the terminal device; and
N target PSFCHs in the terminal device.

Optionally, the second transmission power of the target PSFCH in the terminal device includes at least one of the following:

a minimum value of third transmission powers of target PSFCHs in the first objects corresponding to the first set or the N target PSFCHs in the terminal device; and

a second transmission power that is determined by the terminal device based on the maximum transmission power of the terminal device.

Optionally, the updating a fourth parameter based on the maximum transmission power of the terminal device on the first object to obtain a fifth parameter includes:

updating M target PSFCHs in the first object based on first information, where the first information is used to indicate a filtering condition for the target PSFCH; and/or

updating the third transmission power of the target PSFCH in the first object based on a seventh power; where the seventh power is a power obtained by evenly dividing the maximum transmission power of the terminal device on the first object to the M target PSFCHs of the first object.

Optionally, the updating the third transmission power of the target PSFCH in the first object based on a seventh power includes:
adjusting the third transmission power of the target PSFCH in the first object to the seventh power.

Optionally, the updating the third transmission power of the target PSFCH in the first object based on a seventh power includes at least one of the following:

if the seventh power is less than a current value of the third transmission power of the target PSFCH in the first object, adjusting the third transmission power of the target PSFCH to the seventh power; or

if the seventh power is greater than or equal to the current value of the third transmission power of the target PSFCH in the first object, keeping the third transmission power of the target PSFCH unchanged.

Optionally, the updating a fourth parameter based on the maximum transmission power of the terminal device on the first object to obtain a fifth parameter includes:

in a case that a fourth condition is met, updating M target PSFCHs of the first object and/or the third transmission power of the target PSFCH in the first object based on the maximum transmission power of the terminal device in the first object.

The fourth condition includes at least one of the following:

a sum of third transmission powers of the M target PSFCHs in the first object is greater than the maximum transmission power of the terminal device on the first object;

the sum of the third transmission powers of the M target PSFCHs in the first object is less than or equal to the maximum transmission power of the terminal device on the first object; and

path loss-based power control for PSFCHs is configured or not configured for the first object.

Optionally, the first determining module is specifically configured to:

determine M target PSFCHs in first objects corresponding to the first set and/or a third transmission power of the target PSFCH in the first object based on the maximum transmission power of the terminal device on the first object.

Optionally, the M target PSFCHs include at least one of the following:

a PSFCH located in the first object in the first set;

M PSFCHs that are determined based on first information by the terminal device from PSFCHs located on the first object in the first set, where the first information is used to indicate a filtering condition for the target PSFCH;

a PSFCH located in the first object in a fourth set, where the fourth set includes a second-threshold number of PSFCHs, and the second threshold is used to indicate a maximum number of PSFCH transmissions supportable simultaneously by the terminal device;

a PSFCH in the fourth set;

M PSFCHs that are determined based on the first information by the terminal device from the fourth set; and

M PSFCHs that are determined based on the first information by the terminal device from PSFCHs located on the first object in the fourth set.

Optionally, the determining M target PSFCHs in first objects corresponding to the first set and/or a third transmission power of the target PSFCH in the first object based on the maximum transmission power of the terminal device on the first object includes:

determining third transmission powers of the target PSFCHs in the first objects corresponding to the first set based on the fifth information.

The fifth information includes at least one of the following:

a second power of the first object, where the second power is determined by the terminal device based on a second parameter of the first object, and the second parameter is used to indicate information of path loss-based power control; and

a seventh power, where the seventh power is a power obtained by evenly dividing the maximum transmission power of the terminal device on the first object to the M target PSFCHs of the first object.

Optionally, the determining third transmission powers of the target PSFCHs in the first objects corresponding to the first set based on the fifth information includes:

determining a power value corresponding to the fifth information as the third transmission power of the target PSFCH in the first object.

Optionally, the fifth information includes the second power of the first object and/or the seventh power; and the determining third transmission powers of the target PSFCHs in the first objects corresponding to the first set based on the fifth information includes:

if the second power of the first object is greater than the seventh power, determining the seventh power as the third transmission power of the target PSFCH in the first object; or

if the second power of the first object is less than the seventh power, determining the second power of the first object as the third transmission power of the target PSFCH in the first object.

Optionally, the determining M target PSFCHs in first objects corresponding to the first set and/or a third transmission power of the target PSFCH in the first object based on the maximum transmission power of the terminal device on the first object includes:
in a case that a fifth condition is met, determining M target PSFCHs in the first objects corresponding to the first set and/or the third transmission power of the target PSFCH in the first object based on the maximum transmission power of the terminal device on the first object.

The fifth condition includes at least one of the following:

the number of PSFCHs located on the first object in the first set is less than or equal to the number of PSFCHs in a fourth set, where the fourth set includes a second-threshold number of PSFCHs;
the number of PSFCHs located on the first object in the first set is greater than the number of PSFCHs in the fourth set;
the number of PSFCHs in the first set is less than or equal to the number of PSFCHs in the fourth set;
the number of PSFCHs in the first set is greater than the number of PSFCHs in the fourth set;
a sum of second powers of PSFCHs belonging to the first set in the first object is less than or equal to the maximum transmission power of the terminal device on the first object;
the sum of the second powers of the PSFCHs belonging to the first set in the first object is greater than the maximum transmission power of the terminal device on the first object;
a sum of second powers of PSFCHs in a fourth set is less than or equal to the maximum transmission power of the terminal device on the first object;
the sum of the second powers of the PSFCHs in the fourth set is greater than the maximum transmission power of the terminal device on the first object;
a sum of second powers of PSFCHs located on the first object in the fourth set is less than or equal to the maximum transmission power of the terminal device on the first object;
the sum of the second powers of the PSFCHs located on the first object in the fourth set is greater than the maximum transmission power of the terminal device on the first object; and
path loss-based power control for PSFCHs is configured or not configured for the first object.

Optionally, the apparatus further includes:
a fourth processing module, configured to: determine the N target PSFCHs and/or the second transmission power of the target PSFCH in the terminal device based on the maximum transmission power of the terminal device.

Optionally, the N target PSFCHs include at least one of the following:

the M target PSFCHs in the first objects corresponding to the first set;
a PSFCH that is determined by the terminal device from the target PSFCHs in the objects based on first information, where the first information is used to indicate a filtering condition for the target PSFCH;
PSFCHs in a fourth set, where the fourth set includes PSFCH transmissions supportable simultaneously by the terminal device; and
PSFCHs that are determined based on the first information by the terminal device from the fourth set.

Optionally, the determining the N target PSFCHs and/or the second transmission power of the target PSFCH in the terminal device based on the maximum transmission power of the terminal device includes:
determining the second transmission power of the target PSFCH in the terminal device based on sixth information.

The sixth information includes at least one of the following:

a fourth power, where the fourth power is a power obtained by evenly dividing the maximum transmission power of the terminal device to the N target PSFCHs; and
an eleventh power, where the eleventh power is a minimum value of third transmission powers of target PSFCHs in the first objects corresponding to the first set; or the eleventh power is the third transmission powers of the target PSFCHs in the first objects corresponding to the first set.

Optionally, the determining the second transmission power of the target PSFCH in the terminal device based on sixth information includes at least one of the following:

if the fourth power is greater than the eleventh power, determining the eleventh power as the second transmission power of the target PSFCH in the terminal device; or

if the fourth power is less than the eleventh power, determining the fourth power as the second transmission power of the target PSFCH in the terminal device.

Optionally, the determining the second transmission power of the target PSFCH in the terminal device based on sixth information includes:
determining the eleventh power as the second transmission power of the target PSFCH in the terminal device.

Optionally, the determining the N target PSFCHs and/or the second transmission power of the target PSFCH in the terminal device based on the maximum transmission power of the terminal device includes:
in a case that a sixth condition is met, determining the N target PSFCHs and/or the second transmission power of the target PSFCH in the terminal device based on the maximum transmission power of the terminal device.

The sixth condition includes at least one of the following:

a sum of the number of target PSFCHs in the first objects corresponding to the first set is less than or equal to a second threshold, where the second threshold is used to indicate a maximum number of PSFCH transmissions supportable by the terminal device;
the sum of the number of target PSFCHs in the first objects corresponding to the first set is greater than the second threshold;
a sum of twelfth powers of the first objects corresponding to the first set is less than or equal to the maximum transmission power of the terminal device, where the twelfth power is a sum of eleventh powers of the target PSFCHs in the first object; and the eleventh power is a minimum value of third transmission powers of target PSFCHs in the first objects corresponding to the first set or the eleventh power is the third transmission powers of the target PSFCHs in the first objects corresponding to the first set;
the sum of the twelfth powers of the first objects corresponding to the first set is greater than the maximum transmission power of the terminal device;
a sum of eleventh powers of PSFCHs in the fourth set is less than or equal to the maximum transmission power of the terminal device; and
the sum of the eleventh powers of the PSFCHs in the fourth set is greater than the maximum transmission power of the terminal device.

Optionally, the first determining module is specifically configured to:

determine N1 PSFCHs in the terminal device and/or a fourth transmission power of the PSFCH from the first set based on the maximum transmission power of the terminal device, where N1 is a positive integer;
determine M1 PSFCHs in first objects corresponding to the first set and/or a fifth transmission power of the PSFCH based on a maximum transmission power of the terminal device on the first objects, where M1 is a positive integer;
if the fourth transmission power is less than or equal to a sixth transmission power, determine the N1 PSFCHs as the target PSFCHs in the terminal device, and/or determining the fourth transmission power as the second transmission power of the target PSFCH in the terminal device, where the sixth transmission power is a minimum value of fifth transmission powers of the M1 PSFCHs; and
if the fourth transmission power is greater than the sixth transmission power, determine the M1 PSFCHs in the first objects as the target PSFCHs in the terminal device, and/or determining the sixth transmission power as the second transmission power of the target PSFCH in the terminal device.

Optionally, the first determining module is specifically configured to:

determine M2 PSFCHs in first objects corresponding to the first set and/or a seventh transmission power of the PSFCH based on the maximum transmission power of the terminal device;
determine M3 PSFCHs in the first objects corresponding to the first set and/or an eighth transmission power of the PSFCH based on a maximum transmission power of the terminal device on the first objects;
if a ninth transmission power is less than or equal to a tenth transmission power, determine a PSFCH in a sixth set as the target PSFCH in the terminal device, and/or determine the ninth transmission power as the second transmission power of the target PSFCH; where the ninth transmission power is a minimum value of seventh transmission powers of M2 PSFCHs, the tenth transmission power is a minimum value of eighth transmission powers of M3 PSFCHs, and the sixth set includes M2 PSFCHs in the first objects corresponding to the first set; and
if the ninth transmission power is greater than the tenth transmission power, determine a PSFCH in a seventh set as the target PSFCH in the terminal device, and/or determine the tenth transmission power as the second transmission power of the target PSFCH, where the seventh set includes M3 PSFCHs in the first objects corresponding to the first set.

Optionally, the first information includes at least one of the following:

priorities of PSFCHs in the first set;
priorities of first objects corresponding to the first set;
identifiers or indices of the first objects corresponding to the first set; and
bearer information of the PSFCHs in the first set.

The sidelink transmission apparatus in this embodiment of this application may be an electronic device, such as an electronic device with an operating system, or a component in the electronic device, such as an integrated circuit or a chip. The electronic device may be a terminal device. For example, the terminal device may include but is not limited to the foregoing types of the terminal device 11.

The sidelink transmission apparatus provided in this embodiment of this application can implement the processes implemented in the method embodiments in FIG. 3, with the same technical effects achieved. To avoid repetition, details are not described herein again.

Optionally, as shown in FIG. 5, an embodiment of this application further provides a communication device 900, including a processor 901 and a memory 902. A program or instructions capable of running on the processor 901 are stored in the memory 902. For example, when the communication device 900 is a terminal device and when the program or the instructions are executed by the processor 901, the steps of the foregoing embodiments of the sidelink transmission method according to the first aspect are implemented, with the same technical effects achieved. To avoid repetition, details are not described herein again.

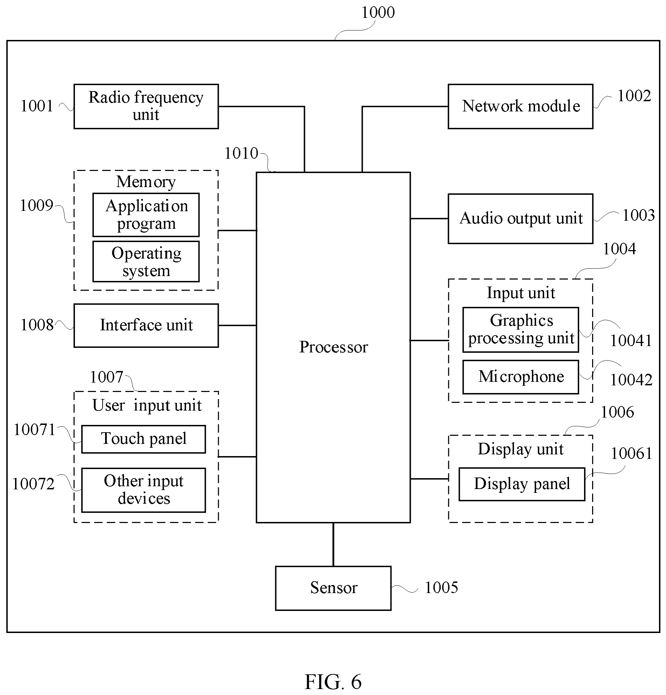

As shown in FIG. 6, FIG. 6 is a schematic diagram of a hardware structure of a terminal device for implementing an embodiment of this application.

The terminal device 1000 includes but is not limited to at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal device 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal device shown in FIG. 6 does not constitute any limitation on the terminal device. The terminal device may include more or fewer components than shown in the figure, or a combination of some components, or the components disposed differently. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, and the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a joystick, and the like. Details are not described herein.

In this embodiment of this application, after receiving downlink data from a network-side device, the radio frequency unit 1001 sends the downlink data to the processor 1010 for processing; and the radio frequency unit 1001 also sends uplink data to the network-side device. Generally, the radio frequency unit 1001 includes, but is not limited to, an antenna, an amplifier, a transceiver, a coupler, a low noise amplifier, a duplexer, and the like.

The memory 1009 may be configured to store software programs or instructions and various data. The memory 1009 may mainly include a first storage area for storing programs or instructions and a second storage area for storing data, where the first storage area may store an operating system, an application program or instructions required by at least one function (for example, an audio playing function and an image playing function), and the like. In addition, the memory 1009 may be a volatile memory or a non-volatile memory, or the memory 1009 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 described in this embodiment this application includes but is not limited to these and any other appropriate types of memories.

The processor 1010 may include one or more processing units. Optionally, the processor 1010 integrates an application processor and a modem processor. The application processor mainly processes operations related to an operating system, a user interface, an application program, and the like. The modem processor mainly processes wireless communication signals, for example, a baseband processor. It can be understood that the modem processor may alternatively be not integrated in the processor 1010.

Specifically, the terminal device determines, based on a first transmission power, N target physical sidelink feedback channels PSFCHs from a first set and/or a second transmission power of the target PSFCH, where N is greater than or equal to 0.

The terminal device performs sidelink transmission based on the N target PSFCHs and/or the second transmission power of the target PSFCH.

The first set includes at least two PSFCHs that are predetermined by the terminal device to participate in sidelink transmission; the at least two PSFCHs are located on at least two first objects; and the first object is used to carry a PSFCH resource of the terminal device.

The first transmission power includes at least one of the following:

a maximum transmission power of the terminal device; and
a maximum transmission power of the terminal device on the first object.

Optionally, before the determining, by a terminal device based on a first transmission power, N target physical sidelink feedback channels PSFCHs from a first set and/or a second transmission power of the target PSFCH, the method further includes:

receiving, by the terminal device, a physical sidelink shared channel PSSCH; and
determining, by the terminal device, the first set based on at least two PSFCHs corresponding to the PSSCH; where time-domain resources of the at least two PSFCHs are the same or overlapping.

Optionally, the first object includes at least one of the following:

a resource pool;
a resource block set; and
a carrier.

Optionally, the maximum transmission power of the terminal device includes at least one of the following:

a first power determined based on a first parameter; where the first parameter is used to indicate a transmission power threshold of the terminal device;
a power threshold specified in a protocol;
a power threshold configured by a network-side device and/or the terminal device; and
a power obtained by equally distributing the first power to the at least two first objects.

Optionally, the first parameter includes at least one of the following:

a maximum transmit power of the terminal device on the first object;
a maximum output power of the terminal device without considering an allowable deviation;
a maximum power reduction;
an additional maximum power reduction;
an additional allowable deviation;
a power management maximum power reduction; and
a maximum transmit power defined by a regulatory document.

Optionally, that the terminal device determines, based on the first transmission power, the N target physical sidelink feedback channels PSFCHs from the first set and/or the second transmission power of the target PSFCH includes:

determining, by the terminal device, one target first object from at least two first objects corresponding to the first set; and
determining, by the terminal device, based on the first transmission power, the target PSFCH from PSFCHs located on the target first object in the first set and/or the second transmission power of the target PSFCH.

Optionally, the target first object includes at least one of the following:

a first object corresponding to a PSFCH with a highest priority in the first set;
a first object carrying the largest number of PSFCHs in the first set;
a first object with a largest identifier or index in the at least two first objects corresponding to the first set;
a first object with a smallest identifier or index in the at least two first objects corresponding to the first set;
a first object configured with a second parameter, where the second parameter is used to indicate information of path loss-based power control;
a first object not configured with the second parameter; and
a first object configured with the second parameter, where the second parameter meets a preset condition.

Optionally, the second parameter includes at least one of the following:

a basic operating point of transmit power for path loss-based power control; and
a path loss compensation factor.

Optionally, the determining, by the terminal device, one target first object from at least two first objects corresponding to the first set includes:
in a case that the at least two first objects corresponding to the first set are configured with different second parameters, determining, by the terminal device, one target first object from the at least two first objects corresponding to the first set.

Optionally, that the terminal device determines, based on the first transmission power, the N target physical sidelink feedback channels PSFCHs from the first set and/or the second transmission power of the target PSFCH includes:
in a case that the at least two first objects corresponding to the first set are configured with a same second parameter, or in a case that the at least two first objects corresponding to the first set are not configured with the second parameter, determining, by the terminal device based on the first transmission power, N target PSFCHs from the first set and/or the second transmission power of the target PSFCH.

Optionally, the first transmission power includes the maximum transmission power of the terminal device; and the determining, by a terminal device based on a first transmission power, N target physical sidelink feedback channels PSFCHs from a first set and/or a second transmission power of the target PSFCH includes:
correspondingly determining, by the terminal device, PSFCHs in the first set based on the number of PSSCHs requiring feedback and received on a PSSCH resource corresponding to a PSFCH resource, and determining N target PSFCHs from the first set.

Optionally, the first transmission power includes the maximum transmission power of the terminal device; and the determining, by a terminal device based on a first transmission power, N target physical sidelink feedback channels PSFCHs from a first set and/or a second transmission power of the target PSFCH includes:
determining, by the terminal device, N target PSFCHs from the first set based on first information.

The first information is used to indicate a filtering condition for the target PSFCH.

Optionally, a value of N is greater than or equal to a first threshold; the first threshold is a maximum natural number satisfying that a sum of the first-threshold number of second powers is less than or equal to the maximum transmission power of the terminal device; the second power is a power determined by the terminal device based on a second parameter; and the second parameter is used to indicate information of path loss-based power control.

Optionally, a value of N is less than or equal to a second threshold; and the second threshold is used to indicate a maximum number of PSFCH transmissions supportable simultaneously by the terminal device.

Optionally, that the terminal device determines, based on the first transmission power, the N target physical sidelink feedback channels PSFCHs from the first set and/or the second transmission power of the target PSFCH includes:
determining, by the terminal device, a second transmission power of the target PSFCH in the first set based on second information.

The second information includes at least one of the following:

a second power, where the second power is a power determined by the terminal device based on second parameters of at least two first objects corresponding to the first set; and the second parameter is used to indicate information of path loss-based power control;
a third power, where the third power is a power determined by the terminal device based on the first transmission power and a second threshold; and the second threshold is used to indicate a maximum number of PSFCH transmissions supportable simultaneously by the terminal device; and
a fourth power, where the fourth power is a power obtained by evenly dividing the maximum transmission power of the terminal device to the N target PSFCHs.

Optionally, the second information includes the second power and/or the fourth power; and the determining, by the terminal device, a second transmission power of the target PSFCH in the first set based on second information includes:
determining, by the terminal device, the second power and/or the fourth power as the second transmission power of the target PSFCH in the first set.

Optionally, the second information includes the second power; and at least two first objects corresponding to the first set are configured with a same second parameter.

Optionally, the second information includes the second power; and before the determining, by the terminal device, the second power and/or the fourth power as the second transmission power of the target PSFCH in the first set, the method further includes:

in a case that the at least two first objects corresponding to the first set are configured with different second parameters, determining, by the terminal device, one target first object from the at least two first objects; and determining, by the terminal device, a second power based on a second parameter of the target first object.

Optionally, the second information includes the second power and/or the third power; and the determining, by the terminal device, a second transmission power of the target PSFCH in the first set based on second information includes at least one of the following:

if the second power is greater than the third power, determining, by the terminal device, the third power as the second transmission power of the target PSFCH; and
if the second power is less than the third power, determining, by the terminal device, the second power as the second transmission power of the target PSFCH.

Optionally, that the terminal device determines, based on the first transmission power, the N target physical sidelink feedback channels PSFCHs from the first set and/or the second transmission power of the target PSFCH includes:
in a case that a first condition is met, determining, by the terminal device, the N target PSFCHs from the first set and/or the second transmission power of the target PSFCH based on the maximum transmission power of the terminal device.

The first condition includes at least one of the following:

the number of PSFCHs included in the first set is less than or equal to a second threshold; where the second threshold is used to indicate a maximum number of PSFCH transmissions supportable simultaneously by the terminal device; and
the number of PSFCHs included in the first set is greater than the second threshold.

Optionally, the second threshold includes at least one of the following:

a maximum number of PSFCH transmissions supportable by the terminal device on a frequency band in which the first object is located;
a sum of the maximum numbers of PSFCH transmissions supportable by the terminal device on at least two frequency bands in which the first object is located;
a maximum value or minimum value of the maximum numbers of PSFCH transmissions supportable by the terminal device respectively on at least two frequency bands in which the first object is located;
a maximum number of PSFCH transmissions supportable by the terminal device as specified by a protocol; and
a maximum number of PSFCH transmissions supportable by the terminal device as configured by a network-side device or the terminal device.

Optionally, the method further includes:
updating, by the terminal device, a third parameter based on a maximum transmission power of first objects corresponding to a second set.

The second set includes target PSFCHs of the terminal device; and the third parameter includes at least one of the following:

the target PSFCHs in the second set;
the second transmission power of the target PSFCH in the terminal device;
M target PSFCHs in the first object; and

a third transmission power of the target PSFCH in the first object.

Optionally, the third parameter includes the M target PSFCHs in the first object and/or a third transmission power of the target PSFCH in the first object; and the performing, by the terminal device, sidelink transmission based on the N target PSFCHs and/or the second transmission power of the target PSFCH includes:
performing, by the terminal device, sidelink transmission based on M target PSFCHs in each first object and/or the third transmission power of the target PSFCH in the first object.

Optionally, the updating, by the terminal device, a third parameter based on a maximum transmission power of first objects corresponding to a second set includes:

determining, by the terminal device, M target PSFCHs in each first object and/or a third transmission power of the target PSFCH in the first object based on a maximum transmission power of each first object corresponding to the second set; and

updating, by the terminal device, target PSFCHs in the second set and/or the second transmission power of the target PSFCH in the terminal device based on the M target PSFCHs in each first object and/or the third transmission power of the target PSFCH in the first object; and

the performing, by the terminal device, sidelink transmission based on the N target PSFCHs and/or the second transmission power of the target PSFCH includes:

performing, by the terminal device, sidelink transmission based on an updated second set and/or the second transmission power.

Optionally, the updated second set includes M target PSFCHs in each first object corresponding to the second set.

Optionally, the updated second transmission power is a minimum value of third transmission powers of target PSFCHs in first objects corresponding to the second set, or the updated second transmission power is equal to the third transmission power.

Optionally, the M target PSFCHs include at least one of the following:

a target PSFCH located in the first object in the second set; and

a PSFCH determined by the terminal device from target PSFCHs located on the first object in the second set based on first information.

Optionally, the M target PSFCHs include a PSFCH that is determined by the terminal device from the target PSFCH located in the first object in the second set based on the first information; and a value of M is greater than or equal to a third threshold, and the third threshold is a maximum natural number satisfying that a sum of the third-threshold number of fifth powers is less than or equal to the maximum transmission power of the terminal device on the first object.

The fifth power includes at least one of the following:

a second power, where the second power is a power determined by the terminal device based on a second parameter, and the second parameter is used to indicate information of path loss-based power control;

the second transmission power of the target PSFCH in the terminal device; and

a sixth power.

The sixth power satisfies at least one of the following:

if the second transmission power is greater than a second power of the first object, the sixth power is equal to the second power; or

if the second transmission power is less than the second power of the first object, the sixth power is equal to the second transmission power.

Optionally, the M target PSFCHs include a PSFCH that is determined by the terminal device from the target PSFCH located in the first object in the second set based on the first information; and a value of M is greater than or equal to 1.

Optionally, the updating, by the terminal device, a third parameter based on a maximum transmission power of first objects corresponding to a second set includes:
determining, by the terminal device, the third transmission power of the target PSFCH in the first object based on third information.

The third information includes at least one of the following:

the second transmission power of the target PSFCH in the terminal device;

a second power of the first object, where the second power is determined by the terminal device based on a second parameter of the first object, and the second parameter is used to indicate information of path loss-based power control;

a sixth power; where the sixth power includes at least one of the following:

if the second transmission power is greater than a second power of the first object, the sixth power is equal to the second power; or

if the second transmission power is less than the second power of the first object, the sixth power is equal to the second transmission power; and

a seventh power, where the seventh power is a power obtained by evenly dividing the maximum transmission power of the terminal device on the first object to the M target PSFCHs of the first object.

Optionally, the third information includes at least one of the second transmission power of the target PSFCH in the terminal device, the second power of the first object, and the seventh power; and the determining, by the terminal device, the third transmission power of the target PSFCH in the first object based on third information includes:
determining, by the terminal device, a power value corresponding to the third information as the third transmission power of the target PSFCH in the first object.

Optionally, the third information includes the second transmission power and/or the second power of the first object; and the determining, by the terminal device, the third transmission power of the target PSFCH in the first object based on third information includes at least one of the following:

if the second transmission power is greater than the second power of the first object, determining, by the terminal device, the second power of the first object as the third transmission power of the target PSFCH in the first object; or

if the second transmission power is less than the second power of the first object, determining, by the terminal device, the second transmission power as the third transmission power of the target PSFCH in the first object.

Optionally, the third information includes the sixth power and/or the seventh power; and the determining, by the terminal device, the third transmission power of the target PSFCH in the first object based on third information includes:

if the sixth power is greater than the seventh power, determining, by the terminal device, the seventh power as the third transmission power of the target PSFCH in the first object; or

if the sixth power is less than the seventh power, determining, by the terminal device, the sixth power as the third transmission power of the target PSFCH in the first object.

Optionally, the third information includes the seventh power; and the determining, by the terminal device, the third transmission power of the target PSFCH in the first object based on third information includes at least one of the following:
if the seventh power is less than a current value of the third transmission power, updating, by the terminal device, the third transmission power based on the seventh power.

Optionally, the third information includes the second power of the first object and/or the seventh power; and the determining, by the terminal device, the third transmission power of the target PSFCH in the first object based on third information includes:

if the seventh power is greater than the second power of the first object, determining, by the terminal device, the second power of the first object as the third transmission power of the target PSFCH in the first object; or

if the seventh power is less than the second power of the first object, determining, by the terminal device, the seventh power as the third transmission power of the target PSFCH in the first object.

Optionally, the updating, by the terminal device, a third parameter based on a maximum transmission power of first objects corresponding to a second set includes:
in a case that the second condition is met, updating, by the terminal device, the M target PSFCHs in the first object and/or the third transmission power of the target PSFCH in the first object based on the maximum transmission power of each first object corresponding to the second set.

The second condition includes at least one of the following:

a sum of second transmission powers of target PSFCHs located on the first object in the second set is less than or equal to the maximum transmission power of the terminal device on the first object;

the sum of the second transmission powers of the target PSFCHs located on the first object in the second set is greater than the maximum transmission power of the terminal device on the first object;

a sum of sixth powers of the target PSFCHs located on the first object in the second set is less than or equal to the maximum transmission power of the terminal device on the first object;

the sum of the sixth powers of the target PSFCHs located on the first object in the second set is greater than the maximum transmission power of the terminal device on the first object;

a sum of second powers of the target PSFCHs located on the first object in the second set is less than or equal to the maximum transmission power of the terminal device on the first object;

the sum of the second powers of the target PSFCHs located on the first object in the second set is greater than the maximum transmission power of the terminal device on the first object;

path loss-based power control for PSFCHs is configured for the first object;

path loss-based power control for PSFCHs is not configured for the first object; and

path loss-based control for PSFCHs is not configured for the first object; and the sum of the second transmission powers of the target PSFCHs located on the first object in the second set is greater than the maximum transmission power of the terminal device on the first object.

Optionally, that the terminal device determines, based on the first transmission power, the N target physical sidelink feedback channels PSFCHs from the first set and/or the second transmission power of the target PSFCH includes: determining, by the terminal device, a fourth parameter based on the maximum transmission power of the terminal device.

The fourth parameter includes at least one of the following:

N target PSFCHs in the terminal device;

the second transmission power of the target PSFCH in the terminal device;

M target PSFCHs in first objects corresponding to the first set; and

a third transmission power of the target PSFCH in the first object.

Optionally, the fourth parameter includes the M target PSFCHs in first objects corresponding to the first set and/or the third transmission power of the target PSFCH, and the method further includes: determining, by the terminal device, N target PSFCHs in the terminal device and/or the second transmission power of the target PSFCH in the terminal device based on the M target PSFCHs in the first objects corresponding to the first set and/or the third transmission power of the target PSFCH.

The N target PSFCHs include the M target PSFCHs in the first objects corresponding to the first set.

The second transmission power of the target PSFCH in the terminal device includes at least one of the following:

a minimum value of third transmission powers of target PSFCHs in first objects corresponding to the first set; and

the third transmission powers of the target PSFCHs in the first objects corresponding to the first set.

Optionally, the method further includes:

in a case that the number N of target PSFCHs is less than or equal to a second threshold, keeping, by the terminal device, the N target PSFCHs unchanged; where the second threshold is used to indicate a maximum number of PSFCH transmissions supportable simultaneously by the terminal device.

Optionally, the method further includes:

in a case that the number N of target PSFCHs is greater than a second threshold, re-determining, by the terminal device, X target PSFCHs from the N target PSFCHs based on first information; where X is a positive integer less than N, and the first information is used to indicate a filtering condition for the target PSFCH.

Optionally, the N target PSFCHs in the terminal device include at least one of the following:

all PSFCHs in the first set;

a target PSFCH determined by the terminal device from the first set based on first information, where the first information is used to indicate a filtering condition for the target PSFCH;

a second-threshold number of PSFCHs, where the second threshold is used to indicate a maximum number of PSFCH transmissions supportable simultaneously by the terminal device; and

a target PSFCH that is determined by the terminal device from the second-threshold number of PSFCHs based on the first information.

Optionally, the N target PSFCHs include a target PSFCH that is determined by the terminal device from the first set or the second-threshold number of PSFCHs based on the first information; a value of N is greater than or equal to a fourth threshold, and the fourth threshold is a maximum natural number satisfying that a sum of Y second powers in each first object in which the first set or the second-threshold number of PSFCHs is located is less than or equal to the maximum transmission power of the terminal device; a second power of the first object is a power that is determined by the terminal device based on a second parameter of the first object; the second parameter is used to indicate information of path loss-based power control; and Y is the number of target PSFCHs located on the first object among the fourth-threshold number of target PSFCHs.

Optionally, the N target PSFCHs include the target PSFCHs that is determined by the terminal device from the first set based on the first information; and a value of N is greater than or equal to 1.

Optionally, the M target PSFCHs in the first objects corresponding to the first set include at least one of the following:

a PSFCH located in the first object in the first set;

a target PSFCH located in the first object in a third set, where the third set includes N target PSFCHs that are determined based on the first information by the terminal device from the first set;

a PSFCH located in the first object in a fourth set, where the fourth set includes a second-threshold number of PSFCHs, and the second threshold is used to indicate a maximum number of PSFCH transmissions supportable simultaneously by the terminal device;

a target PSFCH located in the first object among N target PSFCHs that are determined based on the first information by the terminal device from the fourth set;

M PSFCHs that are determined based on the first information by the terminal device from PSFCHs located on the first object in the first set;

a PSFCH in the fourth set;

M PSFCHs that are determined based on the first information by the terminal device from the fourth set;

a PSFCH in the fifth set, where the fifth set includes PSFCHs obtained by the terminal device by evenly dividing PSFCHs in the fourth set to first objects corresponding to the first set; and

M PSFCHs that are determined based on the first information by the terminal device from the fifth set.

Optionally, the determining, by the terminal device, a fourth parameter based on the maximum transmission power of the terminal device includes:

determining, by the terminal device, the third transmission power of the target PSFCH in the first object based on fourth information.

The fourth information includes at least one of the following:

a second power of the first object, where the second power is determined by the terminal device based on a second parameter of the first object, and the second parameter is used to indicate information of path loss-based power control;

a fourth power, where the fourth power is a power that is obtained by evenly dividing the maximum transmission power of the terminal device to the N target PSFCHs in the terminal device; and

an eighth power, where the eighth power is a power obtained by evenly dividing the maximum transmission power of the terminal device to M target PSFCHs in the first object.

Optionally, the determining, by the terminal device, the third transmission power of the target PSFCH in the first object based on fourth information includes:

determining, by the terminal device, a power value corresponding to the fourth information as the third transmission power of the target PSFCH in the first object.

Optionally, the fourth information includes the second power of the first object and/or the fourth power; and the determining, by the terminal device, the third transmission power of the target PSFCH in the first object based on fourth information includes at least one of the following:

if the second power of the first object is greater than the fourth power, determining, by the terminal device, the fourth power as the third transmission power of the target PSFCH in the first object; or

if the second power of the first object is less than the fourth power, determining, by the terminal device, the second power of the first object as the third transmission power of the target PSFCH in the first object.

Optionally, the fourth information includes the second power of the first object and/or the eighth power; and the determining, by the terminal device, the third transmission power of the target PSFCH in the first object based on fourth information includes at least one of the following:

if the second power of the first object is greater than the eighth power, determining, by the terminal device, the eighth power as the third transmission power of the target PSFCH in the first object; or

if the second power of the first object is less than the eighth power, determining, by the terminal device, the second power of the first object as the third transmission power of the target PSFCH in the first object.

Optionally, the determining, by the terminal device, a fourth parameter based on the maximum transmission power of the terminal device includes:

in a case that a third condition is met, determining, by the terminal device, M target PSFCHs in the first objects corresponding to the first set and/or the third transmission power of the target PSFCH in the first object based on the maximum transmission power of the terminal device.

The third condition includes at least one of the following:

the number of PSFCHs in the first set is less than or equal to the number of PSFCHs in a fourth set, where the fourth set includes a second-threshold number of PSFCHs, and the second threshold is used to indicate a maximum number of PSFCH transmissions supportable simultaneously by the terminal device;

a sum of ninth powers of first objects corresponding to the first set is less than or equal to the maximum transmission power of the terminal device, where the ninth power is a sum of second powers of PSFCHs located on the first object in the first set;

the sum of the ninth powers of the first objects corresponding to the first set is greater than or equal to the maximum transmission power of the terminal device;

the number of PSFCHs in the first set is greater than the number of PSFCHs in the fourth set;

a sum of tenth powers of first objects corresponding to the fourth set is less than or equal to the maximum transmission power of the terminal device, where the tenth power is a sum of second powers of PSFCHs located on the first object in the fourth set;

the sum of the tenth powers of the second objects corresponding to the fourth set is greater than the maximum transmission power of the terminal device;

the number of PSFCHs belonging to the first set in the first object is less than or equal to the number of PSFCHs in the fourth set;

the number of PSFCHs belonging to the first set in the first object is greater than the number of PSFCHs in the fourth set;

a sum of second powers of the PSFCHs belonging to the first set in the first object is less than or equal to the maximum transmission power of the terminal device;

the sum of the second powers of the PSFCHs belonging to the first set in the first object is greater than the maximum transmission power of the terminal device;

a sum of second powers of PSFCHs in the fourth set is less than or equal to the maximum transmission power of the terminal device;

the sum of the second powers of the PSFCHs in the fourth set is greater than the maximum transmission power of the terminal device;

the number of PSFCHs belonging to the first set in the first object is less than or equal to the number of PSFCHs in a fifth set, where the fifth set includes PSFCHs obtained by the terminal device by evenly dividing PSFCHs in the fourth set to first objects corresponding to the first set; and

the number of PSFCHs belonging to the first set in the first object is greater than the number of PSFCHs in the fifth set;

a sum of second powers of the PSFCHs in the fifth set is less than or equal to the maximum transmission power of the terminal device;

the sum of the second powers of the PSFCHs in the fifth set is greater than the maximum transmission power of the terminal device; and

path loss-based power control for PSFCHs is configured or not configured for the first object.

Optionally, the method further includes:

updating, by the terminal device, a fourth parameter based on the maximum transmission power of the terminal device on the first object to obtain a fifth parameter.

The fifth parameter includes at least one of the following:

a second set, where the second set includes target PSFCHs in the terminal device;
the second transmission power of the target PSFCH in the terminal device;
target PSFCHs in first objects corresponding to the first set; and
the third transmission power of the target PSFCH in the first object.

Optionally, the second set includes at least one of the following:

the first set or target PSFCHs in each first object corresponding to the N target PSFCHs in the terminal device; and

N target PSFCHs in the terminal device.

Optionally, the second transmission power of the target PSFCH in the terminal device includes at least one of the following:

a minimum value of third transmission powers of target PSFCHs in the first objects corresponding to the first set or the N target PSFCHs in the terminal device; and
a second transmission power that is determined by the terminal device based on the maximum transmission power of the terminal device.

Optionally, the updating, by the terminal device, a fourth parameter based on the maximum transmission power of the terminal device on the first object to obtain a fifth parameter includes:

updating, by the terminal device, M target PSFCHs in the first object based on first information, where the first information is used to indicate a filtering condition for the target PSFCH; and/or
updating, by the terminal device, the third transmission power of the target PSFCH in the first object based on a seventh power; where the seventh power is a power obtained by evenly dividing the maximum transmission power of the terminal device on the first object to the M target PSFCHs of the first object.

Optionally, the updating, by the terminal device, the third transmission power of the target PSFCH in the first object based on a seventh power includes:
adjusting, by the terminal device, the third transmission power of the target PSFCH in the first object to the seventh power.
Optionally, the updating, by the terminal device, the third transmission power of the target PSFCH in the first object based on a seventh power includes at least one of the following:

if the seventh power is less than a current value of the third transmission power of the target PSFCH in the first object, adjusting, by the terminal device, the third transmission power of the target PSFCH to the seventh power; or
if the seventh power is greater than or equal to the current value of the third transmission power of the target PSFCH in the first object, keeping, by the terminal device, the third transmission power of the target PSFCH unchanged.

Optionally, the updating, by the terminal device, a fourth parameter based on the maximum transmission power of the terminal device on the first object to obtain a fifth parameter includes:
in a case that a fourth condition is met, updating, by the terminal device, M target PSFCHs of the first object and/or the third transmission power of the target PSFCH in the first object based on the maximum transmission power of the terminal device in the first object.
The fourth condition includes at least one of the following:

a sum of third transmission powers of the M target PSFCHs in the first object is greater than the maximum transmission power of the terminal device on the first object;
the sum of the third transmission powers of the M target PSFCHs in the first object is less than or equal to the maximum transmission power of the terminal device on the first object; and
path loss-based power control for PSFCHs is configured or not configured for the first object.

Optionally, that the terminal device determines, based on the first transmission power, the N target physical sidelink feedback channels PSFCHs from the first set and/or the second transmission power of the target PSFCH includes:
determining, by the terminal device, M target PSFCHs in first objects corresponding to the first set and/or a third transmission power of the target PSFCH in the first object based on the maximum transmission power of the terminal device on the first object.
Optionally, the M target PSFCHs include at least one of the following:

a PSFCH located in the first object in the first set;
M PSFCHs that are determined based on first information by the terminal device from PSFCHs located on the first object in the first set, where the first information is used to indicate a filtering condition for the target PSFCH;
a PSFCH located in the first object in a fourth set, where the fourth set includes a second-threshold number of PSFCHs, and the second threshold is used to indicate a maximum number of PSFCH transmissions supportable simultaneously by the terminal device;
a PSFCH in the fourth set;
M PSFCHs that are determined based on the first information by the terminal device from the fourth set; and

M PSFCHs that are determined based on the first information by the terminal device from PSFCHs located on the first object in the fourth set.

Optionally, the determining, by the terminal device, M target PSFCHs in first objects corresponding to the first set and/or a third transmission power of the target PSFCH in the first object based on the maximum transmission power of the terminal device on the first object includes:
determining, by the terminal device, third transmission powers of the target PSFCHs in the first objects corresponding to the first set based on the fifth information.
The fifth information includes at least one of the following:

a second power of the first object, where the second power is determined by the terminal device based on a second parameter of the first object, and the second parameter is used to indicate information of path loss-based power control; and
a seventh power, where the seventh power is a power obtained by evenly dividing the maximum transmission power of the terminal device on the first object to the M target PSFCHs of the first object.

Optionally, the determining, by the terminal device, third transmission powers of the target PSFCHs in the first objects corresponding to the first set based on the fifth information includes:
determining, by the terminal device, a power value corresponding to the fifth information as the third transmission power of the target PSFCH in the first object.
Optionally, the fifth information includes the second power of the first object and/or the seventh power; and the determining, by the terminal device, third transmission powers of the target PSFCHs in the first objects corresponding to the first set based on the fifth information includes:

if the second power of the first object is greater than the seventh power, determining, by the terminal device, the seventh power as the third transmission power of the target PSFCH in the first object; or
if the second power of the first object is less than the seventh power, determining, by the terminal device, the second power of the first object as the third transmission power of the target PSFCH in the first object.

Optionally, the determining, by the terminal device, M target PSFCHs in first objects corresponding to the first set and/or a third transmission power of the target PSFCH in the first object based on the maximum transmission power of the terminal device on the first object includes:
in a case that a fifth condition is met, determining, by the terminal device, M target PSFCHs in the first objects corresponding to the first set and/or the third transmission power of the target PSFCH in the first object based on the maximum transmission power of the terminal device on the first object.
The fifth condition includes at least one of the following:

the number of PSFCHs located on the first object in the first set is less than or equal to the number of PSFCHs in a fourth set, where the fourth set includes a second-threshold number of PSFCHs;
the number of PSFCHs located on the first object in the first set is greater than the number of PSFCHs in the fourth set;
the number of PSFCHs in the first set is less than or equal to the number of PSFCHs in the fourth set;
the number of PSFCHs in the first set is greater than the number of PSFCHs in the fourth set;
a sum of second powers of PSFCHs belonging to the first set in the first object is less than or equal to the maximum transmission power of the terminal device on the first object;
the sum of the second powers of the PSFCHs belonging to the first set in the first object is greater than the maximum transmission power of the terminal device on the first object;
a sum of second powers of PSFCHs in a fourth set is less than or equal to the maximum transmission power of the terminal device on the first object;
the sum of the second powers of the PSFCHs in the fourth set is greater than the maximum transmission power of the terminal device on the first object;
a sum of second powers of PSFCHs located on the first object in the fourth set is less than or equal to the maximum transmission power of the terminal device on the first object;
the sum of the second powers of the PSFCHs located on the first object in the fourth set is greater than the maximum transmission power of the terminal device on the first object; and
path loss-based power control for PSFCHs is configured or not configured for the first object.

Optionally, the method further includes:
determining, by the terminal device, the N target PSFCHs and/or the second transmission power of the target PSFCH in the terminal device based on the maximum transmission power of the terminal device.

Optionally, the N target PSFCHs include at least one of the following:

the M target PSFCHs in the first objects corresponding to the first set;
a PSFCH that is determined by the terminal device from the target PSFCHs in the objects based on first information, where the first information is used to indicate a filtering condition for the target PSFCH;
PSFCHs in a fourth set, where the fourth set includes PSFCH transmissions supportable simultaneously by the terminal device; and
PSFCHs that are determined based on the first information by the terminal device from the fourth set.

Optionally, the determining, by the terminal device, the N target PSFCHs and/or the second transmission power of the target PSFCH in the terminal device based on the maximum transmission power of the terminal device includes: determining, by the terminal device, the second transmission power of the target PSFCH in the terminal device based on sixth information.

The sixth information includes at least one of the following:

a fourth power, where the fourth power is a power obtained by evenly dividing the maximum transmission power of the terminal device to the N target PSFCHs; and
an eleventh power, where the eleventh power is a minimum value of third transmission powers of target PSFCHs in the first objects corresponding to the first set; or the eleventh power is the third transmission powers of the target PSFCHs in the first objects corresponding to the first set.

Optionally, the determining, by the terminal device, the second transmission power of the target PSFCH in the terminal device based on sixth information includes at least one of the following:

if the fourth power is greater than the eleventh power, determining, by the terminal device, the eleventh power as the second transmission power of the target PSFCH in the terminal device; or
if the fourth power is less than the eleventh power, determining, by the terminal device, the fourth power as the second transmission power of the target PSFCH in the terminal device.

Optionally, the determining, by the terminal device, the second transmission power of the target PSFCH in the terminal device based on sixth information includes:
determining, by the terminal device, the eleventh power as the second transmission power of the target PSFCH in the terminal device.

Optionally, the determining, by the terminal device, the N target PSFCHs and/or the second transmission power of the target PSFCH in the terminal device based on the maximum transmission power of the terminal device includes: in a case that a sixth condition is met, determining, by the terminal device, the N target PSFCHs and/or the second transmission power of the target PSFCH in the terminal device based on the maximum transmission power of the terminal device.

The sixth condition includes at least one of the following:

a sum of the number of target PSFCHs in the first objects corresponding to the first set is less than or equal to a second threshold, where the second threshold is used to indicate a maximum number of PSFCH transmissions supportable by the terminal device;
the sum of the number of target PSFCHs in the first objects corresponding to the first set is greater than the second threshold;
a sum of twelfth powers of the first objects corresponding to the first set is less than or equal to the maximum transmission power of the terminal device, where the twelfth power is a sum of eleventh powers of the target PSFCHs in the first object; and the eleventh power is a minimum value of third transmission powers of target PSFCHs in the first objects corresponding to the first set or the eleventh power is the third transmission powers of the target PSFCHs in the first objects corresponding to the first set;
the sum of the twelfth powers of the first objects corresponding to the first set is greater than the maximum transmission power of the terminal device;
a sum of eleventh powers of PSFCHs in the fourth set is less than or equal to the maximum transmission power of the terminal device; and
the sum of the eleventh powers of the PSFCHs in the fourth set is greater than the maximum transmission power of the terminal device.

Optionally, that the terminal device determines, based on the first transmission power, the N target physical sidelink feedback channels PSFCHs from the first set and/or the second transmission power of the target PSFCH includes:

determining, by the terminal device, N1 PSFCHs in the terminal device and/or a fourth transmission power of the PSFCH from the first set based on the maximum transmission power of the terminal device, where N1 is a positive integer;

determining, by the terminal device, M1 PSFCHs in first objects corresponding to the first set and/or a fifth transmission power of the PSFCH based on a maximum transmission power of the terminal device on the first objects, where M1 is a positive integer;

if the fourth transmission power is less than or equal to a sixth transmission power, determining, by the terminal device, the N1 PSFCHs as the target PSFCHs in the terminal device, and/or determining the fourth transmission power as the second transmission power of the target PSFCH in the terminal device, where the sixth transmission power is a minimum value of fifth transmission powers of the M1 PSFCHs; and

if the fourth transmission power is greater than the sixth transmission power, determining, by the terminal device, the M1 PSFCHs in the first objects as the target PSFCHs in the terminal device, and/or determining the sixth transmission power as the second transmission power of the target PSFCH in the terminal device.

Optionally, that the terminal device determines, based on the first transmission power, the N target physical sidelink feedback channels PSFCHs from the first set and/or the second transmission power of the target PSFCH includes:

determining, by the terminal device, M2 PSFCHs in first objects corresponding to the first set and/or a seventh transmission power of the PSFCH based on the maximum transmission power of the terminal device;

determining, by the terminal device, M3 PSFCHs in the first objects corresponding to the first set and/or an eighth transmission power of the PSFCH based on a maximum transmission power of the terminal device on the first objects;

if a ninth transmission power is less than or equal to a tenth transmission power, determining, by the terminal device, a PSFCH in a sixth set as the target PSFCH in the terminal device, and/or determining the ninth transmission power as the second transmission power of the target PSFCH; where the ninth transmission power is a minimum value of seventh transmission powers of M2 PSFCHs, the tenth transmission power is a minimum value of eighth transmission powers of M3 PSFCHs, and the sixth set includes M2 PSFCHs in the first objects corresponding to the first set; and

if the ninth transmission power is greater than the tenth transmission power, determining, by the terminal device, a PSFCH in a seventh set as the target PSFCH in the terminal device, and/or determining the tenth transmission power as the second transmission power of the target PSFCH, where the seventh set includes M3 PSFCHs in the first objects corresponding to the first set.

Optionally, the first information includes at least one of the following:

priorities of PSFCHs in the first set;
priorities of first objects corresponding to the first set;
identifiers or indices of the first objects corresponding to the first set; and
bearer information of the PSFCHs in the first set.

An embodiment of this application further provides a readable storage medium, where the readable storage medium stores a program or instructions, and when the program or instructions are executed by a processor, the processes of the foregoing sidelink transmission method embodiments are implemented, with the same technical effect achieved. To avoid repetition, details are not described herein again.

The processor is the processor in the terminal device in the foregoing embodiment. The readable storage medium includes computer readable storage medium, such as computer read-only memory ROM, random access memory RAM, magnetic disk or optical disk, etc.

An embodiment of this application further provides a chip, where the chip includes a processor and a communications interface, the communications interface is coupled to the processor, and the processor is configured to run a program or instructions to implement the processes of the foregoing sidelink transmission method embodiment, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the sidelink transmission method, with the same technical effects achieved. To avoid repetition, details are not repeated herein.

An embodiment of this application further provides a sidelink transmission system, which includes a terminal device and a network-side device, where the terminal device can be configured to execute the steps of the transmission method described in the first aspect.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Specifically, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for indicating a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A sidelink transmission method, wherein the method comprises:

   determining, by a terminal device based on a first transmission power, N target physical sidelink feedback channels PSFCHs from a first set and/or a second transmission power of the target PSFCH, wherein N is greater than or equal to 0; and
   performing, by the terminal device, sidelink transmission based on the N target PSFCHs and/or the second transmission power of the target PSFCH; wherein
   the first set comprises at least two PSFCHs that are predetermined by the terminal device to participate in sidelink transmission; the at least two PSFCHs are located on at least two first objects; and the first object is used to carry a PSFCH resource of the terminal device; and
   the first transmission power comprises at least one of the following:

   a maximum transmission power of the terminal device; and
   a maximum transmission power of the terminal device on the first object.

2. The method according to claim 1, wherein before the determining, by a terminal device based on a first transmission power, N target physical sidelink feedback channels PSFCHs from a first set and/or a second transmission power of the target PSFCH, the method further comprises:

   receiving, by the terminal device, a physical sidelink shared channel PSSCH; and
   determining, by the terminal device, the first set based on at least two PSFCHs corresponding to the PSSCH; wherein time-domain resources of the at least two PSFCHs are the same or overlapping.

3. The method according to claim 1, wherein the first object comprises at least one of the following:

a resource pool;
a resource block set; and
a carrier.

4. The method according to claim 1, wherein the maximum transmission power of the terminal device comprises at least one of the following:

a first power determined based on a first parameter; wherein the first parameter is used to indicate a transmission power threshold of the terminal device;
a power threshold specified in a protocol;
a power threshold configured by a network-side device and/or the terminal device; and
a power obtained by equally distributing the first power to the at least two first objects.

5. The method according to claim 4, wherein the first parameter comprises at least one of the following:

a maximum transmit power of the terminal device on the first object;
a maximum output power of the terminal device without considering an allowable deviation;
a maximum power reduction;
an additional maximum power reduction;
an additional allowable deviation;
a power management maximum power reduction; and
a maximum transmit power defined by a regulatory document.

6. The method according to claim 1, wherein the determining, by a terminal device based on a first transmission power, N target physical sidelink feedback channels PSFCHs from a first set and/or a second transmission power of the target PSFCH comprises:

determining, by the terminal device, one target first object from at least two first objects corresponding to the first set; and
determining, by the terminal device, based on the first transmission power, the target PSFCH from PSFCHs located on the target first object in the first set and/or the second transmission power of the target PSFCH.

7. The method according to claim 6, wherein the target first object comprises at least one of the following:

a first object corresponding to a PSFCH with a highest priority in the first set;
a first object carrying the largest number of PSFCHs in the first set;
a first object with a largest identifier or index in the at least two first objects corresponding to the first set;
a first object with a smallest identifier or index in the at least two first objects corresponding to the first set;
a first object configured with a second parameter, wherein the second parameter is used to indicate information of path loss-based power control;
a first object not configured with the second parameter; and
a first object configured with the second parameter, wherein the second parameter meets a preset condition.

8. The method according to claim 7, wherein the second parameter comprises at least one of the following:

a basic operating point of transmit power for path loss-based power control; and
a path loss compensation factor.

9. The method according to claim 6, wherein the determining, by the terminal device, one target first object from at least two first objects corresponding to the first set comprises:
in a case that the at least two first objects corresponding to the first set are configured with different second parameters, determining, by the terminal device, one target first object from the at least two first objects corresponding to the first set.

10. The method according to claim 1, wherein the determining, by a terminal device based on a first transmission power, N target physical sidelink feedback channels PSFCHs from a first set and/or a second transmission power of the target PSFCH comprises:
in a case that the at least two first objects corresponding to the first set are configured with a same second parameter, or in a case that the at least two first objects corresponding to the first set are not configured with the second parameter, determining, by the terminal device based on the first transmission power, N target PSFCHs from the first set and/or the second transmission power of the target PSFCH.

11. The method according to claim 1, wherein the first transmission power comprises the maximum transmission power of the terminal device; and the determining, by a terminal device based on a first transmission power, N target physical sidelink feedback channels PSFCHs from a first set and/or a second transmission power of the target PSFCH comprises:
correspondingly determining, by the terminal device, PSFCHs in the first set based on the number of PSSCHs requiring feedback and received on a PSSCH resource corresponding to a PSFCH resource, and determining N target PSFCHs from the first set.

12. The method according to claim 1, wherein the first transmission power comprises the maximum transmission power of the terminal device; and the determining, by a terminal device based on a first transmission power, N target physical sidelink feedback channels PSFCHs from a first set and/or a second transmission power of the target PSFCH comprises:

determining, by the terminal device, N target PSFCHs from the first set based on first information; wherein the first information is used to indicate a filtering condition for the target PSFCH.

13. The method according to claim 12, wherein a value of N is greater than or equal to a first threshold; the first threshold is a maximum natural number satisfying that a sum of the first-threshold number of second powers is less than or equal to the maximum transmission power of the terminal device; the second power is a power determined by the terminal device based on a second parameter; and the second parameter is used to indicate information of path loss-based power control.

14. The method according to claim 12, wherein a value of N is less than or equal to a second threshold; and the second threshold is used to indicate a maximum number of PSFCH transmissions supportable simultaneously by the terminal device.

15. The method according to claim 1, wherein the determining, by a terminal device based on a first transmission power, N target physical sidelink feedback channels PSFCHs from a first set and/or a second transmission power of the target PSFCH comprises:

determining, by the terminal device, a second transmission power of the target PSFCH in the first set based on second information; wherein
the second information comprises at least one of the following:

a second power, wherein the second power is a power determined by the terminal device based on second parameters of at least two first objects corresponding to the first set; and the second parameter is used to indicate information of path loss-based power control;
a third power, wherein the third power is a power determined by the terminal device based on the first transmission power and a second threshold; and the second threshold is used to indicate a maximum number of PSFCHs that are can be transmitted simultaneously by the terminal device; and
a fourth power, wherein the fourth power is a power obtained by evenly dividing the maximum transmission power of the terminal device to the N target PSFCHs.

16. The method according to claim 15, wherein the second information comprises the second power and/or the fourth power; and the determining, by the terminal device, a second transmission power of the target PSFCH in the first set based on second information comprises:
determining, by the terminal device, the second power and/or the fourth power as the second transmission power of the target PSFCH in the first set.

17. The method according to claim 16, wherein the second information comprises the second power; and at least two first objects corresponding to the first set are configured with a same second parameter.

18. The method according to claim 16, wherein the second information comprises the second power; and before the determining, by the terminal device, the second power and/or the fourth power as the second transmission power of the target PSFCH in the first set, the method further comprises:

in a case that the at least two first objects corresponding to the first set are configured with different second parameters, determining, by the terminal device, one target first object from the at least two first objects; and determining, by the terminal device, a second power based on a second parameter of the target first object.

19. The method according to claim 15, wherein the second information comprises the second power and/or the third power; and the determining, by the terminal device, a second transmission power of the target PSFCH in the first set based on second information comprises at least one of the following:

if the second power is greater than the third power, determining, by the terminal device, the third power as the second transmission power of the target PSFCH; and
if the second power is less than the third power, determining, by the terminal device, the second power as the second transmission power of the target PSFCH.

20. The method according to claim 1, wherein the determining, by a terminal device based on a first transmission power, N target physical sidelink feedback channels PSFCHs from a first set and/or a second transmission power of the target PSFCH comprises:

in a case that a first condition is met, determining, by the terminal device, the N target PSFCHs from the first set and/or the second transmission power of the target PSFCH based on the maximum transmission power of the terminal device; wherein
the first condition comprises at least one of the following:

the number of PSFCHs comprised in the first set is less than or equal to a second threshold; wherein the second threshold is used to indicate a maximum number of PSFCH transmissions supportable simultaneously by the terminal device; and
the number of PSFCHs comprised in the first set is greater than the second threshold.

21. The method according to claim 20, wherein the second threshold comprises at least one of the following:

a maximum number of PSFCH transmissions supportable by the terminal device on a frequency band in which the first object is located;
a sum of the maximum numbers of PSFCH transmissions supportable by the terminal device on at least two frequency bands in which the first object is located;
a maximum value or minimum value of the maximum numbers of PSFCH transmissions supportable by the terminal device respectively on at least two frequency bands in which the first object is located;
a maximum number of PSFCH transmissions supportable by the terminal device as specified by a protocol; and
a maximum number of PSFCH transmissions supportable by the terminal device as configured by a network-side device or the terminal device.

22. The method according to claim 1, wherein the method further comprises:

updating, by the terminal device, a third parameter based on a maximum transmission power of first objects corresponding to a second set; wherein
the second set comprises target PSFCHs of the terminal device; and the third parameter comprises at least one of the following:

the target PSFCHs in the second set;
the second transmission power of the target PSFCH in the terminal device;
M target PSFCHs in the first object; and
a third transmission power of the target PSFCH in the first object.

23. The method according to claim 22, wherein the third parameter comprises the M target PSFCHs in the first object and/or a third transmission power of the target PSFCH in the first object; and the performing, by the terminal device, sidelink transmission based on the N target PSFCHs and/or the second transmission power of the target PSFCH comprises:
performing, by the terminal device, sidelink transmission based on M target PSFCHs in each first object and/or the third transmission power of the target PSFCH in the first object.

24. The method according to claim 22, wherein the updating, by the terminal device, a third parameter based on a maximum transmission power of first objects corresponding to a second set comprises:

determining, by the terminal device, M target PSFCHs in each first object and/or a third transmission power of the target PSFCH in the first object based on a maximum transmission power of each first object corresponding to the second set; and
updating, by the terminal device, target PSFCHs in the second set and/or the second transmission power of the target PSFCH in the terminal device based on the M target PSFCHs in each first object and/or the third transmission power of the target PSFCH in the first object; and
the performing, by the terminal device, sidelink transmission based on the N target PSFCHs and/or the second transmission power of the target PSFCH comprises:
performing, by the terminal device, sidelink transmission based on an updated second set and/or the second transmission power.

25. The method according to claim 24, wherein the updated second set comprises M target PSFCHs in each first object corresponding to the second set.

26. The method according to claim 24, wherein the updated second transmission power is a minimum value of third transmission powers of target PSFCHs in first objects corresponding to the second set, or the updated second transmission power is equal to the third transmission power.

27. The method according to claim 23, wherein the M target PSFCHs comprise at least one of the following:

a target PSFCH located in the first object in the second set; and
a PSFCH determined by the terminal device from target PSFCHs located on the first object in the second set based on first information.

28. The method according to claim 27, wherein the M target PSFCHs comprise a PSFCH that is determined by the terminal device from the target PSFCH located in the first object in the second set based on the first information; and a value of M is greater than or equal to a third threshold, and the third threshold is a maximum natural number satisfying that a sum of the third-threshold number of fifth powers is less than or equal to the maximum transmission power of the terminal device on the first object; wherein
the fifth power comprises at least one of the following:

a second power, wherein the second power is a power determined by the terminal device based on a second parameter, and the second parameter is used to indicate information of path loss-based power control;
the second transmission power of the target PSFCH in the terminal device; and
a sixth power; wherein
the sixth power satisfies at least one of the following:

if the second transmission power is greater than a second power of the first object, the sixth power is equal to the second power; or
if the second transmission power is less than the second power of the first object, the sixth power is equal to the second transmission power.

29. The method according to claim 27, wherein the M target PSFCHs comprise a PSFCH that is determined by the terminal device from the target PSFCH located in the first object in the second set based on the first information; and a value of M is greater than or equal to 1.

30. The method according to claim 22, wherein the updating, by the terminal device, a third parameter based on a maximum transmission power of first objects corresponding to a second set comprises:

determining, by the terminal device, the third transmission power of the target PSFCH in the first object based on third information; wherein
the third information comprises at least one of the following:

the second transmission power of the target PSFCH in the terminal device;

a second power of the first object, wherein the second power is determined by the terminal device based on a second parameter of the first object, and the second parameter is used to indicate information of path loss-based power control;

a sixth power; wherein the sixth power comprises at least one of the following:

if the second transmission power is greater than a second power of the first object, the sixth power is equal to the second power; or

if the second transmission power is less than the second power of the first object, the sixth power is equal to the second transmission power; and

a seventh power, wherein the seventh power is a power obtained by evenly dividing the maximum transmission power of the terminal device on the first object to the M target PSFCHs of the first object.

31. The method according to claim 30, wherein the third information comprises at least one of the second transmission power of the target PSFCH in the terminal device, the second power of the first object, and the seventh power; and the determining, by the terminal device, the third transmission power of the target PSFCH in the first object based on third information comprises:

determining, by the terminal device, a power value corresponding to the third information as the third transmission power of the target PSFCH in the first object.

32. The method according to claim 30, wherein the third information comprises the second transmission power and/or the second power of the first object; and the determining, by the terminal device, the third transmission power of the target PSFCH in the first object based on third information comprises at least one of the following:

if the second transmission power is greater than the second power of the first object, determining, by the terminal device, the second power of the first object as the third transmission power of the target PSFCH in the first object; or

if the second transmission power is less than the second power of the first object, determining, by the terminal device, the second transmission power as the third transmission power of the target PSFCH in the first object.

33. The method according to claim 30, wherein the third information comprises the sixth power and/or the seventh power; and the determining, by the terminal device, the third transmission power of the target PSFCH in the first object based on third information comprises:

if the sixth power is greater than the seventh power, determining, by the terminal device, the seventh power as the third transmission power of the target PSFCH in the first object; or

if the sixth power is less than the seventh power, determining, by the terminal device, the sixth power as the third transmission power of the target PSFCH in the first object.

34. The method according to claim 30, wherein the third information comprises the seventh power; and the determining, by the terminal device, the third transmission power of the target PSFCH in the first object based on third information comprises at least one of the following:

if the seventh power is less than a current value of the third transmission power, updating, by the terminal device, the third transmission power based on the seventh power.

35. The method according to claim 30, wherein the third information comprises the second power of the first object and/or the seventh power; and the determining, by the terminal device, the third transmission power of the target PSFCH in the first object based on third information comprises:

if the seventh power is greater than the second power of the first object, determining, by the terminal device, the second power of the first object as the third transmission power of the target PSFCH in the first object; or

if the seventh power is less than the second power of the first object, determining, by the terminal device, the seventh power as the third transmission power of the target PSFCH in the first object.

36. The method according to claim 22, wherein the updating, by the terminal device, a third parameter based on a maximum transmission power of first objects corresponding to a second set comprises:

in a case that the second condition is met, updating, by the terminal device, the M target PSFCHs in the first object and/or the third transmission power of the target PSFCH in the first object based on the maximum transmission power of each first object corresponding to the second set; wherein
the second condition comprises at least one of the following:

a sum of second transmission powers of target PSFCHs located on the first object in the second set is less than or equal to the maximum transmission power of the terminal device on the first object;
the sum of the second transmission powers of the target PSFCHs located on the first object in the second set is greater than the maximum transmission power of the terminal device on the first object;
a sum of sixth powers of the target PSFCHs located on the first object in the second set is less than or equal to the maximum transmission power of the terminal device on the first object;
the sum of the sixth powers of the target PSFCHs located on the first object in the second set is greater than the maximum transmission power of the terminal device on the first object;
a sum of second powers of the target PSFCHs located on the first object in the second set is less than or equal to the maximum transmission power of the terminal device on the first object;
the sum of the second powers of the target PSFCHs located on the first object in the second set is greater than the maximum transmission power of the terminal device on the first object;
path loss-based power control for PSFCHs is configured for the first object;
path loss-based power control for PSFCHs is not configured for the first object; and
path loss-based control for PSFCHs is not configured for the first object; and the sum of the second transmission powers of the target PSFCHs located on the first object in the second set is greater than the maximum transmission power of the terminal device on the first object.

37. The method according to claim 1, wherein the determining, by a terminal device based on a first transmission power, N target physical sidelink feedback channels PSFCHs from a first set and/or a second transmission power of the target PSFCH comprises:

determining, by the terminal device, a fourth parameter based on the maximum transmission power of the terminal device; wherein
the fourth parameter comprises at least one of the following:

N target PSFCHs in the terminal device;
the second transmission power of the target PSFCH in the terminal device;
M target PSFCHs in first objects corresponding to the first set; and
a third transmission power of the target PSFCH in the first object.

38. The method according to claim 37, wherein the fourth parameter comprises the M target PSFCHs in the first objects corresponding to the first set and/or the third transmission power of the target PSFCH, and the method further comprises:

determining, by the terminal device, N target PSFCHs in the terminal device and/or the second transmission power of the target PSFCH in the terminal device based on the M target PSFCHs in the first objects corresponding to the first set and/or the third transmission power of the target PSFCH; wherein
the N target PSFCHs comprise the M target PSFCHs in the first objects corresponding to the first set; and
the second transmission power of the target PSFCH in the terminal device comprises at least one of the following:

a minimum value of third transmission powers of target PSFCHs in first objects corresponding to the first set; and
the third transmission powers of the target PSFCHs in the first objects corresponding to the first set.

39. The method according to claim 38, wherein the method further comprises:
in a case that the number N of target PSFCHs is less than or equal to a second threshold, keeping, by the terminal device, the N target PSFCHs unchanged; wherein the second threshold is used to indicate a maximum number of PSFCH transmissions supportable simultaneously by the terminal device.

40. The method according to claim 38, wherein the method further comprises:
in a case that the number N of target PSFCHs is greater than a second threshold, re-determining, by the terminal device, X target PSFCHs from the N target PSFCHs based on first information; wherein X is a positive integer less than N, and the first information is used to indicate a filtering condition for the target PSFCH.

41. The method according to claim 37, wherein the N target PSFCHs in the terminal device comprise at least one of the following:

all PSFCHs in the first set;
a target PSFCH determined by the terminal device from the first set based on first information, wherein the first information is used to indicate a filtering condition for the target PSFCH;
a second-threshold number of PSFCHs, wherein the second threshold is used to indicate a maximum number of PSFCHs that are simultaneously usable by the terminal device; and
a target PSFCH that is determined by the terminal device from the second-threshold number of PSFCHs based on the first information.

42. The method according to claim 41, wherein the N target PSFCHs comprise a target PSFCH that is determined by the terminal device from the first set or the second-threshold number of PSFCHs based on the first information; a value of N is greater than or equal to a fourth threshold, and the fourth threshold is a maximum natural number satisfying that a sum of Y second powers in each first object in which the first set or the second-threshold number of PSFCHs is located is less than or equal to the maximum transmission power of the terminal device; a second power of the first object is a power that is determined by the terminal device based on a second parameter of the first object; the second parameter is used to indicate information of power control based on downlink path loss; and Y is the number of target PSFCHs located on the first object among the fourth-threshold number of target PSFCHs.

43. The method according to claim 41, wherein the N target PSFCHs comprise the target PSFCHs that is determined by the terminal device from the first set based on the first information; and a value of N is greater than or equal to 1.

44. The method according to claim 37, wherein the M target PSFCHs in the first objects corresponding to the first set comprise at least one of the following:

a PSFCH located in the first object in the first set;
a target PSFCH located in the first object in a third set, wherein the third set comprises N target PSFCHs that are determined based on the first information by the terminal device from the first set;
a PSFCH located in the first object in a fourth set, wherein the fourth set comprises a second-threshold number of PSFCHs, and the second threshold is used to indicate a maximum number of PSFCH transmissions supportable simultaneously by the terminal device;
a target PSFCH located in the first object among N target PSFCHs that are determined based on the first information by the terminal device from the fourth set;
M PSFCHs that are determined based on the first information by the terminal device from PSFCHs located on the first object in the first set;
a PSFCH in the fourth set;
M PSFCHs that are determined based on the first information by the terminal device from the fourth set;
a PSFCH in the fifth set, wherein the fifth set comprises PSFCHs obtained by the terminal device by evenly dividing PSFCHs in the fourth set to first objects corresponding to the first set; and
M PSFCHs that are determined based on the first information by the terminal device from the fifth set.

45. The method according to claim 37, wherein the determining, by the terminal device, a fourth parameter based on the maximum transmission power of the terminal device comprises:

determining, by the terminal device, the third transmission power of the target PSFCH in the first object based on fourth information; wherein
the fourth information comprises at least one of the following:

a second power of the first object, wherein the second power is determined by the terminal device based on a second parameter of the first object, and the second parameter is used to indicate information of path loss-based power control;
a fourth power, wherein the fourth power is a power that is obtained by evenly dividing the maximum transmission power of the terminal device to the N target PSFCHs in the terminal device; and
an eighth power, wherein the eighth power is a power obtained by evenly dividing the maximum transmission power of the terminal device to M target PSFCHs in the first object.

46. The method according to claim 45, wherein the determining, by the terminal device, the third transmission power of the target PSFCH in the first object based on fourth information comprises:

determining, by the terminal device, a power value corresponding to the fourth information as the third transmission power of the target PSFCH in the first object.

47. The method according to claim 45, wherein the fourth information comprises the second power of the first object and/or the fourth power; and the determining, by the terminal device, the third transmission power of the target PSFCH in the first object based on fourth information comprises at least one of the following:

if the second power of the first object is greater than the fourth power, determining, by the terminal device, the fourth power as the third transmission power of the target PSFCH in the first object; or
if the second power of the first object is less than the fourth power, determining, by the terminal device, the second power of the first object as the third transmission power of the target PSFCH in the first object.

48. The method according to claim 45, wherein the fourth information comprises the second power of the first object and/or the eighth power; and the determining, by the terminal device, the third transmission power of the target PSFCH in the first object based on fourth information comprises at least one of the following:

if the second power of the first object is greater than the eighth power, determining, by the terminal device, the eighth power as the third transmission power of the target PSFCH in the first object; or
if the second power of the first object is less than the eighth power, determining, by the terminal device, the second power of the first object as the third transmission power of the target PSFCH in the first object.

49. The method according to claim 37, wherein the determining, by the terminal device, a fourth parameter based on the maximum transmission power of the terminal device comprises:

in a case that a third condition is met, determining, by the terminal device, M target PSFCHs in the first objects corresponding to the first set and/or the third transmission power of the target PSFCH in the first object based on the maximum transmission power of the terminal device; wherein
the third condition comprises at least one of the following:

the number of PSFCHs in the first set is less than or equal to the number of PSFCHs in a fourth set, wherein the fourth set comprises a second-threshold number of PSFCHs, and the second threshold is used to indicate a maximum number of PSFCH transmissions supportable simultaneously by the terminal device;
a sum of ninth powers of first objects corresponding to the first set is less than or equal to the maximum transmission power of the terminal device, wherein the ninth power is a sum of second powers of PSFCHs located on the first object in the first set;
the sum of the ninth powers of the first objects corresponding to the first set is greater than or equal to the maximum transmission power of the terminal device;
the number of PSFCHs in the first set is greater than the number of PSFCHs in the fourth set;
a sum of tenth powers of first objects corresponding to the fourth set is less than or equal to the maximum transmission power of the terminal device, wherein the tenth power is a sum of second powers of PSFCHs located on the first object in the fourth set;
the sum of the tenth powers of the second objects corresponding to the fourth set is greater than the maximum transmission power of the terminal device;
the number of PSFCHs belonging to the first set in the first object is less than or equal to the number of PSFCHs in the fourth set;
the number of PSFCHs belonging to the first set in the first object is greater than the number of PSFCHs in the fourth set;
a sum of second powers of the PSFCHs belonging to the first set in the first object is less than or equal to the maximum transmission power of the terminal device;
the sum of the second powers of the PSFCHs belonging to the first set in the first object is greater than the maximum transmission power of the terminal device;
a sum of second powers of PSFCHs in the fourth set is less than or equal to the maximum transmission power of the terminal device;
the sum of the second powers of the PSFCHs in the fourth set is greater than the maximum transmission power of the terminal device;
the number of PSFCHs belonging to the first set in the first object is less than or equal to the number of PSFCHs in a fifth set, wherein the fifth set comprises PSFCHs obtained by the terminal device by evenly dividing PSFCHs in the fourth set to first objects corresponding to the first set; and

the number of PSFCHs belonging to the first set in the first object is greater than the number of PSFCHs in the fifth set;

a sum of second powers of the PSFCHs in the fifth set is less than or equal to the maximum transmission power of the terminal device;

the sum of the second powers of the PSFCHs in the fifth set is greater than the maximum transmission power of the terminal device; and

path loss-based power control for PSFCHs is configured or not configured for the first object.

50. The method according to claim 37, wherein the method further comprises:

updating, by the terminal device, a fourth parameter based on the maximum transmission power of the terminal device on the first object to obtain a fifth parameter; wherein

the fifth parameter comprises at least one of the following:

a second set, wherein the second set comprises target PSFCHs in the terminal device;

the second transmission power of the target PSFCH in the terminal device;

target PSFCHs in first objects corresponding to the first set; and

the third transmission power of the target PSFCH in the first object.

51. The method according to claim 50, wherein the second set comprises at least one of the following:

the first set or target PSFCHs in each first object corresponding to the N target PSFCHs in the terminal device; and

N target PSFCHs in the terminal device.

52. The method according to claim 50, wherein the second transmission power of the target PSFCH in the terminal device comprises at least one of the following:

a minimum value of third transmission powers of target PSFCHs in the first objects corresponding to the first set or the N target PSFCHs in the terminal device; and

a second transmission power that is determined by the terminal device based on the maximum transmission power of the terminal device.

53. The method according to claim 50, wherein the updating, by the terminal device, a fourth parameter based on the maximum transmission power of the terminal device on the first object to obtain a fifth parameter comprises:

updating, by the terminal device, M target PSFCHs in the first object based on first information, wherein the first information is used to indicate a filtering condition for the target PSFCH; and/or

updating, by the terminal device, the third transmission power of the target PSFCH in the first object based on a seventh power; wherein the seventh power is a power obtained by evenly dividing the maximum transmission power of the terminal device on the first object to the M target PSFCHs of the first object.

54. The method according to claim 53, wherein the updating, by the terminal device, the third transmission power of the target PSFCH in the first object based on a seventh power comprises:

adjusting, by the terminal device, the third transmission power of the target PSFCH in the first object to the seventh power.

55. The method according to claim 53, wherein the updating, by the terminal device, the third transmission power of the target PSFCH in the first object based on a seventh power comprises at least one of the following:

if the seventh power is less than a current value of the third transmission power of the target PSFCH in the first object, adjusting, by the terminal device, the third transmission power of the target PSFCH to the seventh power; or

if the seventh power is greater than or equal to the current value of the third transmission power of the target PSFCH in the first object, keeping, by the terminal device, the third transmission power of the target PSFCH unchanged.

56. The method according to claim 50, wherein the updating, by the terminal device, a fourth parameter based on the maximum transmission power of the terminal device on the first object to obtain a fifth parameter comprises:

in a case that a fourth condition is met, updating, by the terminal device, M target PSFCHs of the first object and/or the third transmission power of the target PSFCH in the first object based on the maximum transmission power of the terminal device in the first object; wherein
the fourth condition comprises at least one of the following:

a sum of third transmission powers of the M target PSFCHs in the first object is greater than the maximum transmission power of the terminal device on the first object;
the sum of the third transmission powers of the M target PSFCHs in the first object is less than or equal to the maximum transmission power of the terminal device on the first object; and
path loss-based power control for PSFCHs is configured or not configured for the first object.

57. The method according to claim 1, wherein the determining, by a terminal device based on a first transmission power, N target physical sidelink feedback channels PSFCHs from a first set and/or a second transmission power of the target PSFCH comprises:
determining, by the terminal device, M target PSFCHs in first objects corresponding to the first set and/or a third transmission power of the target PSFCH in the first object based on the maximum transmission power of the terminal device on the first object.

58. The method according to claim 57, wherein the M target PSFCHs comprise at least one of the following:

a PSFCH located in the first object in the first set;
M PSFCHs that are determined based on first information by the terminal device from PSFCHs located on the first object in the first set, wherein the first information is used to indicate a filtering condition for the target PSFCH;
a PSFCH located in the first object in a fourth set, wherein the fourth set comprises a second-threshold number of PSFCHs, and the second threshold is used to indicate a maximum number of PSFCH transmissions supportable simultaneously by the terminal device;
a PSFCH in the fourth set;
M PSFCHs that are determined based on the first information by the terminal device from the fourth set; and
M PSFCHs that are determined based on the first information by the terminal device from PSFCHs located on the first object in the fourth set.

59. The method according to claim 57, wherein the determining, by the terminal device, M target PSFCHs in first objects corresponding to the first set and/or a third transmission power of the target PSFCH in the first object based on the maximum transmission power of the terminal device on the first object comprises:

determining, by the terminal device, third transmission powers of the target PSFCHs in the first objects corresponding to the first set based on the fifth information; wherein
the fifth information comprises at least one of the following:

a second power of the first object, wherein the second power is determined by the terminal device based on a second parameter of the first object, and the second parameter is used to indicate information of path loss-based power control; and
a seventh power, wherein the seventh power is a power obtained by evenly dividing the maximum transmission power of the terminal device on the first object to the M target PSFCHs of the first object.

60. The method according to claim 59, wherein the determining, by the terminal device, third transmission powers of the target PSFCHs in the first objects corresponding to the first set based on the fifth information comprises:
determining, by the terminal device, a power value corresponding to the fifth information as the third transmission power of the target PSFCH in the first object.

61. The method according to claim 59, wherein the fifth information comprises the second power of the first object and/or the seventh power; and the determining, by the terminal device, third transmission powers of the target PSFCHs in the first objects corresponding to the first set based on the fifth information comprises:

if the second power of the first object is greater than the seventh power, determining, by the terminal device, the seventh power as the third transmission power of the target PSFCH in the first object; or

if the second power of the first object is less than the seventh power, determining, by the terminal device, the second power of the first object as the third transmission power of the target PSFCH in the first object.

62. The method according to claim 57, wherein the determining, by the terminal device, M target PSFCHs in first objects corresponding to the first set and/or a third transmission power of the target PSFCH in the first object based on the maximum transmission power of the terminal device on the first object comprises:

in a case that a fifth condition is met, determining, by the terminal device, M target PSFCHs in the first objects corresponding to the first set and/or the third transmission power of the target PSFCH in the first object based on the maximum transmission power of the terminal device on the first object; wherein the fifth condition comprises at least one of the following:

the number of PSFCHs located on the first object in the first set is less than or equal to the number of PSFCHs in a fourth set, wherein the fourth set comprises a second-threshold number of PSFCHs;
the number of PSFCHs located on the first object in the first set is greater than the number of PSFCHs in the fourth set;
the number of PSFCHs in the first set is less than or equal to the number of PSFCHs in the fourth set;
the number of PSFCHs in the first set is greater than the number of PSFCHs in the fourth set;
a sum of second powers of PSFCHs belonging to the first set in the first object is less than or equal to the maximum transmission power of the terminal device on the first object;
the sum of the second powers of the PSFCHs belonging to the first set in the first object is greater than the maximum transmission power of the terminal device on the first object;
a sum of second powers of PSFCHs in a fourth set is less than or equal to the maximum transmission power of the terminal device on the first object;
the sum of the second powers of the PSFCHs in the fourth set is greater than the maximum transmission power of the terminal device on the first object;
a sum of second powers of PSFCHs located on the first object in the fourth set is less than or equal to the maximum transmission power of the terminal device on the first object;
the sum of the second powers of the PSFCHs located on the first object in the fourth set is greater than the maximum transmission power of the terminal device on the first object; and
path loss-based power control for PSFCHs is configured or not configured for the first object.

63. The method according to claim 57, wherein the method further comprises:
determining, by the terminal device, the N target PSFCHs and/or the second transmission power of the target PSFCH in the terminal device based on the maximum transmission power of the terminal device.

64. The method according to claim 63, wherein the N target PSFCHs comprise at least one of the following:

the M target PSFCHs in the first objects corresponding to the first set;
a PSFCH that is determined by the terminal device from the target PSFCHs in the objects based on first information, wherein the first information is used to indicate a filtering condition for the target PSFCH;
PSFCHs in a fourth set, wherein the fourth set comprises PSFCH transmissions supportable simultaneously by the terminal device; and
PSFCHs that are determined based on the first information by the terminal device from the fourth set.

65. The method according to claim 63, wherein the determining, by the terminal device, the N target PSFCHs and/or the second transmission power of the target PSFCH in the terminal device based on the maximum transmission power of the terminal device comprises:

determining, by the terminal device, the second transmission power of the target PSFCH in the terminal device based on sixth information; wherein the sixth information comprises at least one of the following:

a fourth power, wherein the fourth power is a power obtained by evenly dividing the maximum transmission power of the terminal device to the N target PSFCHs; and
an eleventh power, wherein the eleventh power is a minimum value of third transmission powers of target PSFCHs in the first objects corresponding to the first set; or the eleventh power is the third transmission powers of the target PSFCHs in the first objects corresponding to the first set.

66. The method according to claim 65, wherein the determining, by the terminal device, the second transmission power of the target PSFCH in the terminal device based on sixth information comprises at least one of the following:

if the fourth power is greater than the eleventh power, determining, by the terminal device, the eleventh power as the second transmission power of the target PSFCH in the terminal device; or
if the fourth power is less than the eleventh power, determining, by the terminal device, the fourth power as the second transmission power of the target PSFCH in the terminal device.

67. The method according to claim 65, wherein the determining, by the terminal device, the second transmission power of the target PSFCH in the terminal device based on sixth information comprises:
determining, by the terminal device, the eleventh power as the second transmission power of the target PSFCH in the terminal device.

68. The method according to claim 63, wherein the determining, by the terminal device, the N target PSFCHs and/or the second transmission power of the target PSFCH in the terminal device based on the maximum transmission power of the terminal device comprises:

in a case that a sixth condition is met, determining, by the terminal device, the N target PSFCHs and/or the second transmission power of the target PSFCH in the terminal device based on the maximum transmission power of the terminal device; wherein
the sixth condition comprises at least one of the following:

a sum of the number of target PSFCHs in the first objects corresponding to the first set is less than or equal to a second threshold, wherein the second threshold is used to indicate a maximum number of PSFCH transmissions supportable by the terminal device;
the sum of the number of target PSFCHs in the first objects corresponding to the first set is greater than the second threshold;
a sum of twelfth powers of the first objects corresponding to the first set is less than or equal to the maximum transmission power of the terminal device, wherein the twelfth power is a sum of eleventh powers of the target PSFCHs in the first object; and the eleventh power is a minimum value of third transmission powers of target PSFCHs in the first objects corresponding to the first set or the eleventh power is the third transmission powers of the target PSFCHs in the first objects corresponding to the first set;
the sum of the twelfth powers of the first objects corresponding to the first set is greater than the maximum transmission power of the terminal device;
a sum of eleventh powers of PSFCHs in the fourth set is less than or equal to the maximum transmission power of the terminal device; and
the sum of the eleventh powers of the PSFCHs in the fourth set is greater than the maximum transmission power of the terminal device.

69. The method according to claim 1, wherein the determining, by a terminal device based on a first transmission power, N target physical sidelink feedback channels PSFCHs from a first set and/or a second transmission power of the target PSFCH comprises:

determining, by the terminal device, N1 PSFCHs in the terminal device and/or a fourth transmission power of the PSFCH from the first set based on the maximum transmission power of the terminal device, wherein N1 is a positive integer;
determining, by the terminal device, M1 PSFCHs in first objects corresponding to the first set and/or a fifth transmission power of the PSFCH based on a maximum transmission power of the terminal device on the first objects, wherein M1 is a positive integer;
if the fourth transmission power is less than or equal to a sixth transmission power, determining, by the terminal device, the N1 PSFCHs as the target PSFCHs in the terminal device, and/or determining the fourth transmission power as the second transmission power of the target PSFCH in the terminal device, wherein the sixth transmission power is a minimum value of fifth transmission powers of the M1 PSFCHs; and
if the fourth transmission power is greater than the sixth transmission power, determining, by the terminal device, the M1 PSFCHs in the first objects as the target PSFCHs in the terminal device, and/or determining the sixth transmission power as the second transmission power of the target PSFCH in the terminal device.

70. The method according to claim 1, wherein the determining, by a terminal device based on a first transmission power, N target physical sidelink feedback channels PSFCHs from a first set and/or a second transmission power of the target PSFCH comprises:

determining, by the terminal device, M2 PSFCHs in first objects corresponding to the first set and/or a seventh transmission power of the PSFCH based on the maximum transmission power of the terminal device;

determining, by the terminal device, M3 PSFCHs in the first objects corresponding to the first set and/or an eighth transmission power of the PSFCH based on a maximum transmission power of the terminal device on the first objects;

if a ninth transmission power is less than or equal to a tenth transmission power, determining, by the terminal device, a PSFCH in a sixth set as the target PSFCH in the terminal device, and/or determining the ninth transmission power as the second transmission power of the target PSFCH; wherein the ninth transmission power is a minimum value of seventh transmission powers of M2 PSFCHs, the tenth transmission power is a minimum value of eighth transmission powers of M3 PSFCHs, and the sixth set comprises M2 PSFCHs in the first objects corresponding to the first set; and

if the ninth transmission power is greater than the tenth transmission power, determining, by the terminal device, a PSFCH in a seventh set as the target PSFCH in the terminal device, and/or determining the tenth transmission power as the second transmission power of the target PSFCH, wherein the seventh set comprises M3 PSFCHs in the first objects corresponding to the first set.

71. The method according to any one of claims 12, 27, 40, 41, 44, 50, and 58, wherein the first information comprises at least one of the following:

priorities of PSFCHs in the first set;
priorities of first objects corresponding to the first set;
identifiers or indices of the first objects corresponding to the first set; and
bearer information of the PSFCHs in the first set.

72. A sidelink transmission apparatus, comprising:

a first determining module, configured to determine, based on a first transmission power, N target physical sidelink feedback channels PSFCHs from a first set and/or a second transmission power of the target PSFCH, wherein N is greater than or equal to 0; and

a first transmission module, configured to perform sidelink transmission based on the N target PSFCHs and/or the second transmission power of the target PSFCH; wherein

the first set comprises at least two PSFCHs that are predetermined by the terminal device to participate in sidelink transmission; the at least two PSFCHs are located on at least two first objects; and the first object is used to carry a PSFCH resource of the terminal device; and

the first transmission power comprises at least one of the following:

a maximum transmission power of the terminal device; and
a maximum transmission power of the terminal device on the first object.

73. A terminal device, comprising a processor and a memory, wherein the memory stores a program or instructions capable of running on the processor, and when the program or instructions are executed by the processor, the steps of the sidelink transmission method according to any one of claims 1 to 71 are implemented.

74. A readable storage medium, wherein a program or instructions are stored on the readable storage medium, and when the program or the instructions are executed by a processor, the steps of the sidelink transmission method according to any one of claims 1 to 71 are implemented.

FIG. 1

FIG. 2

A terminal device determines, based on a first transmission power, N target physical sidelink feedback channels PSFCHs from a first set and/or a second transmission power of the target PSFCH, where N is greater than or equal to 0 — 301

The terminal device performs sidelink transmission based on the N target PSFCHs and/or the second transmission power of the target PSFCH — 302

FIG. 3

First determining module — 401

First transmission module — 402

FIG. 4

900

Communication device

901 — Processor ⟷ Memory — 902

FIG. 5

FIG. 6

## INTERNATIONAL SEARCH REPORT

| International application No. |
|---|
| **PCT/CN2024/076744** |

| A. | CLASSIFICATION OF SUBJECT MATTER |
|---|---|
| | H04W72/00(2023.01)i |

According to International Patent Classification (IPC) or to both national classification and IPC

| B. | FIELDS SEARCHED |
|---|---|

Minimum documentation searched (classification system followed by classification symbols)

IPC:H04W,H04Q,H04L

Documentation searched other than minimum documentation to the extent that such documents are included in the fields searched

Electronic data base consulted during the international search (name of data base and, where practicable, search terms used)

CNTXT, CNKI, VEN, USTXT, EPTXT, WOTXT, JPTXT, 3GPP: 旁链路, 侧链路, SL, sidelink, 功率, 最大, power, max, PSFCH, 物理侧链路反馈信道, 物理旁链路反馈信道, 资源池, 资源块, 载波, resource poor, PRB, carrier

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113853823 A (SAMSUNG ELECTRONICS CO., LTD.) 28 December 2021 (2021-12-28) description, paragraphs [0099]-[0287] and [0305]-[0309] | 1-5, 12, 20, 21, 37, 71-74 |
| A | CN 114026889 A (SAMSUNG ELECTRONICS CO., LTD.) 08 February 2022 (2022-02-08) entire document | 1-74 |
| A | WO 2020221206 A1 (DATANG MOBILE COMMUNICATIONS EQUIPMENT CO., LTD.) 05 November 2020 (2020-11-05) entire document | 1-74 |
| A | CN 114342305 A (IDAC HOLDINGS, INC.) 12 April 2022 (2022-04-12) entire document | 1-74 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 April 2024** | **18 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076744**

| Patent document cited in search report | | | Publication date (day/month/year) | Patent family member(s) | | | Publication date (day/month/year) |
|---|---|---|---|---|---|---|---|
| CN | 113853823 | A | 28 December 2021 | EP | 3934340 | A1 | 05 January 2022 |
| | | | | EP | 3934340 | A4 | 22 June 2022 |
| | | | | WO | 2021206429 | A1 | 14 October 2021 |
| | | | | US | 2022377720 | A1 | 24 November 2022 |
| | | | | KR | 20210123938 | A | 14 October 2021 |
| CN | 114026889 | A | 08 February 2022 | US | 2022353825 | A1 | 03 November 2022 |
| | | | | US | 11805486 | B2 | 31 October 2023 |
| | | | | WO | 2020263064 | A1 | 30 December 2020 |
| | | | | EP | 3915306 | A1 | 01 December 2021 |
| | | | | EP | 3915306 | A4 | 16 March 2022 |
| | | | | US | 2020413348 | A1 | 31 December 2020 |
| | | | | US | 11388678 | B2 | 12 July 2022 |
| | | | | KR | 20210001752 | A | 06 January 2021 |
| WO | 2020221206 | A1 | 05 November 2020 | TW | 202044859 | A | 01 December 2020 |
| | | | | TWI | 749538 | B | 11 December 2021 |
| CN | 114342305 | A | 12 April 2022 | US | 2022279537 | A1 | 01 September 2022 |
| | | | | WO | 2021021892 | A1 | 04 February 2021 |
| | | | | JP | 2022542381 | A | 03 October 2022 |
| | | | | BR | 112022001767 | A2 | 12 April 2022 |
| | | | | MX | 2022001216 | A | 25 April 2022 |
| | | | | TW | 202123758 | A | 16 June 2021 |
| | | | | TWI | 826711 | B | 21 December 2023 |
| | | | | EP | 4005321 | A1 | 01 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310119918